# EUROPÄISCHE PATENTSCHRIFT

(11) **EP 0 407 518 B1**
(45) Veröffentlichungstag und Bekanntmachung des Hinweises auf die Patenterteilung: **24.08.1994**
(21) Anmeldenummer: 90900850.0
(22) Anmeldetag: 06.12.1989
(51) Int. Cl.: B29C 53/60, B29C 67/14, B29C 63/10

(54) **VERFAHREN ZUM KONTINUIERLICHEN HERSTELLEN VON FASERVERSTÄRKTEN KUNSTSTOFFROHREN UND EINRICHTUNG ZUM DURCHFÜHREN DES VERFAHRENS**
PROCESS AND DEVICE FOR CONTINUOUS MANUFACTURE OF FIBRE-REINFORCED PLASTIC PIPES
PROCEDE ET DISPOSITIF DE PRODUCTION EN CONTINU DE TUYAUX EN PLASTIQUE RENFORCES PAR DES FIBRES

(30) Priorität: 09.12.1988 DE 3841597; 28.11.1989 DE 8913985 U
(43) Veröffentlichungstag der Anmeldung: 16.01.1991
(73) Patentinhaber: Elsner, Lothar, D-71364 Winnenden (DE)
(72) Erfinder: Elsner, Lothar, D-71364 Winnenden (DE)
(74) Vertreter: Kastner, Hermann, Dipl.-Ing. Patentanwalt
(86) Internationale Anmeldenummer: EP8901491
(87) Internationale Veröffentlichungsnummer: WO9006225

(56) Entgegenhaltungen:
- EP-A- 0 233 439
- DE-A- 2 065 706
- DE-A- 2 205 604
- DE-A- 2 457 937
- FR-A- 1 136 336
- FR-A- 1 573 287
- GB-A- 897 940
- US-A- 2 992 674

## Beschreibung

Für das Herstellen von faserverstärkten Kunststoffrohren gibt es in der Praxis verschiedene Verfahren. Bei einem dieser Verfahren wird auf einen rotierenden Dorn ein Trennmittel aufgetragen. Darauf wird eine Stützschicht aufgebracht, die häufig als harzreiche Schicht bezeichnet wird. Dazu wird manchmal ein bindemittelfreies, d.h. nicht harzgetränktes Gelege aus einem Wirrfaservlies aufgewickelt und anschließend mit einem Kunstharz getränkt. Häufiger wird ein mit Bindemitteln gebundenes Gelege aufgebracht, nämlich entweder ein harzgebundenes Vlies oder ein Mattenband aus Glasseiden-Kurzfasern, die mittels eines Bindemittels untereinander gebunden sind, oder eine aufgespritzte Schicht aus einem Gemenge aus Glasseiden-Kurzfasern und einem Bindeharz. Die aufgespritzte Stützschicht wird in der Regel mechanisch verdichtet und dabei entlüftet.

Das Trockenvlies wie auch das gebundene Vlies sowie das Mattenband können auch zuvor durch ein Tränkbad hindurchgeführt werden und dabei mit einem Tränkharz getränkt werden und dann erst auf das Trennmittel auf dem sich drehenden Wickeldorn aufgewickelt werden. Manchmal wird das Tränkharz auch unmittelbar auf die Trennschicht aufgebracht und danach erst das Vlies oder das Mattenband aufgewickelt und dabei zugleich in das Tränkharz eingebettet.

Auf eine darauf hergestellte Stützschicht werden noch eine oder mehrere Verstärkungsschichten aufgebracht. Eine solche Verstärkungsschicht besteht wiederum aus einem bandförmigen oder strangförmigen Gelege und einem Tränkharz. Beim Gelege kommen wieder unterschiedliche Ausführungsformen in Betracht, nämlich ein Glasseiden-Gewebeband oder ein sogenanntes Unidirektional-Gewebeband, bei dem eine Anzahl parallel nebeneinander liegender Fäden oder Fasern mittels Querfäden oder Haltefäden in gewissen größeren Abständen mechanisch in Bandform gehalten werden, oder ein Faserstrang, ein sogenannter Roving, bei dem die Fasern bandförmig nebeneinander liegen. Das Aufbringen des Tränkharzes für die Verstärkungsschicht geschieht entweder dadurch, daß das Gewebeband oder der Faserstrang durch das Tränkharz hindurchgeführt werden und dabei getränkt werden, oder dadurch, daß das Tränkharz wenigstens zum Teil vorher auf die Stützschicht aufgebracht wird und darin das Gewebeband oder der Faserstrang anschließend eingebettet wird. Bei der Bildung der Verstärkungsschicht kann das Gewebeband oder der Faserstrang einlagig oder mehrlagig aufgebracht werden. Bei mehrlagigem Aufbringen werden das Gewebeband oder der Faserstrang am Rohrstück durch ein- oder mehrmals wiederkehrende Längsbewegungen eines Supports aufgebracht, wobei manchmal an den Enden des Rohres je ein Stiftenkranz angeordnet ist, um dessen Stifte das Band oder der Faserstrang herumgeschlungen wird. Dadurch entsteht eine Art Diagonalgelege.

Manchmal wird auf diese Verstärkungsschicht noch eine Deckschicht aufgebracht, die ein Vlies enthalten kann und die in jedem Falle aus einer Harzschicht besteht, die der Bildung einer glatteren Außenseite des faserverstärkten Kunststoffrohres dient.

Die Tränkharze werden durch chemische Reaktionen gehärtet, die meist durch Wärmeeinwirkung ausgelöst werden und dadurch der rohrförmige Schichtaufbau zum Rohr verfestigt. Erst nach dieser Verfestigung kann das Rohr vom Dorn abgezogen werden. Danach werden meist an beiden Enden die Endabschnitte abgetrennt, in denen das Gewebe oder der Faserstrang entweder ungleichmäßig endet oder, bei mehrlagiger Verstärkungsschicht, das Gewebeband oder der Faserstrang Umkehrstellen aufweist. Diese abgetrennten Endabschnitte stellen einen unverwertbaren Abfall dar.

Eine der Nachteile dieses Verfahrens ist der, daß es diskontinuierlich arbeitet. Wegen der diskontinuierlichen Arbeitsweise ist die Fertigung sehr zeitaufwendig. Bei mehrlagiger Verstärkungsschicht kommt hinzu, daß der Support an den Umkehrstellen angehalten und in der umgekehrten Bewegungsrichtung wieder beschleunigt werden muß. Das bedeutet einen zusätzlichen Zeitaufwand. Von noch größerem Nachteil ist dabei, daß die Aufwickelgeschwindigkeit und damit auch die Zuführgeschwindigkeit für das Fasergewebe oder den Faserstrang Schwankungen unterliegt, die sich nachteilig auf das Gelege selbst und vor allem auf die Harztränkung auswirken.

Das auf dem Wickeldorn entstandene Rohrstück sitzt sehr fest auf dem Wickeldorn. Davon muß es unter Aufwendung sehr hoher Kräfte mühsam abgezogen werden.

Wenn bei einem solchen Rohr insbesondere die Stützschicht nicht ausreichend gut entlüftet wird und dadurch Poren in der Stütztschicht zurückbleiben, neigt ein solches Rohr zum "Schwitzen". Ein im Inneren des Rohres unter Druck stehendes Medium tritt in mehr oder minder großer Menge durch die Rohrwand hindurch nach außen aus, wo es wie Schweißtropfen in Erscheinung tritt.

Derartig gewickelte Rohre haben vor allem in Umfangsrichtung eine mehr oder minder wellige, d.h. ungleichmäßige Außenseite. Ein solches Rohr ist außen nicht kalibriert. Es weist mehr oder minder große Toleranzen in der Wanddicke auf und dementsprechend auch größere Toleranzen im Außendurchmesser.

Bei einem solchen Rohr ist das Gelege oder die Einlage aus dem Gewebeband oder dem Faserstrang unter einem größeren Steigungswinkel gegenüber einer Normalebene zur Längsachse des Rohres ausgerichtet. Dadurch geht die Festigkeit der Einlage als solcher nicht in vollem Ausmaße in die Festigkeit der Rohrwand ein. Daher müssen solche Rohre verhältnismäßig dickwandig ausgeführt werden, um überhaupt eine gewisse Druckfestigkeit zu erreichen. Die verhältnismäßig große Wanddicke hat ein entsprechend großes Metergewicht des Rohres zur Folge.

Die "Überkreuzlage" der Einlage hat außerdem zur Folge, daß bei Temperaturänderungen die dem Harz innewohnende verhältnismäßig große Wärmedehnung von der Einlage nur unzureichend aufgefangen werden kann. Solche Rohre haben demnach selbst eine verhältnismäßig große Wärmedehnung, die vor allem in Längsrichtung sehr störend ist. Daher eignen sich solche Rohre in der Regel nicht für Leitungen, in denen im Medium häufig Temperaturschwankungen oder gar sprunghafte Temperaturwechsel auftreten.

Bei dem zuvor beschriebenen Verfahren werden die Gewebebänder oder Faserstränge beim mehrlagigen Aufbringen im allgemeinen mit jeweils gleichen Steigungswinkeln in beiden Wickelrichtungen aufgebracht. Daneben gibt es auch noch ein Wickelverfahren, bei dem unterschiedliche Wickelwinkel angewendet werden (Dual angle winding). Auf einen stehenden Dorn wird eine Trennfolie aufgebracht, und zwar in Wendelform mit sehr großem Steigungswinkel. Die Ränder der Folienwendel überlappen einander. Auf die Trennfolie wird ein harzgetränktes Vlies in Bandform wendelartig mit großem Steigungswinkel aufgewickelt. Dieses Vlies wird mit einer gewissen Spannung auf die Trennfolie aufgebracht. Dieses harzgetränkte Vlies bildet die Stützschicht für das Kunststoffrohr. Auf die Stützschicht wird ein harzgetränktes Gewebeband von einer bestimmten Breite aufgewickelt, die kleiner ist als der Außenumfang der Stützschicht. Das Gewebeband wird dabei auf die Stützschicht mit einem sehr großen Steigungswinkel aufgewickelt, so daß aufgrund der in grober Näherung axialen Ausrichtung der Kettfäden des Gewebes eine 'quasi axiale' Verstärkungsschicht entsteht. Diese erste Verstärkungsschicht wird durch Rollen verdichtet.

Auf die erste Verstärkungsschicht wird ein harzgetränktes Gewebeband von einer Breite aufgewickelt, die erheblich geringer als die Breite des ersten Gewebebandes ist. Sie wird mit einer deutlich geringeren Steigung als bei der ersten Verstärkungsschicht aufgewickelt, wobei die Bandwendel an ihren Rändern stumpf einanander anstoßen. Die Steigung der Kettfäden des Gewebebandes der zweiten Verstärkungsschicht liegt im allgemeinen zwischen 45° und 30°, so daß man diese Verstärkungsschicht als 'quasi tangential' bezeichnen kann. Die Steigung der Kettfäden des Gewebebandes der zweiten Verstärkungsschicht ist gegensinnig zur Steigung der Kettfäden der ersten Verstärkungsschicht ausgerichtet. Die zweite Verstärkungsschicht wird ebenfalls durch Rollen verdichtet. Darauf wird ein drittes harzgetränktes Gewebeband aufgewickelt, und zwar ebenfalls wieder mit einer geringeren Steigung mit einem Steigungswinkel zwischen 45° und 30°, so daß eine zweite 'quasi tangentiale' Verstärkungsschicht entsteht. Deren Steigung ist gegensinnig zu derjenigen der zweiten Verstärkungsschicht. Auch diese dritte Verstärkungsschicht wird mittels Rollen verdichtet.

Die Trennfolie, das Vlies für die Stützschicht und die harzgetränkten Gewebebänder für alle drei Verstärkungsschichten werden von Rotoren aufgebracht, die um die Rohrachse umlaufen. Auf den Rotoren sind die betreffenden Bänder auf Vorratsrollen aufgewickelt. Dadurch arbeitet dieses Wickelverfahren kontinuierlich.

Den nach diesem Verfahren hergestellten faserverstärkten Kunststoffrohren haften eine Reihe von Nachteilen an.

Die Bandwendel der drei Verstärkungsschichten liegen lose nebeneinander und stoßen lediglich mit den Rändern aneinander an. Sie überlappen einander nicht, weil sie dafür eine zu große Dicke haben. Bei einer Überlappung würden wendelartig verlaufende Wülste enstehen. Weil die Bandwendel nur nebeneinander liegen, ist die Festigkeit einer jeden Verstärkungsschicht quer zu ihrer Steigung sehr gering, weil sie allenfalls über ihr Tränkharz miteinander verbunden sind.

Die bei diesem Wickelverfahren verwendeten Gewebebänder haben aufgrund der Gewebebildung eine Gesamtdicke, die näherungsweise gleich der Summe der Dicke ihrer Kettfäden und ihrer Schußfäden ist. Dieser Umstand hat zur Folge, daß die Gewebebänder innerhalb der sie einhüllenden fiktiven Ebenen verhältnismäßig große Hohlräume aufweisen, die von dem Tränkharz ausgefüllt werden. Die so hergestellten Rohre haben deshalb einen verhältnismäßig großen Harzanteil. Sie sind deshalb auch verhältnismäßig dickwandig und schwer.

Die bei diesem Verfahren verwendeten Gewebebänder sind verhältnismäßig teuer in der Herstellung. Sie haben auch nur eine begrenzte Länge. Die Gewebebänder müssen daher bei der kontinuierlichen Rohrherstellung des öfteren gewechselt werden, indem der Anfang des neuen Gewebebandes am Ende des vorhergehenden Gewebebandes so eng wie möglich angesetzt wird. Das ist stets mit Schwierigkeiten verbunden.

Auch bei diesem Verfahren kann die den harzgetränkten Gewebebändern an sich innewohnende Festigkeit bei dem Rohr nur zum Teil ausgenutzt werden, weil die Kettfäden der ersten Verstärkungsschicht nur quasi axial ausgerichtet sind und in Wirklichkeit noch einen merklichen Steigungswinkel aufweisen, und weil die Kettfäden der zweiten und der dritten Verstärkungsschicht ihrerseits nur quasi tangential ausgerichtet sind und ihre Steigung von der Nullsteigung der rein tagentialen Ausrichtung noch verhältnismäßig weit entfernt ist.

Aufgrund der lediglich quasi axialen Ausrichtung der Kettfäden der ersten Verstärkungsschicht und der lediglich quasi tangentialen Ausrichtung der Kettfäden der zweiten und dritten Verstärkungsschicht mit jeweils größeren Abweichungen ihres Verlaufs gegenüber der Idealrichtung haben diese Rohre einen verhältnismäßig großen Wärmedehnungskoeffizienten, auch wenn dieser geringer als beim reinen Harz ist.

Die Außenseite dieser Rohre ist nicht glatt. Ihre Wanddicke und auch ihr Außendurchmesser haben verhältnismäßig große Toleranzen. Aus beiden Gründen können diese Rohre nicht mittels rein metallischer Fitting-Systeme untereinander verbunden werden oder an Armaturen angeschlossen werden. Fitting-Systeme mit Rundschnurringen als elastischem Dichtungselement können wegen der Unebenheiten der Außenseite dieser Rohre ebenfalls nicht verwendet werden. Sie ergeben keine ausreichende Dichtigkeit. Diese Rohre können daher nur mittels Klebemuffen miteinander verbunden werden, wobei wiederum wegen der unebenen Außenseite und wegen der großen Durchmessertoleranzen das Einsteckende zu einem sogenannten Spitzende kegelig angeschärft und dabei zugleich geglättet werden muß. Dieses Erfordernis ist insbesondere auf Baustellen von großem Nachteil.

Der Erfindung liegt die Aufgabe zugrunde, ein Verfahren anzugeben, mit dem faserverstärkte Kunststoffrohre kontinuierlich hergestellt werden können, die bessere Festigkeitseigenschaften haben, als die nach den herkömmlichen Verfahren gefertigten Rohre, die bei gleicher Druckfestigkeit eine geringere Wanddicke und dementsprechend ein geringeres Metergewicht haben und die eine glattere und gleichmäßigere Außenseite haben. Der Erfindung liegt außerdem die Aufgabe zugrunde, eine Einrichtung anzugeben, mittels der dieses Verfahren durchgeführt werden kann.

Damit, daß gemäß dem Verfahren nach Anspruch 1 auf dem Trennschlauch zuerst eine Innenhaut aufgebaut wird und diese zum Gelieren gebracht wird, so daß sie eine gewisse Druckfestigkeit hat, und daß darauf erst die Stützschicht mit der Vlieseinlage aufgebracht wird, erhält das spätere Kunststoffrohr eine innerste Schicht, die frei von Gewebe- oder Fasereinlagen ist, bei der also keine Poren zu befürchten sind. Die Durchlässigkeit des Rohres für ein später durch es hindurchzuleitendes Medium wird damit in denkbar größtem Maße verringert, wenn nicht gar beseitigt. Dadurch, daß die Kunstharzschicht für die Innenhaut vor dem Aufbringen der Stützschicht zum Gelieren gebracht wurde, wird verhindert, daß bei den folgenden Verfahrensschritten durch das Aufbringen der Verstärkungsschichten die Stützschicht, insbesondere ihre Vlieseinlage, in die Innenhaut hineingedrückt wird und deren Undurchlässigkeit vermindert. Das wird durch die Verwendung eines Wirrfaservlieses für die Stützschicht noch unterstützt. Damit, daß die Fasern für die erste Verstärkungsschicht zunächst in Form mehrerer Faserstränge der Leitvorrichtung zugeleitet werden und von dieser aus in Form eines geschlossenen kegelstumpfförmigen Fasermantels der den Dorn umgebenden Ringrakel zugeleitet werden und von dieser in die zuvor aufgegossene Kunstharzschicht eingebettet werden, erhält man einen genau axial ausgerichteten Faserverlauf in der ersten Verstärkungsschicht. Dadurch, daß diese Fasern von außen her in die zuvor aufgebracht Kunstharzschicht eingebettet werden und nicht etwa ein kunstharzgetränktes Gewebeband aufgewickelt wird, ist die Gefahr von Lufteinschlüssen und einer entsprechenden Porigkeit der Verstärkungsschicht praktisch gleich Null. Damit, daß für die zweite Verstärkungsschicht von dem Spulenträger ein schmaler Faserstrang auf den Dorn aufgewickelt wird und nicht etwa ein wesentlich breiteres Gewebeband, kommt die Ausrichtung der Fasern der zweiten Verstärkungsschicht dem Idealfall der rein tangentialen Ausrichtung sehr nahe. Das wird dadurch noch unterstützt, daß man zur Vermeidung von Unwuchten am Spulenträger in der Praxis mit wenigstens zwei Spulen arbeiten wird und dafür die Anzahl der Fasern eines jeden der beiden Faserstränge auf die Hälfte vermindern kann. Außerdem können diese Faserstränge so aufgewickelt werden, daß sie einander wenigstens zum Teil überdecken und somit eine weitere Annäherung an den Idealfall eintritt. Dadurch, daß die Fasern der zweiten Verstärkungsschicht von außen her in die zuvor aufgebrachte Kunstharzschicht eingebettet werden, ist wiederum das Einbetten von Luftbläschen praktisch ausgeschlossen. Außerdem sorgt die allein schon an den Führungselelmenten für den Faserstrang auftretende Reibung dafür, daß der Faserstrang mit einer gewissen Grundspannung aufgewickelt wodurch er die axial ausgerichteten Fasern der darunterliegenden axialen Verstärkungsschicht zum Dorn hin verdichtet. Dadurch wird überschüssiges Kunstharz der ersten Verstärkungsschicht nach außen verdrängt, so daß der Harzanteil der axialen Verstärkungsschicht, aber auch der tangentialen Verstärkungsschicht, auf ein Kleinstmaß verringert wird. Dadurch verringert sich die Wanddicke dieser beiden Verstärkungsschichten und dementsprechend auch der auf sie entfallende Anteil am Metergewicht des fertigen Kunststoffrohres. Durch dieses Verdichten der beiden Verstärkungsschichten und durch das Herausquetschen des überschüssigen Kunstharzes werden auch die letzten Luftbläschen aus dem Bereich der Verstärkungsschichten verdrängt, die, wenn überhaupt, beim Einbetten der Fasern in die Kunstharzschicht je mit eingebettet worden sein sollten. Damit, daß auf die tangentiale Verstärkungsschicht wieder eine axiale Verstärkungsschicht folgt, deren axial verlaufende Fasern durch die Ringrakel in die zuvor aufgebrachte Kunstharzschicht oder auch in den durch das Verdichten der darunterliegenden Verstärkungsschichten noch vorhandene Überschuß an Kunstharz eingebettet werden und dabei auch verdichtet werden, wird auch die darunterliegende tangentiale Verstärkungsschicht vor allem im Bereich ihrer außenliegenden Fasern zusätzlich verdichtet. Das gilt wiederum ebenso auch für die zweite axiale Verstärkungsschicht, wenn anschließend darauf wiederum eine tangentiale Verstärkungsschicht aufgebracht wird. Dadurch, daß durch die entgegengesetzte Umlaufrichtung des betreffenden Spulenträgers die Fasern im umgekehrten Windungssinne wie bei der ersten tangentialen Verstärkungsschicht aufgewickelt werden, wird die unvermeidliche, aber sehr geringe Abweichung der Ausrichtung der Fasern von der rein tangentialen Ausrichtung ausgeglichen, zumal die beiden tangentialen Verstärkungsschichten aufgrund der aufeinanderfolgenden Verdichtungsvorgänge sehr dicht übereinander liegen. Damit, daß bei Bedarf in der gleichen Weise noch eine weitere axiale Verstärkungsschicht und eine weitere tangentiale Verstärkungsschicht aufgebracht werden kann und das sogar noch fortgesetzt werden kann, kann das spätere Kunststoffrohr in denkbar weitem Ausmaße für auf die Bewältigung höherer und höchster Anforderungen hinsichtlich seines mechanischen Verhaltens aufgebaut werden. Damit, daß auf die äußerste Verstärkungsschicht, die zweckmäßigerweise eine tangentiale Verstärkungsschicht ist, eine Außenhaut aufgebracht wird, kann das spätere Rohr auch mit solchen metallenen Fitting-Systemen verbunden oder angeschlossen werden, die zur Verbesserung der Dichtheit der Verbindungsstelle mit Ringkanten, Ringschneiden, Ringwülsten und dergleichen auf die Außenseite des Kunststoffrohres einwirken, ohne daß dabei die Gefahr gegeben ist, daß durch diese Fittingteile die Fasern der äußeren Verstärkungsschichten beschädigt oder zerstört werden. Außerdem wird mit dieser Außenhaut eine noch glattere Oberfläche des Kunststoffrohres erreicht als sie alleine schon durch die gewebeknotenfreie allein von parallelliegenden Fasern gebildete äußerste Verstärkungsschicht erreicht wird. Damit, daß auf die Außenhaut eine bandförmige Trennfolie aufgebracht und zu einem die Außenhaut umhüllenden Trennschlauch geformt wird, ist es möglich, das Kunststoffrohr durch eine Kalibriervorrichtung hindurchzuführen, wodurch zusätzlich zu der Kalibrierwirkung der Ringrakel für die Außenhaut eine nochmalige Kalibrierung möglich ist, ehe der Schichtaufbau des Kunststoffrohres in der Härtevorrichtung gehärtet wird und daraus dann das fertige Kunststoffrohr entsteht. Dadurch, daß der Dorn innerhalb der Härtevorrichtung endet und das Kunststoffrohr von dort an ohne ihn frei weiterbewegt wird, wird vermieden, daß die Reibungskraft zwischen dem erhärtenden und dabei erstarrenden Kunststoffrohr zu groß wird und es dann nur noch mit Mühe auf dem Dorn weitergezogen werden könnte. Damit, daß das kontinuierlich gefertigte Kunststoffrohr von der Trennvorrichtung in einzelne Längenabschnitte von einem bestimmten Längenmaß aufgeteilt wird, läßt sich das Kunststoffrohr sowohl beim Transport wie auch beim Herstellen einer Leitung leichter handhaben.

Bei einer Ausgestaltung des Verfahrens nach Anspruch 2 läßt sich bei der Herstellung der Stützschicht das dafür verwendete bandförmige Vlies auch mit unterschiedlicher Breite verarbeiten, indem einfach die Drehzahl des Spulenträgers und die Zuggeschwindigkeit des Kunststoffrohres unter Berücksichtigung der Bandbreite aufeinander abgestimmt werden. Bei der Ausgestaltung des Verfahrens nach Anspruch 3 wird das bandförmige Vlies dem Dorn in axialer Ausrichtung ohne Auftreten einer Umschlingungskraft zugeführt, so daß die Gefahr des Eindringens des Vlieses in die darunterliegende gelierte Innenhaut weiter vermindert ist. Damit lassen sich Schwankungen bei der Geliergeschwindigkeit des Kunstharzes für die Innenhaut besser auffangen. Eine Ausgestaltung des Verfahrens nach Anspruch 4 ermöglicht es, das Kunstharz für die Stützschicht im Rückenbereich des Dorns dann erst und erst an der Stelle aufzugießen, an der die beiden Vliesbänder von der Seite her dem Dorn wenigstens schon angenähert sind. Dabei kann die Leit-und Formvorrichtung für die beiden Vliesbänder auch dazu benutzt werden, die Ausbildung der Kunstharzschicht aus dem aufgegossenen Kunstharz zu unterstützen und dabei auch für eine gleichmäßige Verteilung des Kunstharzes zu sorgen.

Mit einer Variation des Verfahrens nach Anspruch 5 kann die Anzahl der Zufürvorrichtungen für das Kunstharz von drei zumindest bis auf zwei und sogar bis auf eine verringert werden und somit das Verfahren vereinfacht und verkürzt werden.

Mit einem Verfahren nach Anspruch 6 kann auch auf der Grundlage eines Kunststoff-Innenrohres ein faserverstärktes Kunststoffrohr mit den oben geschilderten Eigenschaften hergestellt werden. Damit lassen sich faserverstärkte Kunststoffrohre herstellen, deren Innenwand physikalische und/oder chemische Eigenschaften aufweisen, die möglicherweise bei einem Kunststoffrohr mit einer Innenhaut aus einem gelierbaren flüssigen Kunstharz nicht erreicht werden können. Das gleiche gilt für die Herstellung von Kunststoffrohren gemäß Anspruch 7 auf der Grundlage eines Kunststoff-Innenrohres, das bereits mit einer Haftschicht versehen ist, die schon im Zuge der Herstellung dieses Kunststoff-Innenrohres oder im Anschluß daran aufgebracht wurde.

Mit einer Ausgestaltung der drei Verfahren zum Herstellen von faserverstärkten Kunststoffrohren gemäß Anspruch 8 läßt sich auch bei der Herstellung der Verstärkungsschichten ab der dritten Verstärkungsschicht ein Teil der Zuführvorrichtungen für das Kunstharz einsparen und auch dort das Verfahren vereinfachen und beschleunigen.

Mit einer Einrichtung nach Anspruch 9 läßt sich das Verfahren nach Anspruch 1 besonders günstig und mit besonders gutem Ergebnis durchführen.

Mit einer Ausgestaltung der Einrichtung nach Anspruch 12 wird erreicht, daß die Ringrakel zum Bilden der Innenhaut immer genau auf den Dorn zentriert ist und daß sie allen Querbewegungen des Dorns folgt, die dieser infolge seiner Elastizität unter der Wirkung von Seitenkräften macht, die beim Aufwickeln der Faserstränge für die tangentialen Verstärkungsschichten möglicherweise auf ihn ausgeübt werden. Dadurch wird eine sehr hohe Gleichmäßigkeit der Wanddicke der Innenhaut und damit zugleich eine sehr genaue Zentrierung der Außenseite der Innenhaut in Bezug auf die Außenseite des Dorns erreicht, die auch eine sehr hohe Gleichmäßigkeit der Wanddicke der nachfolgenden Schichten des Kunststoffrohres nach sich zieht.

Mit einer Einrichtung nach Anspruch 13 läßt sich das Verfahren nach Anspruch 6 mit einem Kunststoff-Innenrohr sehr günstig durchführen. Dabei ersetzt das Kunststoff-Innenrohr die aus einem Kunstharz gebildete Innenhaut des Kunststoffrohres, wie es mit einer Einrichtung nach Anspruch 9 hergestellt wird. Bei der Einrichtung nach Anspruch 13 wird anstelle der wegen des Kunststoff-Innenrohres nicht benötigten Stützschicht eine Haft-und Pufferschicht auf das Kunststoff-Innenrohr aufgebracht, da dieses aus einem thermoplastischen Kunststoff hergestellt ist. Darauf würden die nachfolgenden Verstärkungsschichten häufig nicht oder nicht ausreichend gut haften. Das wird aber mit der Klebeharzschicht erreicht, die ganz auf die Eigenschaften des Kunststoff-Innenrohres abgestimmt werden kann, so daß eine gute Bindung zwischen dem Kunststoff-Innenrohr und dem zur Haft- und Pufferschicht gehörenden Vlies erzielt wird, mit dem wiederum die nachfolgenden Verstärkungsschichten eine gute Bindung eingehen.

Die Einrichtung nach Anspruch 13 eignet sich auch sehr gut zum Durchführen des Verfahrens nach Anspruch 7, indem die Zuführvorrichtung für das Klebeharz und die Abspulvorrichtung für das Vlies der Haft- und Pufferschicht außer Betrieb bleiben und erforderlichenfalls beiseite geschoben werden.

Die nachfolgenden Angaben gelten sowohl für die Einrichtung nach Anspruch 9 wie auch für die Einrichtung nach Anspruch 13 in beiden Variationen.

Bei einer Ausgestaltung der Einrichtung nach Anspruch 14 wird erreicht, daß das Kunstharz in einer Zuführvorrichtung ständig umgewälzt wird, soweit es nicht in einer oder mehreren der Schichten des Kunststoffrohres als Tränkharz verbleibt. Durch das ständige Umwälzen des Kunstharzes wird vermieden, daß es sich, beispielsweise im Vorratsbehälter, zum Teil absetzt und daß in dieser Teilmenge des Kunstharzes möglicherweise chemische Reaktionen stattfinden, die zum Anhärten oder gar zum Aushärten dieser Kunstharzteilmenge führen könnten die auch auf die übrige Kunstharzmenge übergreifen könnten. Außerdem wird durch das ständige Umwälzen des Kunstharzes das Vermischen der entweder stetig oder portionsweise zugegebenen Ergänzungsmenge des Kunstharzes mit der umgewälzten Grundmenge erleichtert und so die Gleichmäßigkeit der Konzistenz des Kunstharzes erhöht.

Bei einer Ausgestaltung der Einrichtung nach Anspruch 15 wird das Vlies zum Bilden der Stützschicht in zwei Teilbahnen jeweils von der Seite her an den Dorn (bzw. an das Kunststoff-Innenrohr) herangeführt und mittels der Leit-und Formvorrichtung in axialer Richtung verlaufend zu jeweils einem halben Kreiszylinder verformt. Dadurch werden umlaufende Seitenkräfte vermieden, die beim Aufwickeln des Vlieses mittels eines Spulenträgers auftreten würden. Mit einer Weiterbildung der Einrichtung nach Anspruch 17 wird das Vorhandensein zweiter seitlich herangeführter Teilbahnen des Vlieses dazu ausgenutzt, das Kunstharz für die Stützschicht erst verhältnismäßig spät auf die Innenhaut und zwischen diese und das Kunststoffvlies aufzugießen bzw. einzugießen.

Eine Ausgestaltung der Einrichtung nach Anspruch 18 ermöglicht es, die Faserstränge für eine axiale Verstärkungsschicht sehr gleichmäßig um den Dorn herum zunächst zu einem kegelstumpfförmigen Mantel aus Fasersträngen und ab dem Leitring zu einem ebenso gleichmäßigen kegelstumpfförmigen Fasermantel zu formen, was zu einem sehr gleichmäßigen Aufbau der axialen Verstärkungsschicht führt.

Mit einer Ausgestaltung der Einrichtung nach Anspruch 19 wird der Abstand zwischen der Aufgabestelle des Kunstharzes und derjenigen Stelle verringert, an der die Fasern des Fasermantels in die aus dem Kunstharz gebildete Kunstharzschicht eingebettet werden. Dadurch wird vermieden, daß selbst bei Kunstharzen mit geringerer Viskosität das Kunstharz vorzeitig von der darunterligenden Schicht des Kunststoffrohres nach unten abläuft und im Rückenbereich des Kunststoffrohres möglicherweise ein Kunstharzmangel auftritt.

Mit einer Ausgestaltung der Einrichtung nach Anspruch 20 und ebenso auch mit einer Ausgestaltung der Einrichtung nach Anspruch 21 wird jeweils ein sehr kompakter Aufbau des betreffenden Abschnittes der Einrichtung erreicht, weil für das Bilden der Stützschicht und der nachfolgenden beiden Verstärkungsschichten bzw. für die jeweils gruppenweise gebildete axiale Verstärkungsschicht und tangentiale Verstärkungsschicht jeweils nur noch eine Zuführvorrichtung für das Kunstharz erforderlich ist, wobei sich auch die Menge der Auffangwannen und der verschiedener, Verbindungsleitungen entsprechend verringert oder diese Teile entsprechend kleiner ausgeführt werden können. Außerdem verkürzt sich dadurch die Herstellungszeit für das Kunststoffrohr.

Bei einer Ausgestaltung der Einrichtung nach Anspruch 22 können infolge der Erhöhung der Anzahl der Spulen am Spulenträger und damit infolge der Erhöhung der Anzahl der Faserstränge für eine tangentiale Verstärkungsschicht die Anzahl der Fasern je Faserstrang im umgekehrten Verhältnis zur Anzahl der Faserstränge vermindert werden, wodurch wiederum der Steigungswinkel beim Aufwickeln der Faserstränge verringert werden kann und noch mehr dem Idealfall der rein tangentialen Aufwicklung angenähert werden kann. Mit der Bremsvorrichtung an jeder Spule wird erreicht, daß die Faserstränge für die tangentiale Verstärkungsschicht mit einer größeren Vorspannung aufgewickelt werden, als das alleine mit der durch die ohnehin vorhandene Reibung der Faserstränge an den Leitvorrichtungen auftretende Grundspannung möglich ist. Durch die erhöhte Vorspannung der tangentialen Faserstränge werden die axialen Fasern der darunterliegenden Verstärkungsschicht in erheblichem Maße zusätzlich verdichtet, wobei außerdem auch die tangentialen Faserstränge in sich stärker verdichtet werden. In beiden Verstärkungsschichten wird dabei durch die Verringerung der Zwischenräume zwischen den Fasern das dadurch überschüssige Kunstharz aus der Verstärkungsschicht herausgequetscht und so der Harzanteil der Verstärkungsschichten verringert. Außerdem wird dadurch eine zusätzliche Entlüftung der beiden Verstärkungsschichten bewirkt, soweit das überhaupt erforderlich ist.

Bei einer Ausgestaltung der Einrichtung nach Anspruch 23 wird einerseits über die gemeinsame Antriebswelle eine Koppelung der Umlaufbewegung der Spulenträger untereinander erreicht und andererseits durch die stufenlos einstellbaren Getriebe eine Anpassung der Umlaufgeschwindigkeit eines jeden der Spulenträger an den an seinem Einsatzort vorhandenen Wickeldurchmesser ermöglicht.

Durch eine Ausgestaltung der Einrichtung nach Anspruch 24 erhalten die Faserstränge für die axialen Verstärkungsschichten eine zusätzliche Vorspannung, die über die durch die Reibung der Faserstränge an den Leitvorrichtungen ohnehin entstehende Grundspannung hinausgeht. Dadurch wird vermieden, daß die in ihrer Kunstharzschicht schon eingebetteten axialen Fasern beim Aufwickeln der tangentialen Faserstränge und insbesondere bei der durch diese tangentialen Faserstränge bewirkten Verdichtung der axialen Fasern in Umfangsrichtung verschoben werden.

Durch eine Ausgestaltung der Einrichtung nach Anspruch 25 wird vermieden, daß ein beim Härten des Kunststoffrohres aus dem Längsspalt des äußeren Trennschlauches möglicherweise austretende geringe Kunstharzmenge zwischen den Trennschlauch und die Wand des Führungsrohres hineingedrückt wird und dadurch den äußeren Trennschlauch mit dem Führungsrohr verklebt oder zumindest die Reibung zwischen dem Trennschlauch und dem Führungsrohr in stärkerem Maße erhöht.

Bei einer Ausgestaltung der Einrichtung nach Anspruch 26 wird ohne besondere Maßnahmen ein gleichmäßiges Aushärten des Kunststoffrohres ermöglicht. Das gleiche wird auf einer etwas längeren Strecke auch bei einer Ausgestaltung der Einrichtung nach Anspruch 27, bei der anstelle des merklich teuereren Infrarotlicht-durchlässigen Glasrohres ein gelochtes Metallrohr verwendet wird.

Bei einer Ausgestaltung der Einrichtung nach Anspruch 29 wird mit den Kettenförderern, die mit Mitnehmerstollen aus einem Elastomer bestückt sind, eine sowohl wirkungsvolle, wie auch schonende Zugbewegung auf das Kunststoffrohr ausgeübt, die eine zuverlässige Bewegung des Kunststoffrohres durch alle Arbeitsstationen hindurch gewährleistet.

Bei einer Ausgestaltung der Einrichtung nach Anspruch 30 wird die Trennvorrichtung während eines Trennvorganges vom Kunststoffrohr selbst mitgenommen, wobei zugleich die Rohrabschnitte zu beiden Seiten der Trennstelle auch bei fortschreitendem Trennschnitt in gleichbleibendem Abstand zueinander gehalten werden, so daß weder ein Stauchen, noch ein Auseinanderziehen der Rohre an der Trennstelle eintreten kann. Durch eine Ausgestaltung der Einrichtung nach Anspruch 31 wird auf einfache Weise eine automatische Rückführung der Trennvorrichtung nach dem Lösen der Klemmvorrichtungen erreicht, weil der pneumatische Kolbenantrieb so eingestellt werden kann, daß er bei stetiger Beaufschlagung durch das pneumatische Druckmedium bei gelösten Klemmvorrichtungen die Bremsvorrichtung in ihre Ausgangsstellung zurückzuschieben vermag und er bei geschlossenen Klemmvorrichtungen umgekehrt ausreichend nachgiebig ist, um das Mitwandern der Trennvorrichtung mit dem Kunststoffrohr zu ermöglichen.

Durch eine Ausgestaltung der Einrichtung nach Anspruch 32 wird der Außendurchmesser des Dorns abschnittweise an die Schrumpfung des Kunststoffrohres, genauer gesagt, des Rohlings des Kunststoffrohres angepaßt, die im Bereich der Aufwickelstellen der Faserstränge für die tangentialen Verstärkungsschichten und im Bereich der Härtevorrichtung auftritt. Dadurch wird die Reibung des Kunststoffrohres auf dem Dorn erheblich verringert. Das verringert dann auch die erforderliche Zugkraft, um das Kunststoffrohr durch die gesamte Einrichtung hindurchzuziehen. Außerdem wird dadurch die Haltekraft für den Dorn und seine Zugbelastung verringert. Durch die Verringerung der Reibung zwischen dem Kunststoffrohr und dem Dorn wird außerdem der Gefahr von intermitierenden Schlupfbewegungen (dem sogenannten stickslip) des Kunststoffrohres auf dem Dorn vorgebeugt.

Bei einer Ausgestaltung der Einrichtung nach Anspruch 33 wird die Fertigung des Dorns vereinfacht und erleichtert. Außerdem wird im Bedarfsfalle der Austausch einzelner Längenabschnitte erleichtert, die etwa schneller als die anderen Längenabschnitte verschleißen oder die aus sonstigen Gründen ausgetauscht werden müssen. Durch die Aufteilung des Dorns in Einzelstücke lassen sich auch die Durchmesserstufen leichter herstellen, weil die Einzelstücke dann im allgemeinen über ihre ganze Länge denselben Durchmesser haben können.

Bei einer Ausgestaltung der Einrichtung nach Anspruch 34 wird durch die Zuführung eines Druckgases in den Innenraum des Dorns und durch dessen anschließendes Austreten durch die über die Längserstreckung des Dorns verteilten Durchgangslöcher je eine pneumatische Schmiermittelschicht aufgebaut. Durch sie wird ebenfalls die Reibung des Kunststoffrohres auf dem Dorn verringert.

Bei einer Ausgestaltung der Einrichtung nach Anspruch 35 kann der Überdruck des Druckgases in diesem Längenabschnitt des Dorns unabhängig von dem Überdruck in den vorangehenden Längenabschnitten eingestellt werden. Damit kann der Überdruck in diesem Längenabschnitt besser auf die dort auftretenden Erfordernisse eingestellt werden, die sich vor allem dadurch ergeben, daß im Bereich der Härtevorrichtung die Schrumpfung des Kunststoffrohres am größten ist und je nach den verwendeten Kunstharzen und je nach dem Verlauf des Härtevorganges unterschiedlich sein kann.

Bei einer Ausgestaltung der Einrichtung nach Anspruch 36 kann die Überschußmenge des Kunstharzes leichter abgeführt werden und so eine einwandfreie Ausbildung der Außenhaut des Kunststoffrohres sicherer erreicht werden. Außerdem läßt sich dadurch der Außendurchmesser des Kunststoffrohres genauer einstellen oder, mit anderen Worten, eine geringere Durchmessertoleranz des Kunststoffrohres erreichen. Durch den Restpalt sowohl bei der Leit- und Formvorrichtung wie auch bei der anschließenden Ringrakel wird außerdem der Gefahr vorgebeugt, daß das Kunstharz sich beim Abstreifen womöglich über die Außenseite der Trennfolie hin verteilt und daran haften bleibt und sich anschließend in der Härtevorrichtung mit der Trennfolie fest verbindet. Das wird durch eine Weiterbildung der Einrichtung nach Anspruch 37 zusätzlich unterstützt.

Aus der EP 0 233 439 A1 sind ein Verfahren und eine Vorrichtung zum Herstellen von faserverstärkten Kunststoffhohlproprofilen bekannt. Dabei wird auf einen waagerecht ausgerichteten Dorn, der in seinem Anfangsbereich von einer Haltevorrichtung gehalten wird und von dort aus fliegend angeordnet ist, eine bandförmige Trennfolie mit einander überlappenden Längsrändern aufgezogen und die Längsrändern mittels eines Klebestreifens miteinander verbunden. Der dadurch entstehende Trennschlauch wird auf dem Dorn durch die nachfolgenden Stationen gezogen und darauf das Kunsststoffhohlprofil aufgebaut. Auf den Trennschlauch wird flüssiges Kunstharz aufgebracht und in einer Ringrakel auf gleichmäßige Dicke gebracht. Vom beheizbaren Dorn wird die Kunstharzschicht teilweise zum Gelieren gebracht und dadurch eine Innenhaut gebildet. Hinter dem beheizbaren Abschnitt wird der Dorn gekühlt. Auf die Innenhaut wird flüssiges Kunstharz aufgebracht. Darauf wird eine bandförmige gewobene Glasmatte in Längsrichtung mit einander überlappenden Längsrändern aufgebracht. Außerdem wird ein weiterres gewobene Glasfaserband von einer um den Dorn umlaufenden Vorrichtung aus auf das darunter liegende Glasfaserband mit einander überlappenden Längsrändern wendelförmig herumgewickelt. einem weiteren beheizbaren Abschnitt des Dorns wird das Kunstharz ausgehärtet und dadurch ein faserarmiertes Stützprofil geschaffen. Der daran anschließende Dornabschnitt wird wieser gekühlt. Auf das Stützprofil wird eine Kunstharzschicht aufgegossen, eine in Längsrichtung verlaufende bandförmige Glasgewebematte mit einander überlappenden Längsrändern in die Kunstharzschicht eingebettet und anschließend eine zweite bandförmige Glasgewebematte wendelförmig mit einander überlappenden Längsrändern herumgeschlungen. Diese Stationen mit der Kunstharzauftragung, mit dem Anlegen einer Glasgewebematte in Längsrichtung und mit dem wendeförmigen Umschlingen mit einer zweiten Glasgewebematte sind ein weiteres Mal angeordnet. Mit einer um den Dorn umlaufenden Walkvorrichtung mit mehreren am Umfang verteilt angeordneten Walzen wird versucht, die Lufteinschlüsse herauszupressen. In einer Kalibrierblende wird das überschüssige Kunstharz abgestreift. Darauf wird eine weitere Kunstharzschicht für eine Außenhaut aufegracht und kalibriert. In einem Durchlaufofen wird das Hohprofil von außen beheizt und das Kunstharz gehärtet. Von einer Zugvorrichtung wird das fertige Hohlprofil kontinuierlich abgezogen und in einer Ablängstation in Einzelstücke handelsüblicher Längen aufgeteilt.

Bei dieser Vorrichtung muß der Dorn in mehreren aufeinanderfolgenden Abschnitten abwechselnd beheizt und gekühlt werden. Die heizungsenergie und das Kühlmedium müssen durch sämtliche vorangeheneden Abschnitte des Dorns hindurchgeleitet werden. Außerdem müssen die Rückleitungen darin untergebracht werden. Das ergibt einen komplizierten Aufbau des Dorns. Da die Heiz- und Kühlvorrichtungen und ihre Leitungen nicht beliebig klein gemacht werden können, kann die lichte Weite des Dorns und damit auch sein Außendurchmesser nicht unter einen verhältnismäßig großen Mindeswert verkleinert werden. Unterhalb dieses Grenzwertes können Hohlprofile nicht hergestellt werden.

Die einander überlappenden Längsränder der längsverlaufenden Glasgewebematten ergeben zwangsläufig Wanddickenunterschiede, die sich unter ungünstigen Umständen sogar mehrfach auswirken können. Daraus ergeben sich entsprechende Durchmesserunterschiede. Bei den in der Regel an der Außenseite des Hohlprofils anschließenden Verbindungselementen müssen diese Maßunterschiede entsprechend berücksichtigt werden. Das wiederum ergibt verhältnismäßg weite Spalte, die durch entsprend dicke Dichtmittel- und Klebemittelschichten überbrückt werden müssen.

Aufgrund der Gewebestruktur der Glasfasereinlagen trägt nur ein verhältnismßig kleiner Teil der Glasfasern zur Kraftübertragung sowohl in Längsrichtung wie auch in Umfangsrichtung bei. Das ergibt einen schlechten Ausnutzungsgrad der Glasfasereinlage und zieht einen entsprechend erhöhten Mengenbedarf an Glasgewebematten aber auch an Kunstharzen als Einbettmasse nach sich. Das erhöht das Eigengewicht der Hohprofile ganz beträchtlich.

Die Glasgewebematten lassen sich nur in beschränkter Länge herstellen. Das hat zur Folge, daß bei den Längsverlaufenden Glasgewebematten verhältnismäßig häufig eine Stoßstelle auftritt, bei der die Kraftübertragung in Längsrichtung selbst dann verringert ist, wenn die aneinander anschließenden Glasgewebematten einander überlappen. Die beschränkte Länge der Glasgewebematten wirkt sich noch schlimmer bei den wendelförmig verlegten Glasgewebematten aus. Auf eine bestimmte Länge des Hohprofils bezogen, treten darin noch viel häufiger Stoßstellen auf. Diese schwächen die Festigkeit des Hohlprofils in Umfangsrichtung, was zu einer erheblichen Verminderung der Druckfestigkeit solcher Hohlprofile führt, wenn sie als Leitungsrohre eingesetzt werden. Außerdem beeinträchtg das häufige Wechseln der Vorratsrollen der Glasgewebematten den Betriebsablauf der Fertigungseinrichtung.

Bei den Glasgewebematten kommt noch hinzu, daß die miteinander verwobenen Glasfaserstränge ein räumliches Gebilde darstellen, das einen sehr großen Anteil an Hohlräumen einschließt. Da die Kunstharze eine bestimmte Viskosität haben, ist das Eindringen der viskosen Flüssigkeit in die vielen mehr oder minder großen Höhlräume zusätzlich erschwert. Dadurch bleibt von der in den Hohlräumen ursprünglich vorhanden Luftmenge ein beträchtlicher Teil als Lufteinschlüsse zurück. Sie lassen sich vor allem in den tieferen Schichten auch durch die Walkvorrichtung nicht mehr vollständig herauspressen. Ein derartiges Rohr hat stets eine gewisse Restporosität. Sie führt schon bei verhältnismäß geringen Druckwerten zum Schwitzen des Rohres und bei höheren Druckwerten zu Undichtigkeiten.

Die Erfindung wird im folgenden anhand eines in der Zeichnung dargestellten Ausführungsbeispieles, einschließlich einer Abwandlung davon, näher erläutert. Es zeigen:
- Fig. 1 bis 5: je einen Abschnitt einer weitgehend schematischen Seitenansicht der Einrichtung zum kontinuierlichen Herstellen faserverstärkter Kunststoffrohre;
- Fig. 6: den ersten Abschnitt einer Seitenansicht einer teilweise abgewandelten Ausführungsform der Einrichtung;
- Fig. 7: eine ausschnittweise dargestellte Draufsicht einer Ringrakel der Einrichtung nach Fig. 1;
- Fig. 8: eine ausschnittweise dargestellte Draufsicht einer kombinierten Arbeitsstation der Einrichtung nach Fig. 1;
- Fig. 9: eine Seitenansicht bzw. einen Längsschnitt einer Leit- und Formvorrichtung und einer Ringrakel der Einrichtung nach Fig. 1;
- Fig. 10: eine Untersicht der Leit- und Formvorrichtung und der Ringrakel nach Fig. 9;
- Fig. 11: eine Stirnansicht der Leit- und Formvorrichtung und der Ringrakel nach Fig. 9 und 10.

Die Einrichtung 10 weist einen Maschinenteil 11 mit einer Anzahl Arbeitsstationen und Vorrichtungen und ein Regalgatter 12 auf, das an der Stirnseite des Maschinenteils weitgehend getrennt von diesem aufgestellt ist.

Im Regalgatter 12 sind eine größere Anzahl Spulen 13 mit Fasersträngen 14 untergebracht, die aus einer mehr oder minder großen Anzahl von Glasfasern, Kohlefasern oder Textilfasern gebildet sind. Die Spulen 13 sind mit lotrecht ausgerichteter Spulenachse aufgestellt, so daß ein Innenabzug der Faserstränge 14 möglich ist. Zu diesem Zweck sind am Regalgatter 12 zahlreiche Leitvorrichtungen 15 angeordnet, durch die die Faserstränge von den Spulen 13 abgezogen werden und zum Maschinenteil 11 hingeleitet werden. Auch zwischen dem Regalgatter 12 und dem Maschinenteil 11 sind solche Leitvorrichtungen 15 vorhanden, die der Übersichtlichkeit wegen nur zum Teil dargestellt oder angedeutet sind.

Der Maschinenteil 11 weist ein Grundgestell 16 auf, das sich über die gesamte Länge des Maschinenteils 11 erstreckt und das alle zum Maschinenteil 11 gehörenden Vorrichtungen in der richtigen gegenseitigen räumlichen Zuordnung aufnimmt. Von dem Grundgestell 16 sind, mit Rücksicht auf die Übersichtlichkeit der Darstellung, nur wenige Teile dargestellt, darunter ein Bodenrahmen 17, eine in einem gewissen Abstand oberhalb des Bodenrahmens 17 angeordnete Längsstrebe 18 und einige Pfosten 19.

Am Anfang des Grundgestells 16 ist eine Haltevorrichtung 21 vorhanden, die mit dem Grundgestell 16 fest verbunden ist. Die Haltevorrichtung 21 hält den Anfang eines Dorns 22 fest, der waagerecht ausgerichtet ist und der von der Haltevorrichtung 21 aus fliegend angeordnet ist und sich durch eine ganze Reihe der Arbeitsstationen und Vorrichtungen hindurcherstreckt. Der Dorn ist als kreiszylindrischer Hohlkörper ausgebildet.

An der Stirnseite des Grundgestells 16 ist eine Abspulvorrichtung 23 angeordnet, die mit waagerecht und quer zur Längserstreckung des Grundgestells ausgerichteter Achse eine Spule 24 einer bandförmig aufgewickelten Trennfolie 25 aufnimmt. Die Trennfolie 25 wird über eine Leitvorrichtung 26 einer Formvorrichtung 27 zugeleitet, mittels der die in axialer Richtung über den Dorn 22 freihängend hinweggezogene Trennfolie 26 zu einem den Dorn 22 umgebenden Trennschlauch geformt wird. In der Nähe der Formvorrichtung 27 ist eine Verbindevorrichtung 28 vorhanden, die eine Abspulvorrichtung 29 aufweist, von der ein Klebeband 31 abgezogen wird und mittels einer Andrückrolle 32 an die aneinander anstoßenden oder einander geringfügig überlappenden Ränder des Trennschlauches angedrückt wird und dadurch die Ränder der Trennfolie für Kunstharz undurchlässig miteinander verbindet.

Die Verbindevorrichtung 28 kann auch dahingehend abgewandelt sein, daß anstelle der Andrückrolle 32 ein Schweißschuh einer Ultraschall-Schweißvorrichtung gegen die einander überlappenden Ränder der Trennfolie angedrückt wird und dabei die Ränder der Trennfolie 25 miteinander verschweißt werden und so der Trennschlauch gebildet wird.

Eine Zuführvorrichtung 33 für ein Kunstharz weist einen Vorratsbehälter 34 für das Kunstharz, eine Umwälzpumpe 35 und verschiedene Leitungen 36 auf. Von einem oberen Zwischenbehälter 37 aus führt ein Zuführrohr 38 das Kunstharz zum Dorn 22 hin. Die Mündung 39 des Zuführrohres 38 ist an der Oberseite des Dorns 22 in dessen vertikaler Meridianebene angeordnet, von der aus das Kunstharz auf den Trennschlauch aufgegossen wird und sich dann nach beiden Seiten hin gleichmäßig verteilt und eine geschlossene Kunstharzschicht bildet. Einige der Teile der Zuführvorrichtung 33 sind von einer kastenförmigen Verkleidung 40 umgeben, deren Stirnwände in der Fluchtlinie des Dorns 22 eine Durchlaßöffnung für den Dorn 22 haben. Ein Teil der Verkleidung 40 ist aufklappbar ausgebildet, damit der Innenraum zugänglich ist.

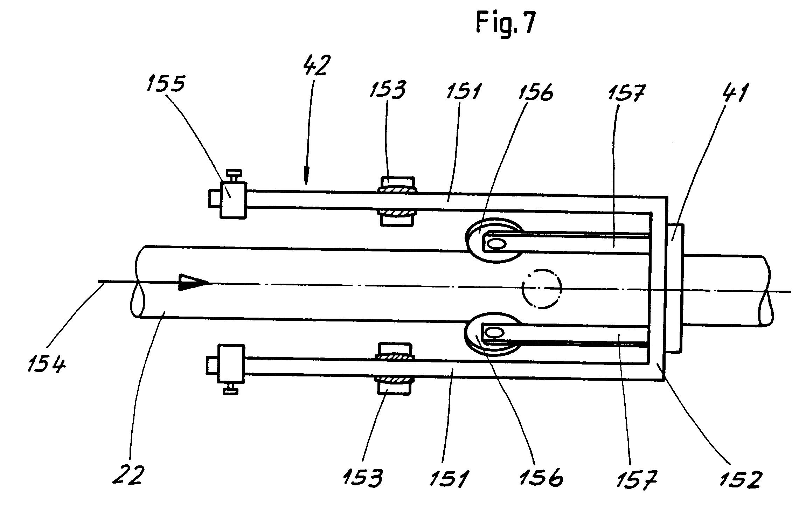

In der Zugrichtung des späteren Kunststoffrohres ist im Anschluß an die Mündung 39 eine ringförmige Rakel angeordnet, die im folgenden kurz als Ringrakel 41 bezeichnet wird, ähnlich wie auch die später beschriebenen ringförmige Rakeln. Diese Ringrakel 41 ist an einer Führungsvorrichtung 42 angeordnet, die später anhand von Fig. 7 näher erläutert wird. Durch diese Führungsvorrichtung 42 wird die Ringrakel 41 in der Längsrichtung des Dorns unverschieblich und in der Normalebene dazu stets mittig zum Dorn 22 geführt. Von der Ringrakel 41 wird das mittels der Zuführvorrichtung 33 auf den Trennschlauch aufgegossene Kunstharz zu einer ringförmigen gleichmäßig dicken Kunstharzschicht geformt. Diese Kunstharzschicht wird in einer anschließenden Erwärmungsvorrichtung 43 erwärmt und dadurch aktiviert, so daß diese Kunstharzschicht zu einer Innenhaut des späteren Kunststoffrohres geliert.

Unterhalb der Mündung 39 des Zuführrohres 38 und unterhalb der Ringrakel 41 ist eine gemeinsame Auffangwanne 44 angeordnet, die das vom Trennschlauch abtropfende oder von der Ringrakel 41 abgestreifte Kunstharz auffängt und es wieder zum Vorratsbehälter 34 zurückführt. In der Erwärmungsvorrichtung 43 ist ebenfalls eine Auffangwanne 45 vorhanden, die die beim Gelieren der Innenhaut aus dieser austretenden Reagenzien auffängt. Von dort werden diese Reagenzien einschließlich ihrer infolge der Erwärmung sich bildenden Dämpfe von einem Gebläse 46 aus der Erwärmungsvorrichtung 43 abgesaugt und in einem Filter 47, vorzugsweise in Form eines Aktivkohlefilters, aufgefangen. Die gereinigte Trägerluft wird frei ausgeblasen. Das Absaugen der Dämpfe wird durch eine kastenförmige Verkleidung 50 unterstützt, die ähnlich der Verkleidung 40 ausgebildet ist.

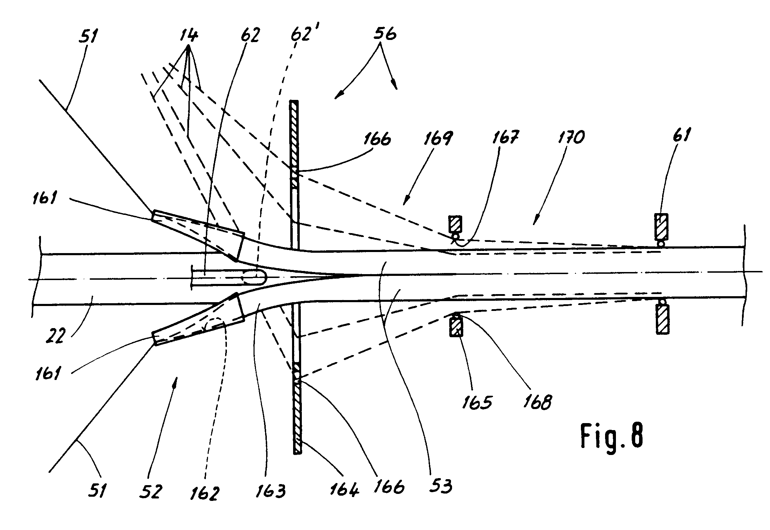

Nach der Erwärmungsvorrichtung 43 ist eine Abspulvorrichtung 48 vorhanden, die zwei Spulen 49 eines bandförmigen Vlieses 51 aufweist. Die Abspulvorrichtung 48 ist mit einer Leit- und Formvorrichtung 52 verbunden, mittels der die beiden Vliesbänder 51 von der Abspulvorrichtung 48 zum Dorn 22 hingeleitet werden und dort zu je einer halbzylindrischen Hälfte eines in Längsrichtung an zwei diametral gelegenen Stellen offenen Schlauches 53 geformt werden, wie später anhand Fig. 8 näher erläutert wird.

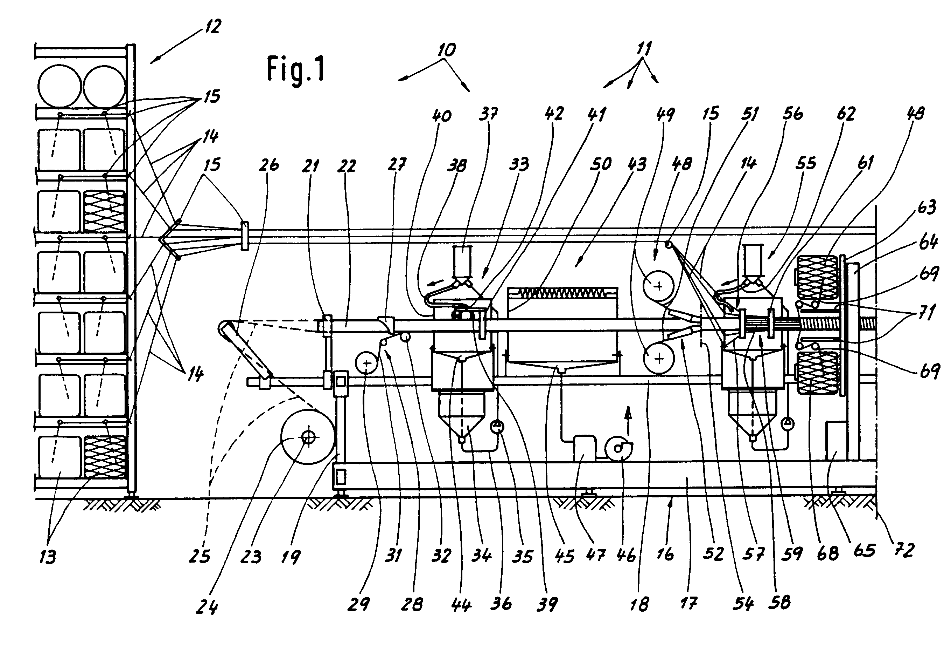

Bei der Abspulvorrichtung 48 und der Leit- und Formvorrichtung 52 ist zu beachten, daß diese in Fig. 1 um 90° um die Längsachse des Dorns 22 geschwenkt dargestellt ist und sie in Wirklichkeit in der durch die Längsachse des Dorns hindurchgehenden Horizontalebene ausgerichtet ist. Daher wird der durch die Leit- und Formvorrichtung 52 gebildete Schlauch 53 (Fig. 8) in Fig. 1 durch die Strichpunktlinie 54 begrenzt. Wegen der verschwenkten Darstellung ist die Abspulvorrichtung 48 und die mit ihr verbundene Leit- und Formvorrichtung 52 von den nachfolgenden Vorrichtungen in axialer Richtung zurückversetzt dargestellt. Ihre wahre Zuordnung in axialer Richtung geht aus Fig. 8 hervor.

In der Wirklichkeit ist in enger Nachbarschaft mit der Leit- und Formvorrichtung 52 eine weitere Zuführvorrichtung 55 für ein Kunstharz angeordnet, die weitestgehend gleich der Zuführvorrichtung 33 ausgebildet ist, weshalb hinsichtlich ihrer Einzelheiten auf deren Beschreibung verwiesen wird.

In räumlicher Nähe zur Zuführvorrichtung 55 ist eine Leit- und Formvorrichtung 56 vorhanden, die ebenfalls anhand Fig. 8 näher erläutert wird. Diese Leit- und Formvorrichtung 56, die den Dorn 22 außen umgibt, leitet einen Teil der vom Regalgatter 12 abgezogenen Faserstränge 14 zum Dorn 22 hin und ordnet sie zunächst als Faserstränge 57 entlang der Mantelfläche eines Kegelstumpfes an und leitet anschließend die Fasern 58 dieser Faserstränge 57 in Form eines geschlossenen kegelstumpfförmigen Fasermantels 59 einer Ringrakel 61 zu. Von dieser Ringrakel 61 werden die Fasern 58 des Fasermantels 59 in die Kunstharzschicht eingebettet, die sich aus dem Kunstharz gebildet hat, das zuvor von der Zuführvorrichtung 55 über ihr Zuführrohr 52 auf die Innenhaut des Kunststoffrohres aufgegossen wurde. Diese Kunstharzschicht und die in axialer Ausrichtung darin eingebetteten Fasern 58 bilden zusammen eine erste Verstärkungsschicht für das Kunststoffrohr, die wegen der axialen Ausrichtung ihrer Fasern als axiale Verstärkungsschicht bezeichnet wird.

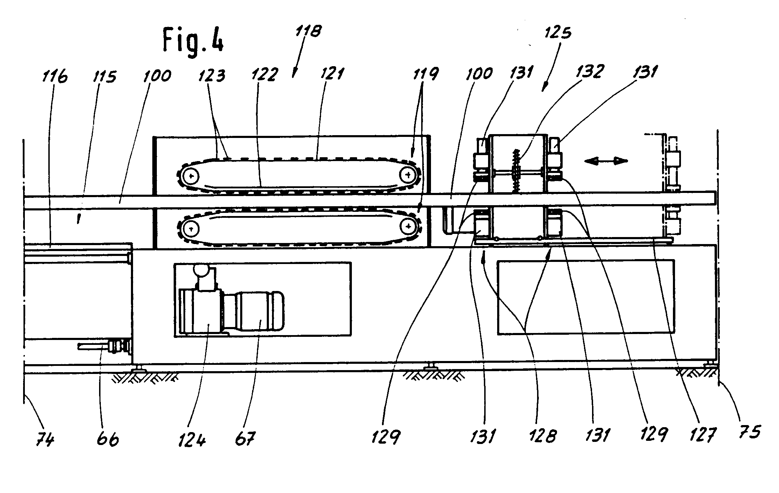

Das über das Zuführrohr 62 auf die Innenhaut aufgegossene Kunstharz wurde mit einem über das Aufnahmevolumen der Vliesbahnen 51 für die Stützschicht hinausgehenden Überschuß aufgegossen, der so groß ist, daß er nicht nur für die erste axiale Verstärkungsschicht ausreicht, sondern darüber hinaus auch noch Kunstharz für die nächste Verstärkungsschicht übrigbleibt. Diese wird unmittelbar im Anschluß an die erste axiale Verstärkungsschicht gebildet. Dafür ist in der Nachbarschaft der Zuführvorrichtung 55 für das Kunstharz ein kranzförmiger Spulenträger 63 vorhanden, der den Dorn 22 außen umgibt und der mittels Kranzlager an einem Lagergestell 64 drehbar gelagert ist. Der Spulenträger 63 wird über ein stufenlos einstellbares oder regelbares Getriebe 65 von einer gemeinsamen Antriebswelle 66 angetrieben, die in Fig. 4 angedeutet ist und sich von dem dort angeordneten Antriebsmotor 67 aus entlang dem Grundgestell 16 zu allen angetriebenen Vorrichtungen hin, darunter bis zum Getriebe 65 des Spulenträgers 63, erstreckt.

Der Spulenträger 63 weist eine geradzahlige Anzahl von Spulen 68 aus je einem Faserstrang 69 auf, die am Spulenträger 63 drehbar gelagert sind. In Fig. 1 sind der Übersichtlichkeit halber nur zwei Spulen 68 dargestellt. In Wirklichkeit sind es zweckmäßigerweise wenigstens vier Spulen oder auch sechs Spulen.

Am Spulenträger 63 sind Leitvorrichtungen 71 angeordnet, mittels der der Faserstrang 69 jeder der Spulen 68 zum Dorn 22 hingeleitet werden. Sobald der Spulenträger 63 um den Dorn 22 umläuft, wickeln sich die Faserstränge 69 auf die darunterliegende axiale Verstärkungsschicht auf, wobei sie in den Überschuß des Kunstharzes eingebettet werden, das weder von der Stützschicht noch von der ersten axialen Verstärkungsschicht aufgenommen wurde und das aus dem durch die Vliesbänder 51 gebildeten Vliesschlauch und aus dem Fasermantel der ersten Verstärkungsschicht heraus nach außen ausgetreten ist.

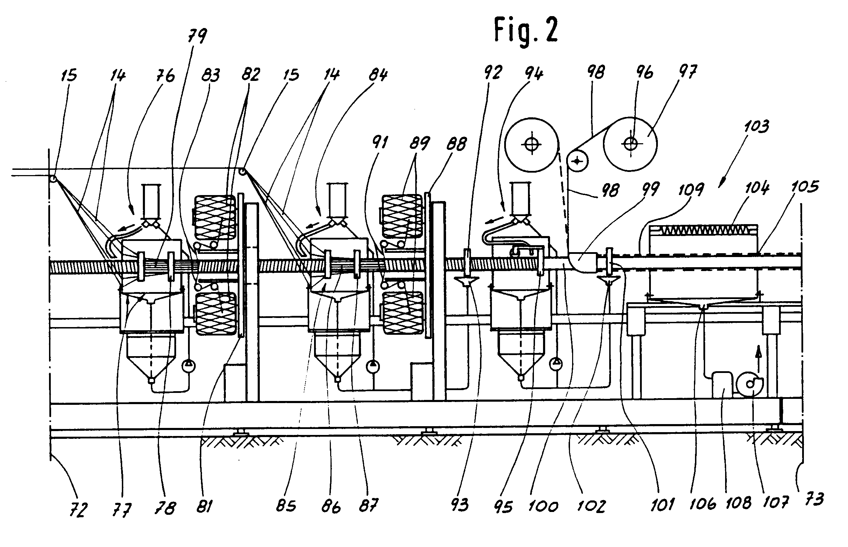

An der aus Formatgründen notwendigen rein zeichentechnischen Trennstelle 72, die durch eine Strichpunktlinie dargestellt ist, schließen die weiteren Vorrichtungen an, die auf Seite 2 dargestellt sind. Gleiches gilt für die weiteren Trennstellen 73 ... 75 in Fig. 2 ... 5.

Im Anschluß an den Spulenträger 63 ist eine weitere Zuführvorrichtung 76 für ein flüssiges Kunstharz vorhanden, die gleich der Zuführvorrichtung 55 ausgebildet ist. Im Bereich dieser Zuführvorrichtung 76 ist eine Leit- und Formvorrichtung 77 angeordnet, die gleich der Zuführvorrichtung 59 ausgebildet ist. Dazu kommt noch eine Ringrakel 78, die gleich der Ringrakel 61 ausgebildet ist, wobei allerdings die lichte Weite der Ringrakel 78 etwas größer als diejenige der Ringrakel 61 ist. Durch die Zuführvorrichtung 76 wird eine Kunstharzschicht aufgeossen, zu der von der Leit- und Formvorrichtung 77 die vom Regalgatter 12 herangeleiteten Faserstränge 14 in Form eines kegelstumpfförmigen Fasermantels 79 hingeleitet werden und durch die Ringrakel 78 in die Kunstharzschicht eingebettet werden. Dadurch entsteht eine zweite axiale Verstärkungsschicht.

In der Nachbarschaft der Zuführvorrichtung 76 ist ein weiterer Spulenträger 81 mit mehreren Spulen 82 vorhanden, der gleich dem Spulenträger 73 ausgebildet ist. Die von den Spulen 82 abgezogenen Faserstränge 83 werden beim Umlauf des Spulenträgers 81 auf die darunter liegende zweite axiale Verstärkungsschicht aufgewickelt und in die Kunstharzschicht eingebettet, die durch die Zuführvorrichtung 76 zuvor mit einer entsprechenden Überschußmenge aufgegossen wurde. Der Spulenträger 81 läuft im entgegengesetzten Drehsinne zum Spulenträger 63 um. Durch die Zuführvorrichtung 76 und den Spulenträger 81 wird eine zweite tangentiale Verstärkungsschicht gebildet.

Danach ist eine weitere Zuführvorrichtung 84 für ein Kunstharz vorhanden, die wiederum gleich der Zuführvorrichtung 76 ausgebildet ist und durch die eine Kunstharzschicht mit einer gewissen Überschußmenge auf die zweite tangentiale Verstärkungsschicht aufgegossen wird. Durch eine Leit- und Formvorrichtung 85 werden Faserstränge 14 in Form eines kegelstumpfförmigen Fasermantels 86 zur Außenseite der zweiten tangentialen Verstärkungsschicht hingeleitet und durch eine Ringrakel 87 in die Kunstharzschicht eingebettet. Mittels eines danach folgenden dritten Spulenträgers 88 mit mehreren Spulen 89 werden deren Faserstränge 91 auf die nach der Ringrakel 87 gebildete dritte axiale Verstärkungsschicht aufgewickelt und in den Kunstharzüberschuß eingebettet und so eine dritte tangentiale Verstärkungsschicht gebildet.

Falls es erwünscht oder erforderlich sein sollte, können durch eine oder mehrere weitere Gruppen von je einer Zuführvorrichtung für ein flüssiges Kunstharz, einer Leit- und Formvorrichtung für einen axial ausgerichteten kegelstumpfförmigen Fasermantel, eine Ringrakel zum Einbetten dieses Fasermantels in die Kunstharzschicht und einen Spulenträger zum tangentialen Aufwickeln mehrerer Faserstränge je eine weitere axiale und tangentiale Verstärkungsschicht gebildet werden.

Im Anschluß an den letzten Spulenträger 88 ist eine Ringrakel 92 vorhanden, unter der eine Auffangwanne 93 angeordnet ist. Damit wird etwa noch vorhandenes überschüssiges Kunstharz von der Außenseite der äußersten tangentialen Verstärkungsschicht abgestreift, die durch den Spulenträger 88 gebildet wurde.

Im Anschluß an die Ringrakel 92 ist eine weitere Zuführvorrichtung 94 vorhanden, die weitestgehend gleich der ersten Zuführvorrichtung 33 ausgebildet ist. Durch die Zuführvorrichtung 94 wird ein Kunstharz für eine Außenhaut auf die äußerste tangentiale Verstärkungsschicht aufgegossen. Dieses Kunstharz wird mittels einer Ringrakel 95 zur Außenhaut des Kunststoffrohres geformt. Diese Ringrakel 95 ist in gleicher Weise wie die Ringrakel 41 mittels einer Führungsvorrichtung geführt, die in Verbindung mit der Ringrakel 41 in Fig. 7 näher erläutert wird.

Oberhalb des Dorns 22 ist im Anschluß an die Ringrakel 95 eine Abspulvorrichtung für eine bandförmige auf einer Spule 97 aufgewickelte Trennfolie 98 angeordnet. Mittels einer sattelförmigen Leit- und Formvorrichtung 29 wird die Trennfolie 98 von ober her auf das bis auf das Aushärten fertige Kunststoffrohr 100 hingeleitet und dabei zu einem Schlauch geformt, der die Außenhaut des Kunststoffrohres 100 außen umgibt. Dieser Schlauch, der einen äußeren Trennschlauch für das Kunststoffrohr 100 bildet, ist an der Unterseite in Längsrichtung offen, wobei die Ränder der Trennfolie stumpf aneinander stoßen. Die Breite der Trennfolie 98 muß daher auf den äußeren Umfang der Außenhaut des Kunststoffrohres 100 abgestimmt sein.

Nach der Leit- und Formvorrichtung 99 ist nochmals eine Ringrakel 101 mit einer darunter angeordneten Auffangwanne 102 vorhanden. Diese Ringrakel 101 streift diejenige Kunstharzmenge ab, die beim Formen und Anlegen des äußeren Trennschlauches an das Kunststoffrohr 100 unter Umständen durch den Längsschlitz des äußeren Trennschlauches nach außen verdängt wird. Aus diesem Grunde ist in Wirklichkeit die Ringrakel 101 unmittelbar neben der Leit- und Formvorrichtung 99 angeordnet und in Fig. 2 nur der Deutlichkeit halber in einiger Entfernung dargestellt.

An die Leit- und Formvorrichtung 99 und die Ringrakel 101 schließt eine Härtevorrichtung 103 an. Diese weist Wärmequellen und/oder Strahlungsquellen 104 auf, die am zweckmäßigsten als Infrarotstrahler ausgebildet sind. Diese Strahlungsquellen 104 umgeben das Kunststoffrohr 100 ringsum, wobei in Fig. 2 zur Vermeidung von Mißverständnissen der unten gelegene Teil der Strahlungsquellen 104 weggelassen wurde.

Die Härtevorrichtung 103 ist mit einer kastenförmigen Verkleidung 105 ausgerüstet, die zugleich der Wärmedämmung dient, um das Abstrahlen oder Austreten der Wärmeenergie der Strahlungsquellen 104 nach Möglichkeit zu vermeiden.

Im unteren Bereich der Härtevorrichtung 103 ist eine Auffangwanne oder Sammelwanne 106 angeordnet, durch die diejenigen Reagenzien oder Dämpfe, die beim Härten aus dem Kunststoffrohr 100 austreten, aufgefangen bzw. gesammelt werden und von einem Gebläse 107 abgesaugt werden und in einen Filter 108 hieingelitet werden, wo sie aus der Trägerluft ausgefiltert werden, die in gereinigtem Zustand frei ausgeblasen wird.

Die Härtevorrichtung 103 weist außerdem ein Führungsrohr 109 auf, das in Fig. 2 durch eine gestrichelte Linie dargestellt ist, weil es mit einer größeren Anzahl von Durchgangslöchern versehen ist, die in Längsrichtung und in der Umfangsrichtung versetzt zueinander angeordnet sind. Durch diese Durchgangslöcher wird das Führungsrohr 109 für die Wärme und für die Infrarotstrahlung der Strahlungsquellen 104 durchlässig, die dadurch zum Kunststoffrohr 100 vordringen und in dieses eindringen können. Dadurch wird der Härtevorgang der verschiedenen Kunststoffschichten des Kunststoffrohres eingeleitet.

Das Führungsrohr 109 hat eine lichte Weite die zumindest annähernd gleich der Summe aus dem Solldurchmesser des fertigen Kunststoffrohres 100 und der zweimaligen Wanddicke des Trennschlauches ist, der aus der Trennfolie 98 gebildet wurde. Das Führungsrohr 109 ist an seiner Unterseite in der Längsrichtung geschlitzt, damit die beim Härtevorgang aus dem Kunststoffrohr 100 austretenden Reagenzien durch den Schlitz austreten und in die Auffangwanne 106 abtropfen können und sie nicht in den Spalt zwischen dem äußeren Trennschlauch und dem Führungsrohr 109 hineingedrückt werden.

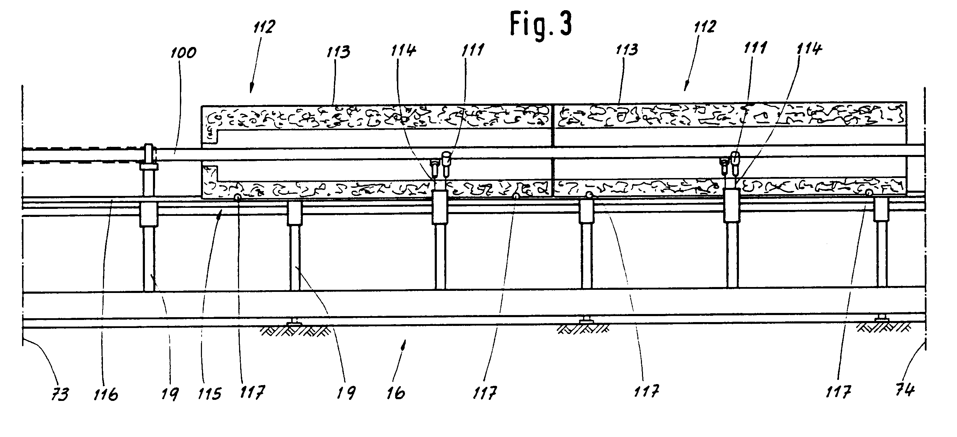

Das Führungsrohr 109 erstreckt sich über den Teil der Härtevorrichtung hinaus, der die Strahungsquellen 104 aufweist und der durch die Verkleidung 105 abgegrenzt wird. Das Führungsrohr 109 erstreckt sich mindestens bis zu derjenigen Stelle der Bewegungsbahn des Kunststoffrohres 100, ab der die Außenhaut des Kunststoffrohres 100 eine so große Formfestigkeit hat, daß das Kunststoffrohr 100 auf Tragrollen 111 abgestützt werden kann, die das Kunststoffrohr weiterleiten (Fig. 3).

Der Dorn 22, auf dem das Rohr von der ersten Arbeitsstation an geführt wurde, endet im Längenbereich der Härtevorrichtung 103. Von dort an wird das Rohr frei weiterbewegt und dabei durch die Tragrollen 111 abgestützt. Diese Tragrollen 111 sind auf die Höhenlage des Kunststoffrohres 100 einstellbar, damit durch sie auch Rohre unterschiedlichen Durchmessers aufgenommen und weiterbefördert werden können.

An die Härtevorrichtung 103 schließt eine Aushärtestrecke 112 an, die Wärmedammvorrichtungen in Form von Wärmedämmhauben 113 aufweist. Diese Wärmedämmhauben 113 haben einen U-förmigen oder C-förmigen Aufriß, der so ausgerichtet ist, daß der Längsspalt an der Unterseite der Wärmedämmhauben 113 gelegen ist. Er ist ausreichend breit, damit die Ständer der Tragrollen 111 sich hindurcherstrecken können. Die Wärmedämmhauben sind mittels einer Längsführung 115 in der Längsrichtung des Rohres 100 längsverschiebbar geführt. Die Längsführung 115 wird durch Führungsschienen 116 und durch Laufrollen 117 gebildet. Die Führungsschienen 116 sind an den Pfosten 19 des Grundgestells 16 befestigt. Die Laufrollen 117 sind an den Wärmedämmhauben 113 drehbar gelagert.

Die Führungsschienen 116 haben eine Länge, die um mindestens die Länge einer der Abdeckhauben 113 länger als die Summe der Länge der einzelnen Abdeckhauben 113 ist. Dadurch können die Abdeckhauben 113 einzeln jeweils so weit auf den Führungsschienen 116 verschoben werden, daß jede Stelle des Führungsrohres 109 zugänglich ist.

Die Wärmedämmhauben 113 sind in Fig. 2 in einer zurückgezogenen Stellung dargestellt. Beim Betrieb des Maschinenteils 11 zum Herstellen des Kunststoffrohres 100 sind die Abdeckhauben 113 bis an die Härtevorrichtung 103 herangefahren, so daß sie bereits den aus der Härtevorrichtung 103 herausragenden Längenabschnitt des Führungsrohres 109 umgeben und den darin befindlichen Teil des Kunststoffrohres 100 vor einem Verlust der Wärme bewahren, die für das Aushärten des Kunststoffrohres nötig ist.

Am Ende der Führungsschienen 116 der Längsführung 115 ist eine Zugvorrichtung 118 angeordnet. Sie weist mindestens zwei Kettenförderer 119 auf, die diametral zum Kunststoffrohr 100 angeordnet sind. Zur Schonung des Kunststoffrohres 100 werden zweckmäßigerweise insgesamt wenigstens vier Kettenförderer 119 eingesetzt.

Die Kettenförderer 119 weisen je eine Rollenkette 121 auf, die beim ziehenden Drum, das am Kunststoffrohr 100 anliegt, durch eine Führungsschiene 122 geführt wird. Die Rollenketten sind mit Winkellaschen ausgerüstet, an denen Mitnehmerstollen 123 befestigt sind, die aus einem Elastomer hergestellt sind.

Die Zugvorrichtung 118 wird über ein stufenlos einstellbares Getriebe 124 von dem Elektromotor 67 angetrieben, mit dem auch die durchgehende Antriebswelle 66 für die angetriebenen Vorrichtungen gekoppelt ist.

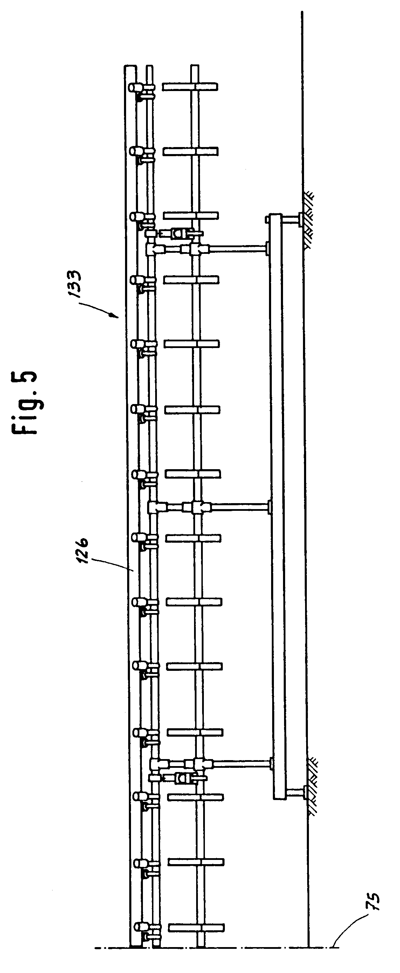

Im Anschluß an die Zugvorrichtung 118 ist eine Trennvorrichtung 125 vorhanden, mittels der das Kunststoffrohr 100 in einzelne Längenabschnitte 126 (Fig. 5) mit einem bestimmten Längenmaß aufgeteilt wird. Die Trennvorrichtung 125 ist mittels einer Längsführung 127 in der Längsrichtung des Kunststoffrohres 100 verfahrbar ausgebildet. Die Trennvorrichtung 125 ist mit einer Klemmvorrichtung 128 ausgerüstet. Diese weist zwei Klemmbackenpaare 129 auf von denen in der Zugrichtung des Kunststoffrohres 100 eines vor und eines hinter dem Trennwerkzeug 132 der Trennvorrichtung 125 angeordnet ist. Jeder Klemmbacken dieser beiden Klemmbackenpaare ist mit je einem doppelt wirkenden pneumatischen Kolbenantrieb 131 verbunden, durch den er am Kunststoffrohr 100 mit einer gewissen Klemmkraft angelegt werden kann, wie es in Fig. 4 rechts strichpunktiert dargestellt ist, oder vom Kunststoffrohr 100 zurückgezogen werden kann, wie es in Fig. 4 links dargestellt ist.

Die Trennvorrichtung 125 ist mit einer nicht dargestellten Rückholvorrichtung gekoppelt, die einen pneumatischen Kolbenantrieb aufweist. Dieser wird durch eine Steuervorrichtung betätigt, die auch für das Betätigen der Klemmvorrichtungen 129 sorgt. Zweckmäßigerweise ist in der in Fig. 4 ausgezogen dargestellten Ausgangsstellung der Trennvorrichtung 125 ein fester Anschlag vorhanden, gegen den die Trennvorrichtung 125 durch die Rückholvorrichtung gedrückt wird.

In einer bestimmten Entfernung von der Trennvorrichtung 125 ist eine Rohrablegevorrichtung 133 angeordnet (Fig. 5), die den vom endlos gefertigten Kunststoffrohr 100 abgeteilten Längenabschnitt 126 (Fig. 5) aus der Fluchtlinie des Kunststoffrohres 100 heraushebt und zu einem daneben gelegenen Rohrlagerplatz befördert.

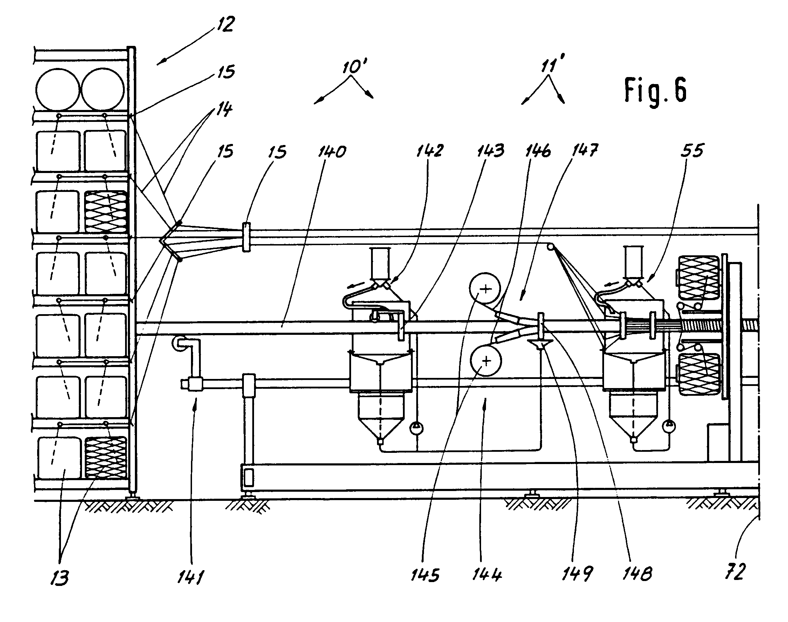

Aus Fig. 6 ist der erste Abschnitt der Einrichtung 10' zu ersehen, innerhalb dessen ein Teil der Vorrichtungen gegenüber derjenigen Ausführungsform abgewandelt ist, die bei der Einrichtung 10 vorhanden ist und in Fig. 1 dargestellt ist.

Die Einrichtung 10' ist darauf eingerichtet, ein faserverstärktes Kunststoffrohr, ähnlich dem Kunststoffrohr 100, auf der Grundlage eines Kunststoff-Innenrohres herzustellen, das im allgemeinen aus einem thermoplastischen Kunststoff besteht. Dieses Kunststoff-Innenrohr 140 wird mittels einer Zuführvorrichtung 141 in der Fluchtlinie der nachfolgenden Arbeitsstationen und Vorrichtungen stetig zugeführt. Am Maschinenteil 11' der Einrichtung 10' ist in einer ersten Arbeitsstation eine Zuführvorrichtung 142 für ein Klebeharz angeordnet, die weitgehend gleich der Zuführvorrichtung 33 ist, die an etwa der gleichen Stelle des Maschinenteils 11 angeordnet ist. Das von der Zuführvorrichtung 142 auf das Kunststoff-Innenrohr 140 aufgegossene Klebeharz wird mittels einer Ringrakel 143 zu einer ringförmigen gleichmäßig dicken Klebeharzschicht geformt. Diese Ringrakel 143 ist ebenso wie die Ringrakel 41 mit einer Führungsvorrichtung verbunden, wie sie anhand Fig. 7 näher erläutert wird.

Neben der Zuführvorrichtung 142 ist eine Abspulvorrichtung 144 vorhanden, die zwei Spulen 145 mit einem darauf aufgewickelten bandförmigen Vlies in Form eines Wirrfaservlieses aufweist. Daneben ist eine Leit- und Formvorrichtung 147 angeordnet, mittels der die von der Abspulvorrichtung 144 abgezogenen beiden Vliesbänder 146 zum Kunststoff-Innenrohr 140 hingeleitet werden und dabei zu den beiden halbzylindrisch geformten Hälften eines in Längsrichtung zweifach offenen Schlauches geformt werden.

Im Anschluß an die Leit- und Formvorrichtung 147 ist eine Ringrakel 148 angeordnet, mittels der der zweiteilige Vlies-Schlauch in die von der Zuführvorrichtung 142 und der Ringrakel 143 gebildete Klebeharzschicht eingebettet wird, womit eine Haft- und Pufferschicht auf der Außenseite des Kunststoff-Innenrohres 140 gebildet wird. Das dabei abgestreifte überschüssige Klebeharz wird vor einer Auffangwanne 149 aufgefangen und von dort zum Vorratsbehälter der Zuführvorrichtung 142 zurückgeleitet.

Auf die Haft- und Pufferschicht werden nacheinander je dreimal eine axiale Verstärkungsschicht und abwechselnd dazu eine tangentiale Verstärkungsschicht aufgebracht, und zwar mit Vorrichtungen, wie sie bei der Einrichtung 10 für die Herstellung des Kunststoffrohres 100 näher beschrieben wurden. Der einzige Unterschied zu jener Einrichtung ist der, daß auf der Einlaufseite der Zuführvorrichtung 55 für die erste Kunstharzschicht die Abspulvorrichtung 48 und die Leit- und Formvorrichtung 52 für die schlauchförmige Vlieseinlage der Stützschicht nicht vorhanden ist. Bei der Einrichtung 10' wird von der Zuführvorrichtung 55 lediglich eine für die erste axiale Verstärkungsschicht und die erste tangentiale Verstärkungsschicht ausreichende Kunstharzmenge auf die Haft- und Pufferschicht auf dem Kunststoff-Innenrohr 140 aufgetragen.

Aus Fig. 7 ist die Ringrakel 41 und die mit ihr verbundene Führungsvorrichtung 42 im einzelnen zu ersehen.

Die Führungsvorrichtung 42 weist zwei Führungsarme 151 auf, die über ein Joch 152 untereinander verbunden sind. Am Joch 152 ist die Ringrakel 41 austauschbar befestigt. Die beiden Führungsarme 151 sind mittels je eines Kugelgelenkes 153 allseits schwenkbar gelagert und dabei in der durch den Pfeil 154 angedeuteten Zugrichtung des späteren Kunststoffrohres 100 unverschiebbar festgehalten. Die beiden Führungsarme 151 erstrecken sich über die Kugelgelenke 153 hinaus nach der anderen Seite hin, wo je ein Ausgleichsgewicht 155 an ihnen festgeklemmt ist. Die beiden Ausgleichsgewichte 155 sind so ausgelegt, daß sie das Gewichtsmoment der Führungsarme 151 auf der anderen Seite einschließlich des Joches 152 und der Ringrakel 41 sowie zweier Führungsrollen 156 und deren Haltearme 157 bis auf eine bestimmte Restgewichtskraft auszugleichen vermögen. Mit dieser Restgewichtskraft liegen die Führungsrollen auf dem Dorn 22 auf, wobei der nicht dargestellte innere Trennschlauch für das spätere Kunststoffrohr 100 sich noch dazwischen befindet.

Um eine gute Führung der Ringrakel 41 sowohl in vertikaler Richtung wie auch in horizontaler Richtung zu erreichen, sind die an den Haltearmen 157 drehbar gelagerten Führungsrollen 156 so ausgerichtet, daß ihre Laufebene zumindest annähernd durch die Längsachse des Dorns 22 hindurchgeht und die beiden Laufbenen einen Winkel zwischen 60° und 120° einschließen, wobei der optimale Winkelwert 90° beträgt.

Damit die Laufebene der Führungsrollen 156 auch bei einer Änderung des Durchmessers des Dorns 22 oder des Kunststoff-Innenrohres 140 auf die Längsachse des Dorns 22 bzw. des Kunststoff-Innenrohres 140 ausgerichtet werden kann, ist es zweckmäßig, die Haltearme 157 um ihre Längsachse drehbar mit dem Joch 152 zu verbinden.

Im folgenden wird anhand Fig. 8 die Leit- und Formvorrichtung 52 für die Vliesbänder 51 sowie die Leit- und Formvorrichtung 56 für die Faserstränge 14 näher erläutert.

Die Leit- und Formvorrichtung 52 weist für jedes der Vliesbänder 51 je eine Leitschaufel 161 auf, deren dem Dorn 22 zugekehrte Innenfläche 162 zumindest in ihrem Endbereich konkav gekrümmt ist, so daß das zunächst ebene Vliesband 51 näherungsweise zur Mantelfläche eines halben Kreiszylinders verformt wird und so als Vliesschlauchhälfte 163 dem Dorn 22 zugeleitet werden kann, aus denen nach ihrer Vereinigung der Vliesschlauch 53 gebildet wird, der an der Oberseite und der Unterseite des Dorns 22 in der Längsrichtung offen ist.

Die Leit- und Formvorrichtung 56 für die Faserstränge 14 weist einen Leitkranz 166 und einen Leitring 165 auf. Im Leitkranz 164 ist eine der Anzahl der Faserstränge 14 entsprechende Anzahl Durchgangslöcher 166 vorhanden, durch die je einer der Faserstränge 14 hindurchgezogen ist. Die Durchgangslöcher 166 sind entweder entlang einem einzigen Kreisring oder entlang mehrerer Kreisringe verteilt angeordnet, die mittig zueinander liegen. Die Anzahl dieser Kreisringe hängt von der Anzahl und der Dicke der Faserstränge 14 ab. Der Leitring 165 weist eine ringförmig geschlossene Innenfläche 167 auf, die, wie in Fig. 8 dargestellt ist, beispielsweise durch die Innenfläche eines im Leitring 165 eingelegten Drahtringes 168 verkörpert werden kann. Dieser Drahtring 168 ist aus einem Federstahl hergestellt und nach Art eines Springringes für Bohrungen über seine Nennweite hinaus aufgespreizt und in elastisch zusamniengedrücktem Zustand in eine Nut auf der Innenseite des Führungsringes 165 eingelegt. Auf diese Weise kann der Drahtring 168 beim Verschleiß leicht ausgewechselt werden.

Die nominelle Innenfläche 167 des Leitringes 165 hat eine kleinere lichte Weite als der kleinste Kreisring des Anordnungsmusters der Durchgangslöcher 166 im Leitkranz 164.

Auf diese Weise werden die Faserstränge 14 vom Leitkranz 164 aus in der Form eines kegelstumpfförmigen Faserstrangmantels 169 dem Leitring 165 zugeführt. In dem engeren Leitring 165 liegen die Faserstränge 14 so dicht beieinander, daß ihre Fasern bereits im Leitring 165 einen geschlossenen kegelstumpfförmigen Fasermantel 170 bilden, der vom Leitring 165 aus zu der Ringrakel 61 hingeleitet wird, wobei die Fasern des Fasermantels 170 in Umfangsrichtung immer dichter zusammengeführt werden und sich dabei der auf der Außenseite der Stützschicht vorhandenen Überschußmenge des Kunstharzes einander so weit nähern, daß sie auf der Strecke zwischen dem Leitring 165 und der Ringrakel 61 bereits in diese Kunstharzschicht eintauchen und ansehließend von der Ringrakel 61 vollends darin eingebettet werden und von da ab die erste axiale Verstärkungsschicht des späteren Kunststoffrohres 100 bilden.

Wie aus Fig. 8 zu ersehen ist, erfolgt das Zusammenführen der beiden Vliesschlauchhälften 163 zum Vliesschlauch 53 etwa im Bereich des Leitkranzes 164 der Leit- und Formvorrichtung 56. Das Aufgießen des Kunstharzes sowohl für die Stützschicht, wie auch für die nachfolgenden beiden Verstärkungsschichten erfolgt über das Zuführrohr 38 der Zuführvorrichtung 33 zwischen die einander sich nähernden Ränder der Vliesschlauchhälften 163, wobei die Mündung 39 des Zuführrohres 38 so weit wie möglich in den sich schließenden Spalt hinein verlegt ist.

Die Faserstränge 14, die in den verschiedenen Leit- und Formvorrichtungen zu einem kegelstumpfförmigen Fasermantel geformt werden und anschließend zum Bilden einer axialen Verstärkungsschicht in die betreffende Kunstharzschicht eingebettet werden, werden zweckmäßigerweise vor ihrem Einlauf in den Leitkranz der Leit- und Formvorrichtung durch je eine in den Zeichnungen nicht dargestellte Spannvorrichtung einzeln über die durch die Reibung an den Leitvorrichtungen 15 schon vorhandene Grundspannung hinaus zusätzlich gespannt. Dabei ist auf eine gleichmäßige Gesamtspannung der Faserstränge untereinander zu achten. Auch die von den Spulenträgern abgezogenen Faserstränge, die auf die darunter liegende axiale Verstärkungsschicht aufgewickelt werden und zum Bilden einer tangentialen Verstärkungsschicht in die vorhandene Kunstharzschicht eingebettet werden, werden ebenfalls zusätzlich vorgespannt. Dafür werden die Spulen am Spulenträger durch je eine Bremsvorrichtung gebremst, deren Bremskraft von einer Steuervorrichtung in Abhängigkeit vom jeweiligen Außendurchmesser der Spule gesteuert wird, der zu diesem Zweck von einem Taster in der Steuervorrichtung abgetastet wird.

Bisher wurde der Einfachheit halber unterstellt, daß der Dorn 22 ein langgestreckter und durchgehend zylindrischer Hohlkörper von gleichbleibendem Außendurchmesser ist. In der Wirklichkeit weist der Dorn 22 mehrere Längenabschnitte auf, die zwar alle zylindrisch sind, deren Außendurchmesser aber von der Haltevorrichtung 21 an bis zu seinem Ende im Bereich der Härtevorrichtung 103 stufenweise verringert ist. Aus praktischen Gründen wird der Dorn aus mehreren selbständigen Einzelstücken zusammengesetzt, die an ihren Enden durch je eine Gewindeverbindung miteinander verbunden werden. Zweckmäßigerweise ist die Länge der selbständigen Einzelstücke so gewählt, daß die Verbindungsstelle der Einzelstücke mit den Übergangsstellen von einer Durchmesserstufe zur nächsten zusammenfallen. Dadurch können die Einzelstücke des Dorns 22 auf ihrer gesamten Länge jeweils mit gleichbleibendem Außendurchmesser gefertigt werden. Nach dem Verbinden dieser Einzelstücke in der richtigen Reihenfolge ergibt sich dann von selbst die Abstufung des Außendurchmessers des gesamten Dorns 22.

Am Dorn 22 werden die Übergangsstellen von einer Durchmesserstufe zur nächsten dorthin gelegt, wo bei dem in sich noch nachgiebigen, weil noch nicht ausgehärteten, Kunststoffrohr 100 die Neigung besteht, etwa aufgrund äußerer Einwirkungen den Durchmesser zu verringern. Das sind vor allem diejenigen Stellen, an denen die Faserstränge für eine tangentiale Verstärkungsschicht auf dem bis dahin jeweils vorhandenen Rohling des Kunststoffrohres 100 aufgewickelt werden. Dieses Aufwickeln der Faserstränge bewirkt jedesmal ein Umschlingen der vorangehenden axialen Verstärkungsschicht, wodurch deren Faserstränge in die Kunststoffschicht eingebettet werden und wodurch sowohl diese Schicht, wie auch die tangentiale Verstärkungsschicht selbst verdichtet wird. Dieses Verdichten der Rohrwand bewirkt dort jedesmal auch eine gerinfügige Verengung des Rohlings. Daher ist es zweckmäßig, die Übergangsstelle von einer Durchmesserstufe zur nächsten in der Bewegungsrichtung des Kunststoffrohres 100 unmittelbar neben der Aufwickelstelle des Faserstranges für eine tangentiale Verstärkungsschicht anzuordnen, wo sich die Verengung der Rohrwand am stärksten bemerkbar macht. Diese bleibt von da ab im allgemeinen bis zur nächsten Aufwickelstelle eines Faserstranges für die nächste tangentiale Verstärkungsschicht ohne Veränderung erhalten.

Eine Verengung des Kunststoffrohres 100 tritt aus anderen Gründen im Bereich der Härtevorrichtung 103 ein. Dort bewirkt der intensiv eingeleitete Aushärtevorgang des in der Rohrwand enthaltenen Kunststoffes ein Schrumpfen des Kunststoffrohres 100. Es ist daher zweckmäßig, eine weitere Übergangsstelle von einer Durchmesserstufe zur nächsten im Bereich der Härtevorrichtung 103 anzuordnen.

Je nach der Art der verwendeten Kunstharze und deren Volumenverhalten beim Aushärten in der Härtestation 103 kann es über die Verringerung des Außendurchmessers des Dorns 22 hinaus zweckmäßig sein, in diesem Längenabschnitt den Dorn nicht mehr genau zylindrisch sondern sogar schwach konisch mit in der Bewegungsrichtung des Kunststoffrohres 100 abnehmenden Außendurchmesser auszubilden.

Das verhältnismäßig enge Anliegen des auf dem Dorn 22 sich allmählich aufbauenden Kunststoffrohres 100 kann auch dazu herangezogen werden, eine Art pneumatische Schmierung anzuwenden. Zu diesem Zweck wird über eine in Fig. 1 der Übersichtlichkeit halber nicht dargestellte Zuleitung ein Druckgas in den Innenraum des Dorns 22 hineingeleitet. Im einfachsten Falle wird Druckluft als pneumatisches Schmiermittel verwendet.

Um das willkürliche Austreten des Druckgases aus der axialen Öffnung des Dorns 22 zu vermeiden, ist an einer Stelle seines Anfangsbereiches, an der keine sonstigen von außen her austauschbaren Vorrichtungen eingeführt werden müssen, eine Schottwand angebracht, durch die das Zurückstemmen des Druckgases verhindert wird. Eine solche Schottwand wird am einfachsten an einer Verbindungsstelle zweier Einzelstücke des Dorns 22 angeordnet. Dort ist dann auch der Anschluß der Druckgasleitung am einfachsten. Für den Aufbau einer pneumatischen Schmierung sind an mehreren Stellen der Längserstreckung des Dorns 22 radiale Durchgangslöcher angebracht, die von der Innenseite des Dorns bis zu seiner Außenseite durchgehen. Dabei ist es zweckmäßig, diese Durchgangslöcher an den Übergangsstellen von einer Durchmesserstufe zur nächsten anzuordnen, weil sich der pneumatische Schmierfilm am Anfang eines Längenabschnittes mit verringertem Außendurchmesser am einfachsten aufbauen kann und er von dort aus einerseits unter der Wirkung des Überdruckes des nachströmenden pneumatischen Schmiermittels und andererseits durch die Wanderbewegung des Kunststoffrohres 100 auf dem Dorn 22 leichter in axialer Richtung ausbreiten kann.

Im einfachsten Falle werden die Durchgangslöcher durch radiale Ausnehmungen an der Stirnfläche der Einzelstücke des Dorns 22 gebildet. Dadurch kann im allgemeinen das Anbringen gesonderter Bohrungen in den Einzelstücken entfallen.

Da die Schrumpfung des Kunststoffrohres 100 im Bereich der Härtevorrichtung 103 je nach der Art der verwendeten Kunststoffe und auch je nach der Art und Intensität der Wärmezuführung oder Zuführung von Strahlung zur Einleitung und Weiterführung des Aushärtevorganges, unterschiedlich sein kann ist es zweckmäßig, in diesem Längenabschnitt des Dorns 22 den Innenraum durch eine zusätzliche Schottwand von dem Innenraum der vorangehenden Längenabschnitte abzuschließen und über diese Schottwand den anschließenden Innenraum an eine gesonderte Druckluftleitung anzuschließen, die durch den hohlen Dorn 22 hindurchverlegt ist und die an eine Druckgasquelle angeschlossen wird, deren Überdruck größer als der Überdruck in den vorangehenden Längenabschnitten des Dorns 22 ist oder sein kann. Dadurch ist es bei Bedarf möglich, in diesem Längenabschnitt des Dorns 22 durch Erhöhung des Gasdruckes die Schmierwirkung des pneumatischen Schmiermittels zu erhöhen.

Damit das als pneumatisches Schmiermittel verwendete Druckgas nicht willkürlich am Ende des Dorns 22 entweicht und dadurch der gewünschte Druckaufbau gar nicht möglich wäre, ist der Dorn 22 im Bereich seines Endes durch eine Schottwand abgeschlossen.

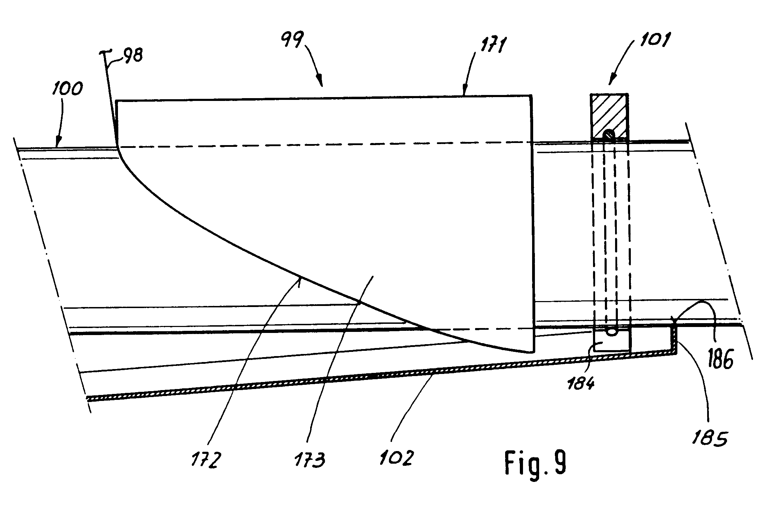

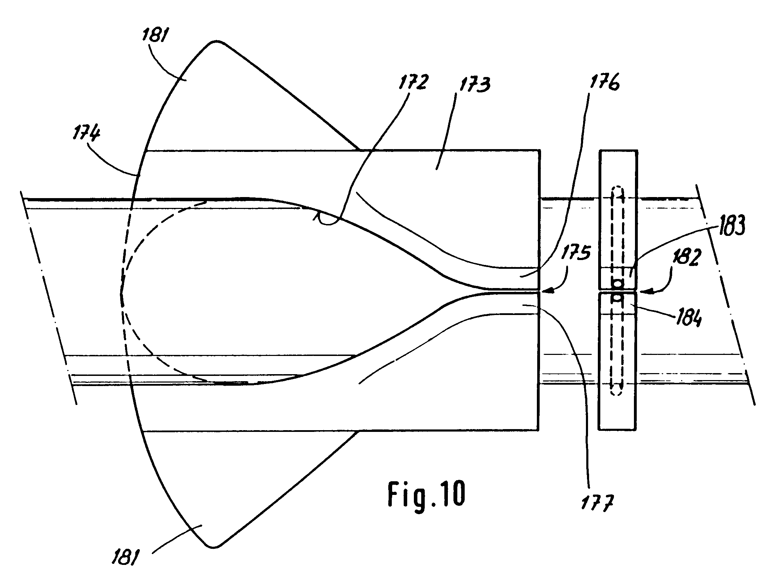

Im folgenden werden anhand Fig. 9 bis Fig. 11 die Leit- und Formvorrichtung 99 und die benachbarte Ringrakel 101 näher erläutert.

Die Leit- und Formvorrichtung 99 für die Trennfolie 98 arbeitet etwas anders als etwa die Formvorrichtung 27 für die innere Trennfolie 25. Ebenso arbeitet auch die Ringrakel 101 etwas anders als die davor eingesetzten Ringrakeln 61 ,78, 87 und 95. Das liegt daran, daß bei den letztgenannten Ringrakeln das dort etwa noch vorhandene überschüssige Kunstharz von der Außenseite des Rohrrohlings unmittelbar abgestreift wird. Bei der Leit- und Formvorrichtung 99 wird die Trennfolie 98 um die letzte oder äußerste Kunstharzschicht des Kunststoffrohres 100 herumgeschlagen und das Kunststoffrohr 100 dadurch umhüllt. Die sattelförmige Leit- und Formvorrichtung 99 weist einen Grundkörper 171 auf, der von einem dickwandigen Kreisringzylinder abgeleitet ist, der entlang einer schräg und zugleich etwas geschwungen verlaufenden Schnittlinie abgeschnitten ist. Die Ränder 172 der Seitenwangen 173 des Grundkörpers 171 verlaufen von einer oberhalb des Kunststoffrohres 100 gelegenen Einlaufschulter 174 für die Trennfolie 98 aus in der Längsrichtung des Kunststoffrohres 100 um dieses herum, stetig auf einander zu. Sie nähern sich in der lotrechten Meridianebene einander bis auf einen sehr kleinen Restspalt 175. Dessen Spaltweite liegt in der Größenordnung von einigen wenigen Zehntelmillimeter. Sie richtet sich zum Teil nach den hydraulischen Eigenschaften des abzustreifenden Kunstharzes wie Zähigkeit, Oberflächenspannung und dergleichen.

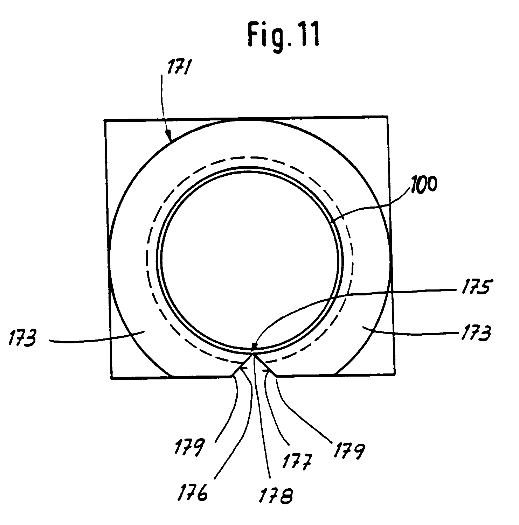

Wie aus Fig. 11 ersichtlich ist, verlaufen im Bereich des Restspaltes 175 die Seitenflächen 176 und 177 von ihrer Innenkante 178 zur Außenkante 179 hin unter einem gewissen Winkel auseinander, der im allgemeinen insgesamt 90° beträgt.

Die äußeren Abschnitte 181 der Einlaufschulter 174 können entweder einstückig mit dem Grundkörper 171 hergestellt sein. Sie können aber auch als getrennte Teile hergestellt werden und beispielsweise durch Verschrauben mit dem Grundkörper 171 nachträglich verbunden werden.

Die in der Nachbarschaft der Leit- und Formvorrichtung 99 angeordnete Ringrakel 101 ist ebenso wie die Formvorrichtung 99 nicht zu einem vollständigen Ring geschlossen. Sie weist vielmehr in der lotrechten Meridianebene unten einen Restspalt 182 auf, der ähnlich dem Restspalt 175 der Formvorrichtung 99 ausgebildet ist und in dessen Fluchtlinie gelegen ist. Ebenso wie bei der Formvorrichtung 99 verlaufen bei der Ringrakel 101 die Seitenflächen 183 und 184 des Restspaltes 182 von der Innenkante zur Außenkante hin unter einem Winkel auseinander, der im allgemeinen gleich ist dem Winkel der Seitenflächen 176 und 177 beiderseits des Restspaltes 175. Fig. 11 stellt in soweit auch eine axiale Ansicht der Ringrakel 101 dar.

Die in Fig. 2 nur unterhalb der Ringrakel 101 dargestellte Auffangwanne 102 erstreckt sich in Wirklichkeit auch unter der Formvorrichtung 99 entlang. Diese Auffangwanne 102 erstreckt sich in der Querrichtung nur wenig über die Außenkanten 179 hinaus und kann daher aufgrund ihrer verhältnismäßig geringen Breite auch als Auffangrinne bezeichnet werden.

An dem in der Bewegungsrichtung des Kunststoffrohres 100 jenseits der Ringrakel 101 gelegenen Ende der Auffangwanne 102 ist ein Abstreifer 185 angeordnet, dessen Abstreifkarte 186 auf die Außenkontur des Kunststoffrohres 101 abgestimmt ist.

Der Abstreifer 185 streift vom Kunststoffrohr 100 diejenigen Kunstharzreste ab, die nach dem Verlassen der Ringrakel 101 im Bereich deren Restspaltes 182 an der Unterseite des Kunststoffrohres haftengeblieben sein sollten.

## Patentansprüche

1. Verfahren zum kontinuierlichen Herstellen von faserverstärkten Kunststoffrohren, mit den Verfahrensschritten:
- auf einen waagerecht ausgerichteten Dorn, der in seinem Anfangsbereich von einer Haltevorrichtung festgehalten wird und von dort aus fliegend angeordnet ist, wird eine bandförmige Trennfolie in der Längsrichtung des Dorns stetig auf diesen aufgezogen und dabei zu einem den Dorn umhüllenden Trennschlauch geformt, wobei die Ränder der Trennfolie undurchlässig miteinander verbunden werden,
- der Trennschlauch wird in der Zugrichtung des Kunststoffrohres durch alle folgenden Bearbeitungsstationen hindurch stetig weiterbewegt,
- auf den Trennschlauch wird ein flüssiges Kunstharz aufgegossen und mittels einer ringförmigen Rakel (Ringrakel) zu einer ringförmigen gleichmäßig dicken Kunstharzschicht geformt,
- diese Kunstharzschicht wird zum Bilden einer Innenhaut des Kunststoffrohres durch Wärmeeinwirkung zum Gelieren gebracht,
- auf die Innenhaut wird ein flüssiges Kunstharz aufgegossen und in die sich bildende Kunstharzschicht ein bandförmiges Vlies lückenlos eingebettet und so eine Stützschicht gebildet,
- auf die Stützschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Forme eines geschlossenen kegelstumpfförmigen Fasermantels einer den Dorn umgebenden Ringrakel zugeleitet und von dieser zum Bilden einer axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschicht zum Dorn hin verdichtet werden,
- auf die tangentiale Verstärkungsschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstupmfförmigen Fasermantels einer den Dorn umgebenden Ringrakel zugeleitet und von dieser zum Bilden einer weiteren axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden,
- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist,
- noch der letzten tangentialen Verstärkungsschicht wird mittels einer Ringrakel ein vorhandener Harzüberschuß abgestreift,
- auf die äußerste Verstärkungsschicht wird ein flüssiges Kunstharz aufgegossen und mittels einer Ringrakel zu einer gleichmäßig dicken Außenhaut des Kunststoffrohres geformt,
- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,
- das so gebildete Kunststoffrohr wird durch eine Härtevorrichtung hindurchgeführt, in der durch Wärmeeinwirkung und/oder durch Lichteinwirkung das Härten der Kunstharzschichten eingeleitet und zumindest zum Teil vollendet wird,
- innerhalb der Härtevorrichtung wird das Kunststoffrohr von dem dort endenden Dorn abgezogen,
- noch der Härtevorrichtung wird das fertige Kunststoffrohr mittels einer Trennvorrichtung in einzelne Längenabschnitte mit einem bestimmten Längenmaß aufgeteilt.

2. Verfahren nach Anspruch 1,
**gekennzeichnet** durch den Verfahrensschritt:
- das Vlies für die Stützschicht wird entweder in der Form eines Bandes von einer Spule, oder vorzugsweise in der Form von zwei oder mehr Bändern von der entsprechenden Anzahl Spulen abgezogen, die an einem um den Dorn umlaufenden kranzförmigen Spulenträger angeordnet ist bzw. sind, auf die Innenhaut lückenlos und ohne Überlappung aufgewickelt und dabei in die auf der Innenhaut gebildete zweite Kunstharzschicht eingebettet.

3. Verfahren Anspruch 1,
**gekennzeichnet** durch den Verfahrensschritt:
- das Vlies für die Stützschicht wird in der Form eines Bandes, dessen Breite zumindest annäherend gleich dem Umfang der Stützschicht ist, von einer Spule abgezogen, die oberhalb des Dorns angeordnet ist, und mittels einer Leit- und Formvorrichtung an den Dorn allseits herangeführt und dabei in die zweite Kunstharzschicht eingebettet.

4. Verfahren nach Anspruch 1,
**gekennzeichnet** durch den Verfahrensschritt:
- das Vlies für die Stützschicht wird in der Form zweier Bänder, deren Gesamtbreite zumindest annähernd gleich dem Umfang der Stützschicht ist, von je einer Spule abgezogen, die beiderseits des Dorns diametral zu diesem angeordnet sind, und mittels einer Leit-und Formvorrichtung an den Dorn allseits herangeführt und dabei in die Kunstharzschicht eingebettet.

5. Verfahren nach Anspruch 1 in Verbindung mit einem der Ansprüche 2 bis 4,
**gekennzeichnet** durch die Verfahrensschritte:
- das für die Stützschicht auf die Innenhaut aufgegossene Kunstharz wird mit einem über die Mindestmenge für die Stützschicht hinausgehenden Überschuß aufgegossen, der ausreicht, um damit die Kunstharzschicht zumindest für die erste axiale Verstärkungsschicht, vorzugsweise zugleich auch für die erste tangentiale Verstärkungsschicht, zu bilden,
- das Vlies für die Stützschicht wird so in diese Kunstharzschicht eingebettet, daß die das Aufnahmevolumen des Vlieses übersteigende Überschußmenge des Kunstharzes durch das Vlies hindurch nach außen austritt,
- die über den ersten Führungskranz an den Dorn herangeführten Faserstränge für die axiale Verstärkungsschicht werden von der betreffenden Ringrakel aus zum Bilden der axialen Verstärkungsschicht in die von der Überschußmenge gebildete Kunstharzschicht eingebettet,
- in dem Falle, daß die Überschußmenge auch für die zweite Verstärkungsschicht ausreicht, werden die vom ersten Spulenträger abgezogenen Faserstränge für die tangentiale Verstärkungsschicht auf die axiale Verstärkungsschicht tangential aufgewickelt und dabei in die Überschußmenge eingebettet.

6. Verfahren zum kontinuierlichen Herstellen von faserverstärkten Kunststoffrohren mit einem Kunststoffinnenrohr, mit den Verfahrensschritten:
- das Kunststoffinnenrohr wird mittels einer Zuführvorrichtung in waagerechter Ausrichtung konzentrisch zu den nachfolgenden Bearbeitungsstationen zugeführt und in der Zugrichtung des Rohres stetig weiterbewegt,
- auf das Kunststoffinnenrohr wird für eine Haft- und Pufferschicht ein flüssiges Klebeharz aufgegossen und mittels einer ringförmigen Rakel (Ringrakel) zu einer ringförmigen gleichmäßig dicken Klebeharzschicht geformt,
- in diese Klebeharzschicht wird ein bandförmiges Vlies (Wirrfaservlies) zum Bilden der Haft- und Pufferschicht lückenlos eingebettet,
- auf die Haft- und Pufferschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschicht zum Dorn hin verdichtet werden,
- auf die tangentiale Verstärkungsschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer weiteren axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden,
- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist,
- nach der letzten tangentialen Verstärkungsschicht wird mittels einer Ringrakel ein vorhandener Harzüberschuß abgestreift,
- auf die äußerste Verstärkungsschicht wird ein flüssiges Kunstharz aufgegossen und mittels einer Ringrakel zu einer gleichmäßig dicken Außenhaut des Kunststoffrohres geformt,
- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,
- das so gebildete Kunststoffrohr wird durch eine Härtevorrichtung hindurchgeführt, in der durch Wärmeeinwirkung und/oder durch Lichteinwirkung das Härten der Kunstharzschichten eingeleitet und zumindest zum Teil vollendet wird,
- innerhalb der Härtevorrichtung wird das Kunststoffrohr von dem dort endenden Dorn abgezogen,
- nach der Härtevorrichtung wird das fertige Kunststoffrohr mittels einer Trennvorrichtung in einzelne Längenabschnitte mit einem bestimmten Längenmaß aufgeteilt.

7. Verfahren zum kontinuierlichen Herstellen von faserverstärkten Kunststoffrohren mit einem Kunststoffinnenrohr, das mit einer Haftschicht versehen ist, die durch ein Gewebe- oder Mattenband gebildet wird, das durch Wärmebehandlung der Außenseite des Kunststoffinnenrohres in diese eingebettet wurde, mit den Verfahrensschritten:
- das Kunststoffinnenrohr wird mittels einer Zuführvorrichtung in waagerechter Ausrichtung konzentrisch zu den nachfolgenden Bearbeitungsstationen zugeführt und in der Zugrichtung des Rohres stetig weiterbewegt,
- auf die Haftschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschicht zum Dorn hin verdichtet werden,
- auf die tangentiale Verstärkungsschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstupmfförmigen Fasermantels einer den Dorn umgebenden Ringrakel zugeleitet und von dieser zum Bilden einer weiteren axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden,
- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist,
- nach der letzten tangentialen Verstärkungsschicht wird mittels einer Ringrakel ein vorhandener Harzüberschuß abgestreift,
- auf die äußerste Verstärkungsschicht wird ein flüssiges Kunstharz aufgegossen und mittels einer Ringrakel zu einer gleichmäßig dicken Außenhaut des Kunststoffrohres geformt,
- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,
- das so gebildete Kunststoffrohr wird durch eine Härtevorrichtung hindurchgeführt, in der durch Wärmeeinwirkung und/oder durch Lichteinwirkung das Härten der Kunstharzschichten eingeleitet und zumindest zum Teil vollendet wird,
- innerhalb der Härtevorrichtung wird das Kunststoffrohr von dem dort endenden Dorn abgezogen,
- nach der Härtevorrichtung wird das fertige Kunststoffrohr mittels einer Trennvorrichtung in einzelne Längenabschnitte mit einem bestimmten Längenmaß aufgeteilt.

8. Verfahren nach einem der Ansprüche 1 bis 7,
**gekennzeichnet** durch die Verfahrensschritte:
- für eine axiale Verstärkungsschicht, der keine Stützschicht unmittelbar vorangeht, wird das Kunstharz mit einem über die Mindestmenge für die axiale Verstärkungsschicht hinausgehenden Überschuß aufgegossen, der ausreicht, um damit auch die Kunstharzschicht für die unmittelbar folgende tangentiale Verstärkungsschicht zu bilden,
- die über den zweiten Führungskranz an den Dorn herangeführten Faserstränge für die axiale Verstärkungsschicht werden von der betreffenden Ringrakel aus so in die zuvor gebildete Kunstharzschicht eingebettet, daß die das Aufnahmevolumen der Faserstränge für die axiale Verstärkungsschicht übersteigende Überschußmenge durch die Fasern hindurch nach außen austritt,
- die vom zweiten Spulenträger abgezogenen Faserstränge für die tangentiale Verstärkungsschicht werden auf die axiale Verstärkungsschicht tangential aufgewickelt und dabei in die Überschußmenge eingebettet.

9. Einrichtung zum Durchführen des Verfahrens nach Anspruch 1, mit den Merkmalen:
- es ist ein Regalgatter (12) vorhanden, das eine Anzahl Spulen (13) mit Fasersträngen (14) aus Glasfasern, Kohlefasern oder Textilfasern aufweist,
- am Regalgatter (12) sind Leitvorrichungen (15) zum Abziehen der Faserstränge (14) von den Spulen (13) und zum Weiterleiten der Faserstränge (14) vorhanden,
- es ist ein Grundgestell (16) für die gemeinsame Aufnahme mehrere Arbeitsstationen und Vorrichtungen vorhanden,
- im Anfangsbereich des Grundgestells (16) ist eine Haltevorrichtung (21) für einen Dorn (22) angeordnet, mittels der der Dorn (22) in seinen Anfangsbereich mit dem Grundgestell (16) ortsfest verbunden ist.
- der Dorn (22) ist als langgestreckter zylindrischer Hohlkörper ausgebildet,
- es ist eine Abspulvorrichtung (23) für eine bandförmige auf Spulen aufgewickelte Trennfolie (25) vorhanden,
- es ist eine Leitvorrichung (26) für die Trennfolie (25) vorhanden, mittels der die von der Abspulvorrichtung (23) abgezogene Trennfolie (25) in axialer Richtung dem Dorn (22) zuleitbar ist,
- im Anfangsbereich des Dorns (22) ist eine Formvorrichtung (27) angeordnet, mittels der die von der Leitvorrichung (26) herangeleitete Trennfolie (25) um den Dorn (22) herum zu einem Trennschlauch formbar ist,
- es ist eine Verbindevorrichtung (28) vorhanden, mittels der die Ränder der zum Trennschlauch geformten Trennfolie (25) für Kunstharz undurchlässig miteinander verbindbar sind,
- es ist eine Zuführvorrichtung (33) für ein Kunstharz vorhanden, mittels der aus einem Vorratsbehälter (34) ein Kunstharz im Rückenbereich des Dorns (22) auf den Trennschlauch aufgießbar ist,
- es ist eine ringförmige Rakel (41) (Ringrakel) vorhanden, die den Dorn (22) außen umgibt und die eine bestimmte lichte Weite hat,
- unterhalb der Ringrakel (41) ist eine Auffangwanne (44) für die abgestreifte Kunstharzmenge angeordnet,
- im Anschluß an die Ringrakel (41) ist eine Erwärmungsvorrichtung (43) vorhanden, die den Dorn (22) außen umgibt und mittels der die auf dem Trennschlauch vorhandene Kunstharzschicht zu einer Innenhaut des Kunststoffrohres gelierbar ist,
- es ist eine Zuführvorrichtung (55) für ein Kunstharz vorhanden, mittels der aus einem Vorratsbehälter ein Kunstharz im Rückenbereich des Dorns (22) auf die Innenhaut aufgießbar ist,
- es ist eine Abspulvorrichtung (48) für ein auf Spulen (49) aufgewickeltes Vlies (51) in Form eines Wirrfaservlieses vorhanden,
- es ist eine Leit- und Formvorrichung (52) vorhanden, mittels der das Vlies (51) von der Abspulvorrichtung (48) zum Dorn (22) hinleitbar ist und zu einem in Längsrichtung offenen Schlauch (53) formbar ist, der den Dorn außen umgibt,
- es ist eine Ringrakel (61) vorhanden, mittels der das aufgegossene Kunstharz zu einer gleichmäßig dicken Kunstharzschicht formbar ist und mittels der zugleich der vom Vlies (51) gebildete Schlauch zum Bilden einer Stützschicht in die Kunstharzschicht einbettbar ist,
- es ist eine Zuführvorrichtung (55) für ein Kunstharz vorhanden, mittels der aus einem Vorratsbehälter ein Kunstharz im Rückenbereich des Dorns (22) aufgießbar ist,
- es ist eine Leit- und Formvorrichung (56) vorhanden, die den Dorn außen umgibt und mittels der die Fasern einer Anzahl vom Regalgatter (12) herangeleiteter Faserstränge (14) in Form eines geschlossenen kegelstumpfförmigen Fasermantels (59) zum Dorn (22) hinleitbar sind,
- es ist eine Ringrakel (61) vorhanden, mittels der das aufgegossene Kunstharz zu einer gleichmäßig dicken Kunstharzschicht formbar ist und mittels der zugleich der Fasermantel (59) zum Bilden einer axialen Verstärkungsschicht in die Kunstharzschicht einbettbar ist,
- es ist eine Zuführvorrichtung (55) für ein Kunstharz vorhanden, mittels der aus einem Vorratsbehälter ein Kunstharz im Rückenbereich des Dorns (22) aufgießbar ist,
- es ist ein kranzförmiger Spulenträger (63) vorhanden, der den Dorn (22) mittig umgibt und der an einem Lagergestell (64) drehbar gelagert ist,
- am Spulenträger (63) ist wenigstens eine Spule (68) aus einem Faserstrang (69) drehbar gelagert,
- der Spulenträger (63) ist mit einem Antrieb (65; 66; 67) mit einstellbarer Drehzahl gekoppelt,
- am Spulenträger (63) sind Leitvorrichungen (71) angeordnet, mittels der der Faserstrang (69) von jeder vorhandenen Spule (68) zum Dorn (22) hinleitbar ist und beim Umlauf des Spulenträgers (63) zum Bilden einer tangentialen Verstärkungsschicht in die Kunstharzschicht einbettbar ist,
- es ist eine Zuführvorrichtung (76) für ein Kunstharz vorhanden, mittels der aus einem Vorratsbehälter ein Kunstharz im Rückenbereich des Dorns (22) aufgießbar ist,
- es ist eine Leit- und Formvorrichtung (77) vorhanden, die den Dorn außen umgibt und mittels der die Fasern einer Anzahl vom Regalgatter (12) herangeleiteter Faserstränge (14) in Form eines geschlossenen kegelstumpfförmigen Fasermantels (79) zum Dorn (22) hinleitbar sind,
- es ist eine Ringrakel (78) vorhanden, mittels der das aufgegossene Kunstharz zu einer gleichmäßig dicken Kunstharzschicht formbar ist und mittels der zugleich der Fasermantel (79) zum Bilden einer weiteren axialen Verstärkungsschicht in die Kunstharzschicht einbettbar ist,
- es ist eine Zuführvorrichtung (76) für ein Kunstharz vorhanden, mittels der aus einem Vorratsbehälter ein Kunstharz im Rückenbereich des Dorns (22) aufgießbar ist,
- es ist ein kranzförmiger Spulenträger (81) vorhanden, der den Dorn (22) mittig umgibt und der an einem Lagergestell drehbar gelagert ist,
- am Spulenträger (81) ist wenigstens eine Spule (82) aus einem Faserstrang (83) drehbar gelagert,
- der Spulenträger (81) ist mit einem Antrieb mit einstellbarer Drehzahl gekoppelt, dessen Drehrichtung umgekehrt zu derjenigen des vorangehenden Spulenträgers ist,
- am Spulenträger (81) sind Leitvorrichtungen angeordnet, mittels der der Faserstrang (82) von jeder vorhandenen Spule (82) zum Dorn (22) hinleitbar ist und beim Umlauf des Spulenträgers (81) zum Bilden einer weiteren tangentialen Verstärkungsschicht in die Kunstharzschicht einbettbar ist,
- bei Bedarf sind weiter vorhanden, je
- - eine Zuführvorrichtung (84) für ein flüssiges Kunstharz,
- - eine Leit- und Formvorrichtung (85) zum Heranleiten von Fasersträngen (14) und zum Weiterleiten deren Fasern in Form eines kegelstumpfförmigen Fasermantels (86) zum Dorn (22) hin,
- - eine Ringrakel (87) zum Formen der Kunstharzschicht und zum Einbetten des Fasermantels (86) in die Kunstharzschicht zwecks Bilden einer weiteren axialen Verstärkungsschicht,
- - eine Zuführvorrichtung (84) für flüssiges Kunstharz und
- - ein Spulenträger (88) zum Bilden einer weiteren tangentialen Verstärkungsschicht, wobei die Drehrichtung dieses Spulenträgers (88) entgegengesetzt zur Drehrichtung des vorangehenden Spulenträgers (63) ist,
- im Anschluß an den letzten Spulenträger (88) zum Bilden einer tangentialen Verstärkungsschicht ist eine Ringrakel (92) angeordnet, mittels der ein vorhandener Überschuß an Kunstharz abstreifbar ist,
- es ist eine Zuführvorrichtung (94) für ein Kunstharz vorhanden, mittels der aus einem Vorratsbehälter ein Kunstharz für eine Außenhaut des Kunststoffrohres im Rückenbereich des Dorns (22) aufgießbar ist,
- es ist eine Ringrakel (95) vorhanden, mittels der das aufgegossene Kunstharz zum Bilden einer Außenhaut des Kunststoffrohres zu einer gleichmäßig dicken Kunstharzschicht formbar ist,
- es ist eine Abspulvorrichtung (96) für eine bandförmige, auf Spulen aufgewickelte Trennfolie (98) vorhanden,
- es ist eine Leit- und Formvorrichtung (99) vorhanden, mittels der die Trennfolie (98) von der Abspulvorrichtung (96) zum Dorn (22) hinleitbar ist und zu einem in der Längsrichtung offenen Schlauch formbar ist, der die Außenhaut außen umgibt, wobei die Ränder der Trennfolie (88) im Bereich der Unterseite des Dorns (22) stumpf aneinanderstoßen,
- im Anschluß an die Leit- und Formvorrichtung (99) für den Trennschlauch ist eine Härtevorrichtung (103) angeordnet, die das Kunststoffrohr außen umgibt,
- die Härtevorrichtung (103) weist Wärmequellen und/oder Strahlungsquellen (104) auf, die um das Kunststoffrohr (100) herum angeordnet sind,
- die Härtevorrichtung (103) weist für das Kunststoffrohr (100) ein Führungsrohr (109) auf, dessen lichte Weite zumindest annähernd gleich der Summe aus dem Solldurchmesser des Kunststoffrohres (100) und der zweimaligen Wanddicke des Trennschlauches ist, dessen Wand zumindest abschnittweise und/oder flächenweise für die von den Wärmequellen und/oder Strahlungsquellen abgegebene Wärme bzw. Strahlung durchlässig ist und das sich in der Zugrichtung über die Härtevorrichtung (103) hinaus erstreckt, wobei seine Längserstreckung so bemessen ist, daß es das Kunststoffrohr (100) bis mindestens zu derjenigen Stelle seiner Bewegungsbahn umgibt, ab der die Außenhaut des Kunststoffrohres (100) eine ausreichende Formfestigkeit für die Abstützung des Kunststoffrohres (100) auf Tragrollen (111) hat,
- der Dorn (22) endet zumindest annähernd am hinteren Ende der Härtevorrichtung (103),
- an die Härtevorrichtung (103) schließt eine Aushärtestrecke (112) an, die Wärmedämmvorrichtungen (113) aufweist, die das Kuntstoffrohr (100) außen umgeben,
- im Anschluß an die Aushärtestrecke (112) ist eine Zugvorrichtung (118) angeordnet, mittels der das Kunststoffrohr (100) durch Reibschluß in der Zugrichtung bewegbar ist,
- zwischen dem hinteren Ende des Führungsrohres (109) der Härtevorrichtung (103) und der Zugvorrichtung (118) sind Tragrollen (111) angeordnet, die auf die Höhenlage der Unterseite des Kunststoffrohres (100) einstellbar sind und die das Kunststoffrohr (100) bis zur Zugvorrichtung (118) hin tragen,
- im Anschluß an die Zugvorrichtung (118) ist eine Trennvorrichtung (125) vorhanden, die mittels einer Führung (127) in der Bewegungsrichtung des Kunststoffrohres (100) verfahrbar ist und mittels der das Kunststoffrohr (100) in einzelne Längenabschnitte (126) mit einem bestimmten Längenmaß aufteilbar ist,
- die Trennvorrichtung (125) weist eine Klemmvorrichtung (128) auf, mittels der sie während eines Trennvorganges am Kunststoffrohr (100) festklemmbar ist,
- die Trennvorrichtung (125) weist eine Rückholvorrichtung auf, mittels der die Trennvorrichtung nach Abschluß eines Trennvorganges in ihre Ausgangsstellung zurückbewegbar ist.

10. Einrichtung nach Anspruch 9,
**gekennzeichnet** durch die Merkmale:
- die Verbindevorrichtung (28) für die Trennfolie (25) weist eine Abspulvorrichtung (29) für ein Klebeband (31) auf,
- im Umfangsbereich der Ränder der Trennfolie (25) ist eine Andrückrolle (32) federnd angeordnet, mittels der das von der Abspulvorrichtung (29) herangeleitete Klebeband (31) an die Ränder der Trennfolie (25) andrückbar ist.

11. Einrichtung nach Anspruch 10,
**gekennzeichnet** durch das Merkmal:
- die Verbindevorrichtung ist als Ultraschall-Schweißvorrichtung ausgebildet, mittels der die einander überlappenden Ränder der Trennfolie (25) unmittelbar miteinander verbindbar sind.

12. Einrichtung nach einem oder mehreren der Ansprüche 9 bis 11,
**gekennzeichnet** durch die Merkmale:
- die Ringrakel (41) für die Kunstharzschicht zum Bilden einer Innenhaut ist an einer Führungsvorrichtung (42) angeordnet, mittels der die Ringrakel (41) in der Längsrichtung des Dorns (22) unverschieblich und in der Normalebene zur Längsachse des Dorns (22) beweglich geführt ist,
- die Führungsvorrichtung (42) weist mindestens eine Führungsrolle, bevorzugt jedoch zwei Führungsrollen (156) auf, die sich über den Trennschlauch auf dem Dorn (22) abstützen und deren Laufebene zumindest annähernd durch die Längsachse des Dorns (22) hindurchgeht, wobei sie untereinander einen Winkel zwischen 60° und 120°, bevorzugt einen Winkel von 90°, einschließen,
- die Führungsrollen (156) sind in einem Längenabschnitt des Dorns (22) angeordnet, der in der Zugrichtung des Kunststoffrohres (100) vor der Mündung (39) der Zuführvorrichtung (33) für das Kunstharz für die Innenhaut gelegen ist.

13. Einrichtung zum Durchführen des Verfahrens nach Anspruch 6, mit den Merkmalen:
- es ist ein Regalgatter (12) vorhanden, das eine Anzahl Spulen (13) mit Fasersträngen (14) aus Glasfasern, Kohlefasern oder Textilfasern aufweist,
- am Regalgatter (12) sind Leitvorrichungen (15) zum Abziehen der Faserstränge (14) von den Spulen (13) und zum Weiterleiten der Faserstränge (14) vorhanden,
- es ist ein Grundgestell (16) für die gemeinsame Aufnahme mehrere Arbeitsstationen und Vorrichtungen vorhanden,
- im Anfangsbereich des Grundgestells (16) ist eine Zuführvorrichtung (141) für ein Kunststoffinnenrohr (140) vorhanden, mittels der das Kunststoffinnenrohr (140) in der Fluchtlinie der Durchlaßöffnungen der nachfolgenden Arbeitsstationen diesen zuführbar ist,
- es ist eine Zuführvorrichtung (142) für ein Klebeharz vorhanden, mittels der aus einem Vorratsbehälter ein Klebeharz im Rückenbereich des Kunststoffinnenrohres (140) auf dieses aufgießbar ist,
- es ist eine ringförmige Rakel (143) (Ringrakel) vorhanden, die das Kunststoffinnenrohr (140) außen umgibt und mittels der das aufgegossene Klebeharz zu einer ringförmigen gleichmäßig dicken Klebeharzschicht formbar ist,
- unterhalb der Ringrakel (143) ist eine Auffangwanne für die abgestreifte Klebeharzmenge angeordnet,
- es ist eine Abspulvorrichtung (144) für ein auf Spulen (145) aufgewickeltes Vlies (146) in Form eines Wirrfaservlieses vorhanden,
- es ist eine Leit- und Formvorrichung (147) vorhanden, mittels der das Vlies (146) von der Abspulvorrichtung (144) zum Kunststoffinnenrohr (140) hinleitbar ist und zu einem in Längsrichtung offenen Schlauch formbar ist, der das Kunststoffinnenrohr (140) außen umgibt,
- es ist eine Ringrakel (148) vorhanden, mittels der der vom Vlies (146) gebildete Schlauch zum Bilden einer Haft-und Pufferschicht in die Klebeharzschicht einbettbar ist und zugleich die überschüssige Klebeharzmenge abstreifbar ist,
- es ist eine Zuführvorrichtung (55) für ein Kunstharz vorhanden, mittels der aus einem Vorratsbehälter ein Kunstharz im Rückenbereich des Kunststoffinnenrohres (140) aufgießbar ist,
- es ist eine Leit- und Formvorrichtung (56) vorhanden, die das Kunststoffinnenrohr (140) außen umgibt und mittels der die Fasern einer Anzahl vom Regalgatter (12) herangeleiteter Faserstränge (14) in Form eines geschlossenen kegelstumpfförmigen Fasermantels (59) zum Kunststoffinnenrohr (140) hinleitbar sind,
- es ist eine Ringrakel (61) vorhanden, mittels der das aufgegossene Kunstharz zu einer gleichmäßig dicken Kunstharzschicht formbar ist und mittels der zugleich der Fasermantel (59) zum Bilden einer axialen Verstärkungsschicht in die Kunstharzschicht einbettbar ist,
- es ist eine Zuführvorrichtung (55) für ein Kunstharz vorhanden, mittels der aus einem Vorratsbehälter ein Kunstharz im Rückenbereich des Kunststoffinnenrohres (140) aufgießbar ist,
- es ist ein kranzförmiger Spulenträger (63) vorhanden, der das Kunststoffinnenrohr (140) ) mittig umgibt und der an einem Lagergestell (64) drehbar gelagert ist,
- am Spulenträger (63) ist wenigstens eine Spule (68) aus einem Faserstrang (69) drehbar gelagert,
- der Spulenträger (63) ist mit einem Antrieb (65; 66; 67) mit einstellbarer Drehzahl gekoppelt,
- am Spulenträger (63) sind Leitvorrichungen (71) angeordnet, mittels der der Faserstrang (69) von jeder vorhandenen Spule (68) zum Kunststoffinnenrohr (140) ) hinleitbar ist und beim Umlauf des Spulenträgers (63) zum Bilden einer tangentialen Verstärkungsschicht in die Kunstharzschicht einbettbar ist,
- es ist eine Zuführvorrichtung (76) für ein Kunstharz vorhanden, mittels der aus einem Vorratsbehälter ein Kunstharz im Rückenbereich des Kunststoffinnenrohres (140) ) aufgießbar ist,
- es ist eine Leit- und Formvorrichtung (77) vorhanden, die das Kunststoffinnenrohr (140) außen umgibt und mittels der die Fasern einer Anzahl vom Regalgatter (12) herangeleiteter Faserstränge (14) in Form eines geschlossenen kegelstumpfförmigen Fasermantels (79 ) zum Kunststoffinnenrohr (140) hinleitbar sind,
- es ist eine Ringrakel (78) vorhanden, mittels der das aufgegossene Kunstharz zu einer gleichmäßig dicken Kunstharzschicht formbar ist und mittels der zugleich der Fasermantel (79) zum Bilden einer weiteren axialen Verstärkungsschicht in die Kunstharzschicht einbettbar ist,
- es ist eine Zuführvorrichtung (76) für ein Kunstharz vorhanden, mittels der aus einem Vorratsbehälter ein Kunstharz im Rückenbereich des Kunststoffinnenrohres (140) aufgießbar ist,
- es ist ein kranzförmiger Spulenträger (81) vorhanden, der das Kunststoffinnenrohr (140) ) mittig umgibt und der an einem Lagergestell drehbar gelagert ist,
- am Spulenträger (81) ist wenigstens eine Spule (82) aus einem Faserstrang (83) drehbar gelagert,
- der Spulenträger (81) ist mit einem Antrieb mit einstellbarer Drehzahl gekoppelt, dessen Drehrichtung umgekehrt zu derjenigen des vorangehenden Spulenträgers ist,
- am Spulenträger (81) sind Leitvorrichtungen angeordnet, mittels der der Faserstrang (82) von jeder vorhandenen Spule (82 ) zum Kunststoffinnenrohr (140) hinleitbar ist und beim Umlauf des Spulenträgers (81) zum Bilden einer weiteren tangentialen Verstärkungsschicht in die Kunstharzschicht einbettbar ist,
- bei Bedarf sind weiter vorhanden, je
- - eine Zuführvorrichtung (84) für ein flüssiges Kunstharz,
- - eine Leit- und Formvorrichtung (85) zum Heranleiten von Fasersträngen (14) und zum Weiterleiten deren Fasern in Form eines kegelstumpfförmigen Fasermantels (86) zum Kunststoffinnenrohr (140) hin,
- - eine Ringrakel (87) zum Former der Kunstharzschicht und zum Einbetten des Fasermantels (86) in die Kunstharzschicht zwecks Bilden einer weiteren axialen Verstärkungsschicht,
- - eine Zuführvorrichtung (84) für flüssiges Kunstharz, und
- - ein Spulenträger (88) zum Bilden einer weiteren tangentialen Verstärkungsschicht, wobei die Drehrichtung dieses Spulenträgers (88) entgegengesetzt zur Drehrichtung des vorangehenden Spulenträgers (63) ist,
- im Anschluß an den letzten Spulenträger (88) zum Bilden einer tangentialen Verstärkungsschicht ist eine Ringrakel (92) angeordnet, mittels der ein vorhandener Überschuß an Kunstharz abstreifbar ist,
- es ist eine Zuführvorrichtung (94) für ein Kunstharz vorhanden, mittels der aus einem Vorratsbehälter ein Kunstharz für eine Außenhaut des Kunststoffrohres im Rückenbereich des Kunststoffinnenrohres (140) aufgießbar ist,
- es ist eine Ringrakel (95) vorhanden, mittels der das aufgegossene Kunstharz zum Bilden einer Außenhaut des Kunststoffrohres zu einer gleichmäßig dicken Kunstzharzschicht formbar ist,
- es ist eine Abspulvorrichtung (96) für eine bandförmige, auf Spulen aufgewickelte Trennfolie (98) vorhanden,
- es ist eine Leit- und Formvorrichtung (99) vorhanden, mittels der die Trennfolie (98) von der Abspulvorrichtung (96 ) zum Kunststoffinnenrohr (140) hinleitbar ist und zu einem in der Längsrichtung offenen Schlauch formbar ist, der die Außenhaut außen umgibt, wobei die Ränder der Trennfolie (88 ) im Bereich der Unterseite des Kunststoffinnenrohres (140) stumpf aneinanderstoßen,
- im Anschluß an die Leit- und Formvorrichtung (99) für den Trennschlauch ist eine Härtevorrichtung (103) angeordnet, die das Kunststoffrohr außen umgibt,
- die Härtevorrichtung (103) weist Wärmequellen und/oder Strahlungsquellen (104) auf, die um das Kunststoffrohr (100) herum angeordnet sind,
- die Härtevorrichtung (103) weist für das Kunststoffrohr (100) ein Führungsrohr (109) auf, dessen lichte Weite zumindest annähernd gleich der Summe aus dem Solldurchmesser des Kunststoffrohres (100) und der zweimaligen Wanddicke des Trennschlauches ist, dessen Wand zumindest abschnittweise und/oder flächenweise für die von den Wäremquellen und/oder Strahlungsquellen abgegebene Wärme bzw. Strahlung durchlässig ist und das sich in der Zugrichtung über die Härtevorrichtung (103) hinaus erstreckt, wobei seine Längserstreckung so bemessen ist, daß es das Kunststoffrohr (100) bis mindestens zu derjenigen Stelle seiner Bewegungsbahn umgibt, ab der die Außenhaut des Kunststoffrohres (100) eine ausreichende Formfestigkeit für die Abstützung des Kunststoffrohres (100) auf Tragrollen hat (111) hat,
- das Kunststoffinnenrohr (140) endet zumindest annähernd am hinteren Ende der Härtevorrichtung (103),
- an die Härtevorrichtung (103) schließt eine Aushärtestrecke (112) an, die Wärmedämmvorrichtungen (113) aufweist, die das Kuntstoffrohr (100) außen umgeben,
- im Anschluß an die Aushärtestrecke (112) ist eine Zugvorrichtung (118) angeordnet, mittels der das Kunststoffrohr (100) durch Reibschluß in der Zugrichtung bewegbar ist,
- zwischen dem hinteren Ende des Führungsrohres (109) der Härtevorrichtung (103) und der Zugvorrichtung (118) sind Tragrollen (111) angeordnet, die auf die Höhenlage der Unterseite des Kunststoffrohres (100) einstellbar sind und die das Kunststoffrohr (100) bis zur Zugvorrichtung (118) hin tragen,
- im Anschluß an die Zugvorrichtung (118) ist eine Trennvorrichtung (125) vorhanden, die mittels einer Führung (127) in der Bewegungsrichtung des Kunststoffrohres (100) verfahrbar ist und mittels der das Kunststoffrohr (100) in einzelne Längenabschnitte (126) mit einem bestimmten Längenmaß aufteilbar ist,
- die Trennvorrichtung (125) weist eine Klemmvorrichtung (128) auf, mittels der sie während eines Trennvorganges am Kunststoffrohr (100) festklemmbar ist,
- die Trennvorrichtung (125) weist eine Rückholvorrichtung auf, mittels der die Trennvorrichtung nach Abschluß eines Trennvorganges in ihre Ausgangsstellung zurückbewegbar ist.

14. Einrichtung nach einem der Ansprüche 9 bis 13,
**gekennzeichnet** durch das Merkmal:
- zumindest bei einem Teil der Zuführvorrichtungen für ein flüssiges Kunstharz, bevorzugt bei allen Zuführvorrichtungen (33; 55; 76; 84; 94) ist die unterhalb der zugehörigen Ringrakel (41) angeordnete Auffangwanne (44) über eine Rückführleitung (36) mit dem Vorratsbehälter (34) der Zuführvorrichtung (33) verbunden.

15. Einrichtung nach einem oder mehreren der Ansprüche 9 bis 14,
**gekennzeichnet** durch die Merkmale:
- die Abspulvorrichtung (48) für das Vlies (51) zum Bilden einer Stützschicht ist mit zwei Spulenträgern ausgerüstet, auf deren je eine Spule (49) eines bandförmigen Vlieses (51) angeordnet ist, dessen Breite zumindest annähernd gleich dem halben Außenumfang der Innenhaut ist,
- die beiden Spulen (49) oder zumindest je eine Leitvorrichtung für das von ihnen abgewickelte Vlies sind beiderseits des Dorns (22) in einer solchen Höhe angeordnet, daß die Mitte der Vliesbänder (51) sich zumindest annähernd in der gleichen Horizontalebene wie die Längsachse des Dorns (22) befindet.

16. Einrichtung nach Anspruch 15,
**gekennzeichnet** durch das Merkmal:
- die Leit- und Formvorrichtung (52) für das Vlies (51) weist auf beiden Seiten des Dorns (22) je eine Leitschaufel (161) auf, deren dem Dorn (22) zugekehrte Innenfläche (162) zumindest in ihrem Endbereich konkav gekrümmt ist, mittels der das Vliesband zumindest näherungsweise zur Mantelfläche eines halben Kreiszylinders verformbar ist.

17. Einrichtung nach Anspruch 16,
**gekennzeichnet** durch das Merkmal:
- die Mündung (62') der Zuführvorrichtung (55) für das Kunstharz für die Stützschicht ist im Bereich der Leitschaufeln (161) der Leit- und Formvorrichtung (52) für das Vlies (51) in der Längsrichtung des Dorns (22) an einer Stelle angeordnet, an der die einander sich annähernden Ränder der beiden Vliesbänder (51) gerade noch einen ausreichend großen Abstand voneinander haben.

18. Einrichtung nach einem oder mehreren der Ansprüche 9 bis 17,
**gekennzeichnet** durch die Merkmale:
- die Leit- und Formvorrichtung (56) für die Faserstränge (14) und die Fasern für eine axiale Verstärkungsschicht weist einen Leitkranz (164) und vorzugsweise einen Leitring (165) auf, der bzw. die beide den Dorn (22) außen umgeben,
- der Leitkranz (164) weist eine der Anzahl der zuzuleitenden Faserstränge (14) entsprechende Anzahl Durchgangslöcher (166) auf, die entlang einem einzigen Kreisring oder entlang mehrerer mittig zueinander gelegener Kreisringe verteilt angeordnet sind und durch die je einer der Faserstränge (14) hindurchgezogen ist,
- der Leitring (165) weist eine ringförmig geschlossene Innenfläche (166) auf, deren lichte Weite kleiner als der kleinste Kreisring des Anordnungsmusters der Durchgangslöcher (166) im Leitkranz (164) ist und nur wenig größer als der Außendurchmesser des durch ihn hindurchbewegten Schichtaufbaues für das Kunststoffrohr (100) ist.

19. Einrichtung nach Anspruch 18,
**gekennzeichnet** durch das Merkmal:
- die Mündung der Zuführvorrichtung (55; 62) für das Kunstharz für die axiale Verstärkungsschicht ist im Längenabschnitt kurz vor dem Leitkranz (164) oder, bevorzugt, im Längenabschnitt zwischen dem Leitkranz (164) und dem Leitring (165) angeordnet, wobei die Zuleitung (62) vorzugsweise innerhalb der innersten Kegelstumpf-Mantelfläche verläuft, die durch die vom Leitkranz (164) zum Leitring (165) verlaufenden Faserstränge (14) aufgespannt wird.

20. Einrichtung nach einem oder mehreren der Ansprüche 9 bis 19,
**gekennzeichnet** durch die Merkmale:
- die Zuführvorrichtung (55) für das Kunstharz für die Stützschicht ist für einen Mengenstrom des Kunstharzes bemessen, der größer als der allein für die Stützschicht erforderliche Mengenstrom ist und der mindestens noch für die nächste axiale Verstärkungsschicht, vorzugsweise auch für die erste tangentiale Verstärkungsschicht, ausreicht,
- dementsprechend entfällt eine eigene Zuführvorrichtung für das Kunstharz für die nächste axiale Verstärkungsschicht und gegebenenfalls auch eine eigene Zuführvorrichtung für das Kunstharz für die nächste tangentiale Verstärkungsschicht.

21. Einrichtung nach einem oder mehreren der Ansprüche 9 bis 20,
**gekennzeichnet** durch die Merkmale:
- die Zuführvorrichtung (76) für das Kunstharz für die axiale Verstärkungsschicht, der keine Stützschicht vorangeht, vorzugsweise auch die Zuführvorrichtung für jede weitere axiale Verstärkungsschicht, ist für einen Mengenstrom des Kunstharzes bemessen, der größer als der allein für die axiale Verstärkungsschicht erforderliche Mengenstrom ist und der mindestens noch für die nachfolgende tangentiale Verstärkungsschicht ausreicht,
- dementsprechend entfällt eine eigene Zuführvorrichtung für das Kunstharz für die tangentiale Verstärkungsschicht.

22. Einrichtung nach einem oder mehreren der Ansprüche 9 bis 21,
**gekennzeichnet** durch die Merkmale:
- am Spulenträger (63) sind mehrere Spulen (68) gleichmäßig verteilt angeordnet,
- bevorzugt ist für jede der Spulen (68) eine Bremsvorrichtung vorhanden, deren Bremskraft mittels je einer Abtastvorrichtung zum Abtasten des Außendurchmessers der Spule (62) selbsttätig einstellbar ist.

23. Einrichtung nach einem oder mehreren der Ansprüche 9 bis 22,
**gekennzeichnet** durch das Merkmal:
- jeder Spulenträger (63) ist über je ein stufenlos einstellbares Gertriebe (65) mit einer gemeinsamen Antriebswelle (66) (Fig. 4) gekoppelt, die am Grundgestell (16) gelagert ist und die sich von einem Antriebsmotor (67) zu allen angetriebenen Vorrichtungen (63; 81; 88) hin erstreckt.

24. Einrichtung nach einem der Ansprüche 9 bis 23,
**gekennzeichnet** durch die Merkmale:
- für jeden der Faserstränge (14) für eine axiale Verstärkungsschicht ist eine einstellbare Spannungsvorrichtung vorhanden, mittels der die Spannung im Faserstrang auf einen bestimmten Wert einstellbar ist,
- bevorzugt sind die Spannvorrichtungen in der Nähe des Leitkranzes (164) der Leit- und Formvorrichtung (56) angeordnet.

25. Einrichtung nach einem oder mehreren der Ansprüche 9 bis 24,
**gekennzeichnet** durch das Merkmal:
- das Führungsrohr (109) in der Härtevorrichtung (103) weist an seiner Unterseite einen schmalen Längsspalt auf.

26. Einrichtung nach einem oder mehreren der Ansprüche 9 bis 25,
**gekennzeichnet** durch das Merkmal:
- das Führungsrohr (109) in der Härtevorrichtung (103) ist als Glasrohr ausgebildet, das für Infrarotlicht durchlässig ist.

27. Einrichtung nach einem oder mehreren der Ansprüche 9 bis 26,
**gekennzeichnet** durch die Merkmale:
- das Führungsrohr (109) in der Härtevorrichtung (103) ist als Metallrohr ausgebildet, das vorzugsweise aus einem korrosionsarmen und abriebfesten Stahl hergestellt ist,
- das Führungsrohr (109) weist eine größere Anzahl Durchgangslöcher auf, die in der Längsrichtung und in der Umfangsrichtung des Führungsrohres (109) zueinander versetzt angeordnet sind.

28. Einrichtung nach einem oder mehreren der Ansprüche 9 bis 27,
**gekennzeichnet** durch die Merkmale:
- die Wärmedämmvorrichtung der Aushärtestrecke (112) wird durch eine Anzahl Abdeckhauben (113) gebildet, die zumindest näherungsweise als Hohlzylinder ausgebildet sind und deren Umfangswand wärmedämmend ausgebildet ist,
- die Abdeckhauben (113) sind mittels einer Längsführung (115) entlang dem Kunststoffrohr (100) verschiebbar geführt,
- die Längsführung (115) ist vorzugsweise um mindestens die Länge einer einzelnen Abdeckhaube (113) länger als die Summe der Länge aller Abdeckhauben (113).

29. Einrichtung nach einem oder mehreren der Ansprüche 9 bis 28,
**gekennzeichnet** durch die Merkmale:
- die Zugvorrichtung (118) wird durch zwei oder mehr Kettenförderer (119) gebildet, die vorzugsweise paarweise diametral in Bezug auf das Kunststoffrohr (100) angeordnet sind,
- die Kettenförderer (119) weisen Rollenketten (121) auf, die zumindest beim ziehenden Trum von Führungsschienen (122) geführt werden,
- die Rollenketten (121) sind mit Winkellaschen ausgerüstet, an denen Mitnehmerstollen (123) befestigt sind, die aus einem Elastomer hergestellt sind.

30. Einrichtung nach einem oder mehreren der Ansprüche 9 bis 29,
**gekennzeichnet** durch die Merkmale:
- die Klemmvorrichtung (128) weist zwei Paar Klemmbacken (129) auf, von denen das eine Klemmbackenpaar vor und das andere Klemmbackenpaar hinter dem Trennwerkzeug (132) der Trennvorrichtung (125) angeordnet ist,
- die Klemmbacken (129) sind vorzugsweise mittels pneumatischer Kolbenantriebe (131) betätigbar.

31. Einrichtung nach einem oder mehreren der Ansprüche 9 bis 30,
**gekennzeichnet** durch das Merkmal:
- die Rückholvorrichtung der Trennvorrichtung (125) weist einen pneumatischen Kolbenantrieb auf.

32. Einrichtung nach einem oder mehreren der Ansprüche 9 bis 31,
**gekennzeichnet** durch die Merkmale:
- der Dorn (22) weist mehrere zylindrische Längenabschnitte auf, deren Außendurchmesser von der Haltevorrichtung (21) aus stufenweise verringert ist,
- je eine Übergangsstelle von einer Durchmesserstufe zur nächsten liegt in der Bewegungsrichtung des Kunststoffrohres (100) unmittelbar neben der Aufwickelstelle des Faserstranges (69; 83; 91) für eine tangentiale Verstärkungsschicht,
- eine weitere Übergangsstelle liegt im Bereich der Härtevorrichtung (103).

33. Einrichtung nach Anspruch 32,
**gekennzeichnet** durch die Merkmale:
- der Dorn (22) ist aus mehreren selbständigen Eizelstücken zusammengesetzt, die bevorzugt mittels je einer Gewindeverbindung lösbar miteinander verbunden sind,
- die Verbindungsstellen der Einzelstücke liegen bevorzugt an den Übergangsstellen von einer Durchmesserstufe zur nachsten.

34. Einrichtung nach Anspruch 32 oder 33,
**gekennzeichnet** durch die Merkmale:
- im Anfangsbereich des Dorns (22) ist ein Anschluß für ein Druckgas, insbesondere Druckluft, vorhanden, mittels dessen ein unter einem gewissen Überdruck stehendes Gas in den Innenraum des Dorns (22) einleitbar ist,
- am Dorn sind an mehreren Stellen seiner Längserstreckung radiale Durchgangslöcher vorhanden, die sich vom Innenraum des Dorns bis zu seiner Außenseite erstrecken,
- die Durchgangslöcher sind bevorzugt an wenigstens einem Teil der Übergangsstellen oder in der Nachbarschaft der Übergangsstellen gelegen,
- vorzugsweise werden die Durchgangslöcher durch radiale Ausnehmungen in der Stirnfläche der Einzelstücke des Dorns (22) gebildet.
- an der Anschlußstelle und mindestens im Bereich nach dem letzten Durchgangsloch ist je eine Schottwand vorhanden, die den Innenraum des Dorns (22) nach außen abschließt.

35. Einrichtung nach Anspruch 34,
**gekennzeichnet** durch die Merkmale:
- der Innenraum desjenigen Längenabschnittes des Dorns (22), der im Bereich der Härtevorrichtung (103) gelegen ist, ist gegenüber demjenigen des vorangehenden Längenabschnittes durch eine Schottwand abgeschlossen,
- dieser Längenabschnitt weist einen Anschluß für eine im Inneren des Dorns angeordnete Druckgasleitung auf, deren Überdruck höher als der Überdruck in den vorangehenden Längenabschnitten des Dornes eingestellt ist.

36. Einrichtung nach einem oder mehreren der Ansprüche 9 bis 35,
**gekennzeichnet** durch die Merkmale:
- die Ränder ( ) der Seitenwangen (173) der Leit- und Formvorrichtung (99) verlaufen von einer oberhalb des Kunststoffrohres (100) gelegenen Einlaufschulter (174) für die Trennfolie (98) aus in der Längsrichtung des Kunststoffrohres (100) um dieses herum stetig aufeinander zu und nähern sich in der lotrechten Meridianebene einander bis auf einen sehr kleinen Restspalt (175),
- die Seitenflächen (176; 177) der Ränder (172) der Seitenwangen (173) laufen zumindest im Bereich des Restspaltes (175) von der Innenkante (176) zur Außenkante (179) hin unter einem gewissen Winkel auseinander,
- in der Nachbarschaft der Leit- und Formvorrichtung (99) ist eine Ringrakel (101) angeordnet, die nicht vollständig geschlossen ist sondern in der lotrechten Meridianebene unten einen Restspalt (182) aufweist,
- die Seitenflächen des Restspaltes (182) der Ringrakel (101) laufen von der Innenkante (178) zur Außenkante (179) hin unter einem gewissen Winkel auseinander.

37. Einrichtung nach Anspruch 36,
**gekennzeichnet** durch die Merkmale:
- in der Bewegungsrichtung des Kunststoffrohres (100) ist hinter der Ringrakel (101) ein Abstreifer (185) angeordnet, dessen Abstreifkante (186) auf das Kunststoffrohr (100) abgestimmt ist,
- die Auffangwanne (102) unterhalb der Ringrakel (101) erstreckt sich einerseits bis in den Bereich des Abstreifers (185) und andererseits bis in den Bereich der Leit- und Formvorrichtung (99) hin.

## Claims

1. Method of continuous production of fibre-reinforced plastic pipes, with the method steps:
- a strip-like separating film is continuously drawn onto a horizontally aligned mandrel, which is secured in its starting region by a holding device and is arranged floating from there, the separating film being drawn in the longitudinal direction of the mandrel and thus formed into a separating hose enveloping the mandrel, the edges of the separating film being impermeably connected to one another,
- the separating hose is continuously moved on in the direction of drawing the plastic pipe through all the following processing stations,
- a liquid synthetic resin is poured onto the separating hose and formed into an annular synthetic resin layer of uniform thickness by an annular wiper (ring wiper),
- this synthetic resin layer is brought to gelation by the effect of heat in order to form an inner skin of the plastic pipe,
- a liquid synthetic resin is poured onto the inner skin and a non-woven fabric in strip form is embedded without gaps into the synthetic resin layer which is forming and thus forms a supporting layer,
- a liquid synthetic resin from which a synthetic resin layer is formed is poured onto the supporting layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form an axial reinforcing layer,
- a liquid synthetic resin from which a synthetic resin layer is formed is poured onto the axial reinforcing layer,
- from a ring-shaped spool carrier, which rotates about the mandrel in a specific direction and has at least one spool with a plurality of fibres in the form of a fibre strand, the fibre strand is drawn from the spool or spools, is wound tangentially onto the first reinforcing layer with the smallest possible pitch angle and thereby embedded into the synthetic resin layer in order to form a tangential reinforcing layer, and at the same time the fibres of the axial reinforcing layer lying below it are compressed towards the mandrel,
- a liquid synthetic resin from which a synthetic resin layer is formed is poured onto the tangential reinforcing layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form a further axial reinforcing layer,
- a liquid synthetic resin from which a synthetic resin layer is formed is poured onto the axial reinforcing layer,
- from a further ring-shaped spool carrier, which rotates about the mandrel in the opposite direction to the preceding spool carrier and has at least one spool with a plurality of fibres in the form of a fibre strand, the fibre strand is drawn from the spool or spools, is wound tangentially onto the axial reinforcing layer with the smallest possible pitch angle and thereby embedded into the synthetic resin layer in order to form a further tangential reinforcing layer, and at the same time the fibres of the axial reinforcing layer lying below it are compressed towards the mandrel,
- when required a further axial reinforcing layer and a further tangential reinforcing layer are each formed on this tangential reinforcing layer, the direction of rotation of the spool carrier used for this being the reverse of that of the preceding spool carrier,
- after the last tangential reinforcing layer any excess of resin which is present is wiped off by means of a ring wiper,
- a liquid synthetic resin is poured onto the first reinforcing layer and formed by means of a ring wiper into an outer skin of uniform thickness for the plastic pipe,
- by means of a guiding and forming device a strip-shaped separating film is continuously applied in the longitudinal direction of the mandrel and formed into a separating hose enveloping the outer skin,
- the plastic pipe thus formed is passed through a hardening device in which by the effect of heat and/or light the hardening of the synthetic resin layers is initiated and is at least partially completed,
- within the hardening device the plastic pipe is drawn off from the mandrel which ends there,
- after the hardening device the finished plastic pipe is divided by means of a cutting device into individual lengths with a specific length dimension.

2. Method according to Claim 1, characterised by the method step:
- the non-woven fabric for the supporting layer is drawn off either in the form of one strip from one spool, or preferably in the form of two or more strips from the corresponding number of spools which is or are arranged on a ring-shaped spool carrier rotating about the mandrel, the fabric then being wound onto the inner skin without gaps and without overlapping and thereby embedded into the second synthetic resin layer formed on the inner skin.

3. Method according to Claim 1, characterised by the method step:
- the non-woven fabric is drawn off in the form of a strip, the width of which is at least approximately equal to the periphery of the supporting layer, from a spool which is arranged above the mandrel, and by means of a guiding and forming device is brought up to the mandrel on all sides and embedded into the second synthetic resin layer.

4. Method according to Claim 1, characterised by the method step:
- the non-woven fabric is drawn off in the form of two strips, the overall width of which is at least approximately equal to the periphery of the supporting layer, each of the strips being drawn off from one of the spools which are arranged on both sides of the mandrel and diametrally with respect thereto, and by means of a guiding and forming device are brought up to the mandrel on all sides and embedded into the synthetic resin layer.

5. Method according to Claim 1 in conjunction with one of Claims 2 to 4, characterised by the method steps:
- the synthetic resin poured onto the inner skin for the supporting layer is poured with an excess which exceeds the minimum quantity for the supporting layer and is sufficient to form the synthetic resin layer at least for the first axial reinforcing layer, and preferably also simultaneously for the first tangential reinforcing layer,
- the non-woven fabric for the supporting layer is embedded into this synthetic resin layer so that the excess quantity of synthetic resin which exceeds the absorption volume of the non-woven fabric passes out through the fabric,
- the fibre strands for the axial reinforcing layer which are brought up to the mandrel by way of the first guide ring are embedded from the relevant ring wiper into the synthetic resin formed by the excess quantity in order to form the axial reinforcing layer,
- in the event that the excess quantity is also sufficient for the second reinforcing layer, the fibre strands drawn off from the first spool carrier for the tangential reinforcing layer are wound tangentially onto the axial reinforcing layer and embedded into the excess quantity.

6. Method of continuous production of fibre-reinforced plastic pipes with a plastic inner pipe, with the method steps:
- the plastic inner pipe is fed concentrically in horizontal alignment by means of a feeding device to the succeeding processing stations and continuously moved on in the direction of drawing the pipe,
- a liquid synthetic resin is poured onto the plastic inner pipe for an adhesive and buffer layer and formed by means of an annular wiper (ring wiper) into an adhesive resin layer of uniform thickness,
- a strip-shaped non-woven fabric (tangled fibre fabric) is embedded without gaps into this adhesive resin layer in order to form the adhesive and buffer layer,
- a liquid synthetic resin from which a synthetic resin layer is formed is poured onto the adhesive and buffer layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form an axial reinforcing layer,
- a liquid synthetic resin from which a synthetic resin layer is formed is poured onto the axial reinforcing layer,
- from a ring-shaped spool carrier, which rotates about the mandrel in a specific direction and has at least one spool with a plurality of fibres in the form of a fibre strand, the fibre strand is drawn from the spool or spools, is wound tangentially onto the first reinforcing layer with the smallest possible pitch angle and thereby embedded into the synthetic resin layer in order to form a tangential reinforcing layer, and at the same time the fibres of the axial reinforcing layer lying below it are compressed towards the mandrel,
- a liquid synthetic resin from which a synthetic resin layer is formed is poured onto the tangential reinforcing layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form a further axial reinforcing layer,
- a liquid synthetic resin from which a synthetic resin layer is formed is poured onto the axial reinforcing layer,
- from a further ring-shaped spool carrier, which rotates about the mandrel in the opposite direction to the preceding spool carrier and has at least one spool with a plurality of fibres in the form of a fibre strand, the fibre strand is drawn from the spool or spools, is wound tangentially onto the first reinforcing layer with the smallest possible pitch angle and thereby embedded into the synthetic resin layer in order to form a further tangential reinforcing layer, and at the same time the fibres of the axial reinforcing layer lying below it are compressed towards the mandrel,
- when required a further axial reinforcing layer and a further tangential reinforcing layer are each formed on this tangential reinforcing layer, the direction of rotation of the spool carrier used for this being the reverse of that of the preceding spool carrier,
- after the last tangential reinforcing layer any excess of resin which is present is wiped off by means of a ring wiper,
- a liquid synthetic resin is poured onto the outermost reinforcing layer and formed by means of a ring wiper into an outer skin of uniform thickness for the plastic pipe,
- by means of a guiding and forming device a strip-shaped separating film is continuously applied in the longitudinal direction of the mandrel and formed into a separating hose enveloping the outer skin,
- the plastic pipe thus formed is passed through a hardening device in which by the effect of heat and/or light the hardening of the synthetic resin layers is initiated and is at least partially completed,
- within the hardening device the plastic pipe is drawn off from the mandrel which ends there,
- after the hardening device the finished plastic pipe is divided by means of a cutting device into individual lengths with a specific length dimension.

7. Method of continuous production of fibre-reinforced plastic pipes with a plastic inner pipe which is provided with an adhesive layer formed by a strip of woven fabric or mat which was embedded in the outer face of the plastic inner pipe by heat treatment of the latter, with the method steps:
- the plastic inner pipe is fed concentrically in horizontal alignment by means of a feeding device to the succeeding processing stations and continuously moved on in the direction of drawing the pipe,
- a liquid synthetic resin from which a synthetic resin layer is formed is poured onto the adhesive layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form an axial reinforcing layer,
- a liquid synthetic resin from which a synthetic resin layer is formed is poured onto the axial reinforcing layer,
- from a ring-shaped spool carrier, which rotates about the mandrel in a specific direction and has at least one spool with a plurality of fibres in the form of a fibre strand, the fibre strand is drawn from the spool or spools, is wound tangentially onto the first reinforcing layer with the smallest possible pitch angle and thereby embedded into the synthetic resin layer in order to form a tangential reinforcing layer, and at the same time the fibres of the axial reinforcing layer lying below it are compressed towards the mandrel,
- a liquid synthetic resin from which a synthetic resin layer is formed is poured onto the tangential reinforcing layer,
- a large number of fibres in the form of a plurality of fibre strands are drawn from a rack, fed to a guiding device which is arranged radially spaced about the mandrel, and from the guiding device are fed in the form of a closed fibre sheath in the shape of a truncated cone to a ring wiper surrounding the mandrel where they are embedded into the synthetic resin layer in order to form a further axial reinforcing layer,
- a liquid synthetic resin from which a synthetic resin layer is formed is poured onto the axial reinforcing layer,
- from a further ring-shaped spool carrier, which rotates about the mandrel in the opposite direction to the preceding spool carrier and has at least one spool with a plurality of fibres in the form of a fibre strand, the fibre strand is drawn from the spool or spools, is wound tangentially onto the first reinforcing layer with the smallest possible pitch angle and thereby embedded into the synthetic resin layer in order to form a further tangential reinforcing layer, and at the same time the fibres of the axial reinforcing layer lying below it are compressed towards the mandrel,
- when required a further axial reinforcing layer and a further tangential reinforcing layer are each formed on this tangential reinforcing layer, the direction of rotation of the spool carrier used for this being the reverse of that of the preceding spool carrier,
- after the last tangential reinforcing layer any excess of resin which is present is wiped off by means of a ring wiper,
- a liquid synthetic resin is poured onto the outermost reinforcing layer and formed by means of a ring wiper into an outer skin of uniform thickness for the plastic pipe,
- by means of a guiding and forming device a strip-shaped separating film is continuously applied in the longitudinal direction of the mandrel and formed into a separating hose enveloping the outer skin,
- the plastic pipe thus formed is passed through a hardening device in which by the effect of heat and/or light the hardening of the synthetic resin layers is initiated and is at least partially completed,
- within the hardening device the plastic pipe is drawn off from the mandrel which ends there,
- after the hardening device the finished plastic pipe is divided by means of a cutting device into individual lengths with a specific length dimension.

8. Method according to one of Claims 1 to 7, characterised by the method steps:
- for an axial reinforcing layer which is not immediately preceded by a supporting layer, the synthetic resin is poured with an excess which exceeds the minimum quantity for the axial reinforcing layer and is sufficient also to form the synthetic resin layer for the immediately following tangential reinforcing layer,
- the fibre strands which are brought up to the mandrel by way of the second guide ring for the axial reinforcing layer are embedded from the relevant ring wiper into the previously formed synthetic resin layer so that the excess quantity which exceeds the absorption volume of the fibre strands for the axial reinforcing layer passes out through the fibres,
- the fibre strands drawn off from the second spool carrier for the tangential reinforcing layer are wound tangentially onto the axial reinforcing layer and embedded into the excess quantity.

9. Apparatus for carrying out the method according to Claim 1, with the features:
- a rack (12) is provided which has a plurality of spools (13) with fibre strands (14) of glass fibres, carbon fibres or textile fibres,
- on the rack (12) there are guiding devices (15) for drawing off the fibre strands (14) from the spools (13) and for passing on the fibre strands (14),
- a base (16) is provided for the common support of a plurality of work stations and devices,
- in the starting region of the base (16) there is arranged a holding device (21) for a mandrel (22) by means of which the mandrel (22) is connected in its starting region to the base (16) in a stationary manner,
- the mandrel (22) is constructed as an elongated cylindrical hollow body,
- an unwinding device (23) is provided for a strip-shaped separating film (25) which is wound on spools,
- a guiding device (26) for the separating film (25) is provided by means of which the separating film (25) drawn off by the unwinding device (23) can be fed in the axial direction to the mandrel (22),
- in the starting region of the mandrel (22) a forming device (27) is arranged, by means of which the separating film brought up by the guiding device can be shaped about the mandrel (22) to form a separating hose,
- a connecting device (28) is provided by means of which the edges of the separating film (25) formed into the separating hose can be connected to one another so as to be impermeable to synthetic resin,
- a feeding device (33) for a synthetic resin is provided by means of which a synthetic resin can be poured from a storage tank (34) onto the separating hose in the rear region of the mandrel (22),
- an annular wiper (41) (ring wiper) is provided which surrounds the mandrel (22) externally and has a specific internal diameter,
- a collecting trough (44) for the quantity of synthetic resin wiped off is arranged below the ring wiper (41),
- following the ring wiper (41) there is a heating device (43) which surrounds the mandrel (22) externally and by means of which the synthetic resin layer on the separating hose can be formed into a gel to form an inner skin of the plastic pipe,
- a feeding device (55) for a synthetic resin is provided by means of which a synthetic resin can be poured from a storage tank onto the inner skin in the rear region of the mandrel (22),
- an unwinding device (48) is provided for a non-woven fabric (51) in the form of a tangled fibre fabric wound on spools (49),
- a guiding and forming device (52) is provided by means of which the non-woven fabric (51) can be led from the unwinding device (48) to the mandrel (22) and can be formed into a hose (53) which is open in the longitudinal direction and surrounds the mandrel externally,
- a ring wiper (61) is provided by means of which the poured synthetic resin can be formed into a synthetic resin layer of uniform thickness and by means of which the hose formed by the non-woven fabric (51) can be simultaneously embedded into the synthetic resin layer to form a supporting layer,
- a feeding device (55) for a synthetic resin is provided by means of which a synthetic resin can be poured from a storage tank in the rear region of the mandrel (22),
- a guiding and forming device (56) is provided which surrounds the mandrel externally and by means of which the fibres of a plurality of fibre strands (14) brought up from the rack (12) can be fed to the mandrel (22) in the form of a closed fibre sheath (59) in the shape of a truncated cone,
- a ring wiper (61) is provided by means of which the poured synthetic resin can be formed into a synthetic resin layer of uniform thickness and by means of which the fibre sheath (59) can be simultaneously embedded into the synthetic resin layer to form an axial reinforcing layer,
- a feeding device (55) for a synthetic resin is provided by means of which a synthetic resin can be poured from a storage tank in the rear region of the mandrel (22),
- a ring-shaped spool carrier (63) is provided which surrounds the mandrel (22) centrally and is rotatably mounted on a bearing support (64),
- at least one spool (68) of a fibre strand (69) is rotatably mounted on the spool carrier (63),
- the spool carrier (63) is coupled to an adjustablespeed drive (65; 66; 67),
- on the spool carrier (63) there are arranged guiding devices (71) by means of which the fibre strand (69) can be led from each spool (68) to the mandrel (22) and during rotation of the spool carrier (63) can be embedded into the synthetic resin layer to form a tangential reinforcing layer,
- a feeding device (76) for a synthetic resin is provided by means of which a synthetic resin can be poured from a storage tank in the rear region of the mandrel (22),
- a guiding and forming device (77) is provided which surrounds the mandrel externally and by means of which the fibres of a plurality of fibre strands (14) brought up from the rack (12) can be fed to the mandrel (22) in the form of a closed fibre sheath (79) in the shape of a truncated cone,
- a ring wiper (78) is provided by means of which the poured synthetic resin can be formed into a synthetic resin layer of uniform thickness and by means of which the fibre sheath (79) can be simultaneously embedded into the synthetic resin layer to form a further axial reinforcing layer,
- a feeding device (76) for a synthetic resin is provided by means of which a synthetic resin can be poured from a storage tank in the rear region of the mandrel (22),
- a ring-shaped spool carrier (81) is provided which surrounds the mandrel (22) centrally and is rotatably mounted on a bearing support,
- at least one spool (82) of a fibre strand (83) is rotatably mounted on the spool carrier (81),
- the spool carrier (81) is coupled to an adjustablespeed drive, the direction of rotation of which is the reverse of that of the preceding spool carrier,
- on the spool carrier (81) there are arranged guiding devices by means of which the fibre strand (82) can be led from each spool (82) to the mandrel (22) and during rotation of the spool carrier (81) can be embedded into the synthetic resin layer to form a further tangential reinforcing layer,
- if required there are also provided in each case
- - a feeding device (84) for a liquid synthetic resin,
- - a guiding and forming device (85) for bringing up fibre strands (14) and for passing on the fibres thereof in the form of a fibre sheath (86) shaped as a truncated cone to the mandrel (22),
- - a ring wiper (87) for forming the synthetic resin layer and for embedding the fibre sheath (86) into the synthetic resin layer for the purpose of forming a further axial reinforcing layer,
- - a feeding device (84) for liquid synthetic resin and
- - a spool carrier (88) for forming a further tangential reinforcing layer, the direction of rotation of this spool carrier (88) being opposed to the direction of rotation of the preceding spool carrier (63),
- following the last spool carrier (88) for forming a tangential reinforcing layer a ring wiper (92) is arranged by means of which any excess of synthetic resin which is present can be wiped off,
- a feeding device (94) for a synthetic resin is provided by means of which in the rear region of the mandrel (22) a synthetic resin can be poured from a storage tank for an outer skin of the plastic pipe,
- a ring wiper (95) is provided by means of which the poured synthetic resin can be formed into a synthetic resin layer of uniform thickness to form an outer skin of the plastic pipe,
- an unwinding device (96) is provided for a strip-shaped separating film (98) wound on spools,
- a guiding and forming device (99) is provided by means of which the separating film (98) can be led from the unwinding device (96) to the mandrel (22) and can be formed into a hose which is open in the longitudinal direction, the edges of the separating film (88) butting against one another in the region of the underside of the mandrel (22),
- a hardening device (103) which surrounds the plastic pipe externally is arranged following the guiding and forming device (9) for the separating hose,
- the hardening device (103) has heat sources and/or radiation sources (104) which are arranged around the plastic pipe (100),
- the hardening device (103) has for the plastic pipe (100) a guide tube (109) the internal diameter of which is at least approximately equal to the sum of the nominal diameter of the plastic pipe (100) and twice the wall thickness of the separating hose, the wall of which is permeable at least by sections and/or by areas to the heat or radiation given off by the heat sources and/or radiation sources and which extends beyond the hardening device (103) in the direction of drawing, its longitudinal extent being such that it surrounds the plastic pipe (100) as far as at least that point on its path of motion from which the outer skin of the plastic pipe (100) has a sufficient stability of shape for supporting the plastic pipe (100) on bearing rollers (111),
- the mandrel (22) ends at least approximately at the rear end of the hardening device (103),
- the hardening device (103) is followed by a curing section (112) which has heat insulating devices (113) which surround the plastic pipe (100) externally,
- following the curing section (112) is a drawing device (118) by means of which the plastic pipe (100) can be moved in the direction of drawing by frictional contact,
- between the rear end of the guide tube (109) of the hardening device (103) and the drawing device (118) are arranged bearing rollers (111) which are adjustable to the height of the underside of the plastic pipe (100) and which bear the plastic pipe (100) as far as the drawing device (118),
- following the drawing device (118) is a cutting device (125) which can be moved by means of a guide (127) in the direction of movement of the plastic pipe (100) and by means of which the plastic pipe (100) can be divided into individual lengths (126) with a specific length dimension,
- the cutting device (125) has a clamping device (128) by means of which it can be clamped on the plastic pipe (100) during a cutting operation,
- the cutting device (125) has a reset device by means of which the cutting device can be moved back into its starting position after termination of a cutting operation.

10. Apparatus according to Claim 9, characterised by the features:
- the connecting device (28) for the separating film (25) has an unwinding device (29) for an adhesive strip (31),
- a presser roller (32) by means of which the adhesive strip brought up from the unwinding device (29) can be pressed onto the edges of the separating film (25) is spring mounted in the peripheral region of the edges of the separating film (25).

11. Apparatus according to Claim 10, characterised by the feature:
- the connecting device is constructed as an ultrasonic welding device, by means of which the edges of the separating film (25) which overlap one another can be directly connected to one another.

12. Apparatus according to one or more of Claims 9 to 11, characterised by the features:
- the ring wiper (41) for the synthetic resin layer to form an inner skin is arranged on a guiding device (42) by means of which the ring wiper (41) is guided so that it is immovable in the longitudinal direction of the mandrel (22) and movable in the normal plane with respect to the longitudinal axis of the mandrel (22),
- the guiding device (42) has at least one guide roller, but preferably two guide rollers (156), which are supported over the separating hose on the mandrel (22) and of which the running plane passes at least approximately through the longitudinal axis of the mandrel (22), and these rollers enclose an angle of between 60° and 120°, preferably an angle of 90° with one another,
- the guide rollers (156) are arranged in a longitudinal portion of the mandrel (22) which is located in the direction of drawing of the plastic pipe (100) before the mouth (39) of the feeding device (33) for the synthetic resin for the inner skin.

13. Apparatus for carrying out the method according to Claim 6, with the features:
- a rack (12) is provided which has a plurality of spools (13) with fibre strands (14) of glass fibres, carbon fibres or textile fibres,
- on the rack (12) there are guiding devices (15) for drawing off the fibre strands (14) from the spools (13) and for passing on the fibre strands (14),
- a base (16) is provided for the common support of a plurality of work stations and devices,
- in the starting region of the base (16) there is arranged a feeding device (141) for a plastic inner pipe (140) by means of which the plastic inner pipe (140) can be fed to the succeeding work stations in alignment with the passage openings of these work stations,
- a feeding device (142) for an adhesive resin is provided by means of which an adhesive resin can be poured from a storage tank onto the plastic inner pipe (140) in the rear region thereof,
- an annular wiper (143) (ring wiper) is provided which surrounds the plastic inner pipe (140) externally and can be formed into an annular adhesive resin layer of uniform thickness by means of the poured adhesive resin,
- a collecting trough for the quantity of adhesive resin wiped off is arranged below the ring wiper (143),
- an unwinding device (144) is provided for a non-woven fabric (146) in the form of a tangled fibre fabric wound on spools (145),
- a guiding and forming device (147) is provided by means of which the non-woven fabric (146) can be led from the unwinding device (144) to the plastic inner pipe (140) and can be formed into a hose which is open in the longitudinal direction and surrounds the plastic inner pipe (140) externally,
- a ring wiper (148) is provided by means of which the hose formed by the non-woven fabric (146) can be embedded into the adhesive resin layer to form an adhesive and buffer layer and at the same time the excess quantity of adhesive resin can be wiped off,
- a feeding device (55) for a synthetic resin is provided by means of which a synthetic resin can be poured from a storage tank in the rear region of the plastic inner pipe (140),
- a guiding and forming device (56) is provided which surrounds the plastic inner pipe (140) externally and by means of which the fibres of a plurality of fibre strands (14) brought up from the rack (12) can be fed to the plastic inner pipe (140) in the form of a closed fibre sheath (59) in the shape of a truncated cone,
- a ring wiper (61) is provided by means of which the poured synthetic resin can be formed into a synthetic resin layer of uniform thickness and by means of which the fibre sheath (59) can be simultaneously embedded into the synthetic resin layer to form an axial reinforcing layer,
- a feeding device (55) for a synthetic resin is provided by means of which a synthetic resin can be poured from a storage tank in the rear region of the plastic inner pipe (140),
- a ring-shaped spool carrier (63) is provided which surrounds the plastic inner pipe (140) centrally and is rotatably mounted on a bearing support (64),
- at least one spool (68) of a fibre strand (69) is rotatably mounted on the spool carrier (63),
- the spool carrier (63) is coupled to an adjustablespeed drive (65; 66; 67),
- on the spool carrier (63) there are arranged guiding devices (71) by means of which the fibre strand (69) can be led from each spool (68) to the plastic inner pipe (140) and during rotation of the spool carrier (63) can be embedded into the synthetic resin layer to form a tangential reinforcing layer,
- a feeding device (76) for a synthetic resin is provided by means of which a synthetic resin can be poured from a storage tank in the rear region of the plastic inner pipe (140),
- a guiding and forming device (77) is provided which surrounds the plastic inner pipe (140) externally and by means of which the fibres of a plurality of fibre strands (14) brought up from the rack (12) can be fed to the plastic inner pipe (140) in the form of a closed fibre sheath (79) in the shape of a truncated cone,
- a ring wiper (78) is provided by means of which the poured synthetic resin can be formed into a synthetic resin layer of uniform thickness and by means of which the fibre sheath (79) can be simultaneously embedded into the synthetic resin layer to form a further axial reinforcing layer,
- a feeding device (76) for a synthetic resin is provided by means of which a synthetic resin can be poured from a storage tank in the rear region of the plastic inner pipe (140),
- a ring-shaped spool carrier (81) is provided which surrounds the plastic inner pipe (140) centrally and is rotatably mounted on a bearing support,
- at least one spool (82) of a fibre strand (83) is rotatably mounted on the spool carrier (81),
- the spool carrier (81) is coupled to an adjustablespeed drive, the direction of rotation of which is the reverse of that of the preceding spool carrier,
- on the spool carrier (81) there are arranged guiding devices by means of which the fibre strand (82) can be led from each spool (82) to the plastic inner pipe (140) and during rotation of the spool carrier (81) can be embedded into the synthetic resin layer to form a further tangential reinforcing layer,
- if required there are also provided in each case
- - a feeding device (84) for a liquid synthetic resin,
- - a guiding and forming device (85) for bringing up fibre strands (14) and for passing on the fibres thereof in the form of a fibre sheath (86) shaped as a truncated cone to the plastic inner pipe (140),
- - a ring wiper (87) for forming the synthetic resin layer and for embedding the fibre sheath (86) into the synthetic resin layer for the purpose of forming a further axial reinforcing layer,
- - a feeding device (84) for liquid synthetic resin and
- - a spool carrier (88) for forming a further tangential reinforcing layer, the direction of rotation of this spool carrier (88) being opposed to the direction of rotation of the preceding spool carrier (63),
- following the last spool carrier (88) for forming a tangential reinforcing layer a ring wiper (92) is arranged by means of which any excess of synthetic resin which is present can be wiped off,
- a feeding device (94) for a synthetic resin is provided by means of which in the rear region of the plastic inner pipe (140) a synthetic resin can be poured from a storage tank for an outer skin of the plastic pipe,
- a ring wiper (95) is provided by means of which the poured synthetic resin can be formed into a synthetic resin layer of uniform thickness to form an outer skin of the plastic pipe,
- an unwinding device (96) is provided for a strip-shaped separating film (98) wound on spools,
- a guiding and forming device (99) is provided by means of which the separating film (98) can be led from the unwinding device (96) to the plastic inner pipe (140) and can be formed into a hose which is open in the longitudinal direction, the edges of the separating film (88) butting against one another in the region of the underside of the plastic inner pipe (140),
- a hardening device (103) which surrounds the plastic pipe externally is arranged following the guiding and forming device (9) for the separating hose,
- the hardening device (103) has heat sources and/or radiation sources (104) which are arranged around the plastic pipe (100),
- the hardening device (103) has for the plastic pipe (100) a guide tube (109) the internal diameter of which is at least approximately equal to the sum of the nominal diameter of the plastic pipe (100) and twice the wall thickness of the separating hose, the wall of which is permeable at least by sections and/or by areas to the heat or radiation given off by the heat sources and/or radiation sources and which extends beyond the hardening device (103) in the direction of drawing, its longitudinal extent being such that it surrounds the plastic pipe (100) as far as at least that point on its path of motion from which the outer skin of the plastic pipe (100) has a sufficient stability of shape for supporting the plastic pipe (100) on bearing rollers (111),
- the plastic inner pipe (140) ends at least approximately at the rear end of the hardening device (103),
- the hardening device (103) is followed by a curing section (112) which has heat insulating devices (113) which surround the plastic pipe (100) externally,
- following the curing section (112) is a drawing device (118) by means of which the plastic pipe (100) can be moved in the direction of drawing by frictional contact,
- between the rear end of the guide tube (109) of the hardening device (103) and drawing device (118) are arranged bearing rollers (111) which are adjustable to the height of the underside of the plastic pipe (100) and which bear the plastic pipe (100) as far as the drawing device (118),
- following the drawing device (118) is a cutting device (125) which can be moved by means of a guide (127) in the direction of movement of the plastic pipe (100) and by means of which the plastic pipe (100) can be divided into individual lengths (126) with a specific length dimension,
- the cutting device (125) has a clamping device (128) by means of which it can be clamped on the plastic pipe (100) during a cutting operation,
- the cutting device (125) has a reset device by means of which the cutting device can be moved back into its starting position after termination of a cutting operation.

14. Apparatus according to one of Claims 9 to 13, characterised by the feature:
- at least in a part of the feeding devices for a liquid synthetic resin, preferably in all feeding devices (33; 55; 76; 84; 94) the collecting trough (44) arranged below the associated ring wiper (41) is connected by way of a return pipe (36) to the storage tank (34) of the feeding device (33).

15. Apparatus according to one or more of Claims 9 to 14, characterised by the features:
- the unwinding device (48) for the non-woven fabric (51) for forming a supporting layer is equipped with two spool carriers, each spool carrier having arranged on it a spool (49) of a strip-shaped fabric (51), the width of which is at least approximately equal to half the outer periphery of the inner skin,
- the two spools (49) or at least in each case a guiding device for the fabric unwound therefrom are arranged on both sides of the mandrel (22) at such a height that the centre of the non-woven fabric strips (51) is located at least approximately in the same horizontal plane as the longitudinal axis of the mandrel (22).

16. Apparatus according to Claim 15, characterised by the feature:
- the guiding and shaping device (52) for the non-woven fabric (51) has on either side of the mandrel (22) a guide vane (161), of which the inner face (162) facing the mandrel (22) is of concave construction at least in its end region and by means of which the fabric strip can be deformed at least approximately to the shape of a generated surface of half a circular cylinder.

17. Apparatus according to Claim 16, characterised by the feature:
- the mouth (62') of the feeding device (55) for the synthetic resin for the supporting layer is arranged in the region of the guide vanes (161) of the guiding and forming device (52) for the non-woven fabric (51) in the longitudinal direction of the mandrel (22) at a location at which the edges of the two non-woven fabric strips (51) which are moving closer together still have a sufficiently great distance between them.

18. Apparatus according to one or more of Claims 9 to 17, characterised by the features:
- the guiding and forming device (56) for the fibre strands (14) and the fibres for an axial reinforcing layer has a guide rim (164) and preferably a guide ring (165) which both surround the mandrel (22) externally,
- the guide rim (164) has a number of through holes (166) corresponding to the number of fibre strands (14) to be fed, and these through holes are distributed along one single circular ring or along a plurality of concentric circular rings, one of the fibre strands (14) being drawn through each of the holes,
- the guide ring (165) has an inner surface which is closed in a ring, the internal diameter thereof being smaller than the smallest circular ring of the arrangement of through holes (166) in the guide ring (164) and only slightly greater than the external diameter of the build-up of layers for the plastic pipe (100) moved through it.

19. Apparatus according to Claim 18, characterised by the feature:
- the mouth of the feeding device (55; 62) for the synthetic resin for the axial reinforcing layer is arranged in the longitudinal portion just before the guide rim (164) or, preferably, in the longitudinal portion between the guide rim (164) and the guide ring (165), the feed pipe (62) preferably running within the innermost truncated cone surface which is set by the fibre strands (14) running from the guide rim (164) to the guide ring (165).

20. Apparatus according to one or more of Claims 9 to 19, characterised by the features:
- the feeding device (55) for the synthetic resin for the supporting layer is dimensioned for a mass flow of the synthetic resin which is greater than the mass flow necessary for the supporting layer alone and is sufficient at least for the next axial reinforcing layer as well, preferably also for the first tangential reinforcing layer,
- accordingly a special feeding device for the synthetic resin for the next axial reinforcing layer and possibly also a special feeding device for the synthetic resin for the next tangential reinforcing layer is omitted.

21. Apparatus according to one or more of Claims 9 to 20, characterised by the features:
- the feeding device (76) for the synthetic resin for the axial reinforcing layer which is not preceded by a supporting layer, and preferably also the feeding device for each further axial reinforcing layer, is dimensioned for a mass flow of the synthetic resin which is greater than the mass flow necessary for the axial reinforcing layer alone and is preferably sufficient at least for the succeeding tangential reinforcing layer,
- accordingly a special feeding device for the synthetic resin for the tangential reinforcing layer is omitted.

22. Apparatus according to one or more of Claims 9 to 21, characterised by the features:
- a plurality of spools (68) are regularly distributed on the spool carrier (63),
- for each of the spools (68) a braking device is preferably provided, the braking force of which can be adjusted automatically by means of a scanning device for scanning the external diameter of each of the spools (62).

23. Apparatus according to one or more of Claims 9 to 22, characterised by the feature:
- each spool carrier (63) is coupled in each case by an infinitely variable gear (65) to a common drive shaft (66) (Figure 4) which is mounted on the base (16) and extends from a drive motor (67) to all driven devices (63; 81; 88).

24. Apparatus according to one of Claims 9 to 23, characterised by the features:
- for each of the fibre strands (14) for an axial reinforcing layer there is provided an adjustable tensioning device by means of which the tension in the fibre strand can be adjusted to a specific value,
- the tensioning devices are preferably arranged in the vicinity of the guide rim (164) of the guiding and forming device (56).

25. Apparatus according to one or more of Claims 9 to 24, characterised by the feature:
- the guide tube (109) in the hardening device (103) has a narrow longitudinal gap on its underside.

26. Apparatus according to one or more of Claims 9 to 25, characterised by the feature:
- the guide tube (109) in the hardening device (103) is constructed as a glass tube which is permeable to infrared light.

27. Apparatus according to one or more of Claims 9 to 26, characterised by the features:
- the guide tube (109) in the hardening device (103) is constructed as a metal tube which is preferably produced from a low-corrosion and abrasion resistant steel,
- the guide tube (109) has a large number of through holes which are arranged offset with respect to one another in the longitudinal direction and in the peripheral direction of the guide tube (109).

28. Apparatus according to one or more of Claims 9 to 27, characterised by the features:
- the heat insulating device of the curing section (112) is formed by a plurality of covering hoods (113) which are constructed at least approximately as hollow cylinders and of which the peripheral wall is constructed so as to be heat-insulating,
- the covering hoods (113) are movably guided by means of a longitudinal guide (115) along the plastic pipe (100),
- the longitudinal guide (115) is preferably longer than the sum of the length of all the covering hoods (113) by at least the length of one individual covering hood (113).

29. Apparatus according to one or more of Claims 9 to 28, characterised by the features:
- the drawing device (118) is formed by two or more chain conveyors (119) which are preferably arranged in pairs diametrally with respect to the plastic pipe (100),
- the chain conveyors (119) have roller chains (121) which are guided at least on the tight side by guide rails (122),
- the roller chains (121) are equipped with angular side plates on which are mounted entrainment elements (123) which are produced from an elastomer.

30. Apparatus according to one or more of Claims 9 to 29, characterised by the features:
- the clamping device (128) has two pairs of clamping jaws (129), of which one pair of clamping jaws is arranged before and the other pair of clamping jaws behind the cutting tool (132) of the cutting device (125),
- the clamping jaws (129) can preferably be actuated by means of pneumatic piston drives (131).

31. Apparatus according to one or more of Claims 9 to 30, characterised by the feature:
- the reset device of the cutting device (125) has a pneumatic piston drive.

32. Apparatus according to one or more of Claims 9 to 31, characterised by the features:
- the mandrel (22) has a plurality of cylindrical longitudinal portions, the external diameter of which is reduced in stages from the holding device (21),
- each transition point from one diameter stage to the next lies in the direction of motion of the plastic pipe (100) immediately beside the winding point of the fibre strand (69; 83; 91) for a tangential reinforcing layer,
- a further transition point lies in the region of the hardening device (103).

33. Apparatus according to Claim 32, characterised by the features:
- the mandrel (22) is composed of a plurality of independent individual pieces which are preferably connected releasably to one another in each case by a screw connection,
- the connection points of the individual pieces preferably lie at the transition points from one diameter stage to the next.

34. Apparatus according to Claim 32 or 33, characterised by the features:
- in the starting region of the mandrel (22) there is provided a connection for a compressed gas, particularly compressed air, by means of which a gas which is under a certain excess pressure can be introduced into the interior of the mandrel (22),
- radial through holes which extend from the interior of the mandrel to the exterior thereof are provided at a plurality of points on the longitudinal extent of the mandrel,
- the through holes are preferably placed on at least a part of the transition points or in the vicinity of the transition points,
- the through holes are preferably formed by radial cutouts in the front face of the individual parts of the mandrel (22),
- a bulkhead wall which closes off the interior of the mandrel (22) towards the exterior is provided in each case at the connection point and at least in the region after the last through hole.

35. Apparatus according to Claim 34, characterised by the features:
- the interior of the longitudinal portion of the mandrel (22) which is located in the region of the hardening device (103) is closed off against the interior of the preceding longitudinal portion by a bulkhead wall,
- this longitudinal portion has arranged in the interior of the mandrel a connection for a compressed gas pipe, the excess pressure of which is set higher than the excess pressure in the preceding longitudinal portions of the mandrel.

36. Apparatus according to one or more of Claims 9 to 35, characterised by the features:
- the edges () of the side walls (173) of the guiding and forming device (99) from an inlet shoulder (174) for the separating film (98) located above the plastic pipe (100) they run constantly towards one another around the plastic pipe (100) in the longitudinal direction of the latter and come closer to one another in the perpendicular meridian plane until there is just a very small residual gap (175),
- the side faces (176; 177) of the edges (172) of the side walls (173) diverge at a certain angle at least in the region of the residual gap (175) from the inner edge (178) to the outer edge (179),
- in the vicinity of the guiding and forming device (99) a ring wiper (101) is arranged which is not completely closed but has a residual gap (182) at the bottom in the perpendicular meridian plane,
- the side faces of the residual gap (182) of the ring wiper (101) diverge at a certain angle from the inner edge (178) to the outer edge (179).

37. Apparatus according to Claim 36, characterised by the features:
- in the direction of motion of the plastic pipe (100) there is arranged behind the ring wiper (10) a scraper (185), the scraping edge (186) of which is coordinated with the plastic pipe (100),
- the collecting trough (102) below the ring wiper (101) extends on the one hand as far as the region of the scraper (185) and on the other hand as far as the region of the guiding and forming device (99).

## Revendications

1. Procédé de production en continu de tuyaux en matière plastique, renforcés par des fibres, avec les étapes de procédé suivantes :
- sur un mandrin aligné horizontalement, qui est maintenu dans sa zone initiale par un dispositif de fixation en étant monté en porte-à-faux, on applique une feuille de séparation en forme de ruban, en continu sur le mandrin, dans la direction longitudinale, et on la forme ainsi pour réaliser un tube séparateur entourant le mandrin, les bords de la feuille séparatrice étant reliés de manière imperméable,
- on poursuit de déplacer en continu le tuyau séparateur, dans la direction de traction du tube en matière plastique à travers tous les postes de travail successifs,
- on coule une résine synthétique liquide sur le tuyau séparateur et on forme une couche de résine synthétique d'épaisseur régulière, annulaire, à l'aide d'une raclette de forme annulaire (raclette annulaire),
- on provoque la gélification de cette couche de résine synthétique pour former, par action de la chaleur, une peau intérieure dans le tube de matière plastique,
- on coule une résine synthétique liquide sur la peau intérieure et on intègre dans la couche de résine synthétique qui se forme, un entissé en forme de ruban, sans laisser d'intervalle, et on forme une couche de protection,
- sur la couche de protection, on coule une résine synthétique liquide pour former une couche de résine synthétique,
- à partir d'une grille à étagères on dévide un nombre important de fibres sous la forme de plusieurs cordons de fibres, on les conduit avec un écartement radial, à l'aide d'un dispositif directeur, autour du mandrin, on passe de celui-ci dans une raclette annulaire entourant le mandrin, sous la forme d'une enveloppe de fibres en tronc de cône fermé, et de là, pour former une couche de renforcement axiale, on noie dans la couche de résine synthétique,
- sur la couche axiale de renforcement axiale, on coule une résine synthétique liquide qui forme une couche de résine synthétique,
- à partir d'un porte-bobine en forme de couronne qui tourne dans un certain sens de rotation autour du mandrin, porte-bobine qui comporte au moins une bobine avec un certain nombre de fibres sous la forme d'un cordon de fibres, on dévide le cordon de fibres de la bobine ou des bobines, on enroule sur la première couche tangentielle de renforcement avec le plus petit angle de pas possible et, pour former une couche tangentielle de renforcement, on noie dans la couche de résine synthétique, tout en compressant en direction du mandrin, les fibres de la couche de renforcement axiale qui se trouvent en dessous,
- sur la couche de renforcement tangentielle, on coule une résine synthétique liquide pour en former une couche de résine synthétique,
- à partir d'une grille à étagères on dévide un nombre important de fibres sous la forme de plusieurs cordons de fibres, on conduit avec une distance radiale par un dispositif de guidage prévu autour du mandrin et de là on conduit, sous la forme d'une enveloppe de fibres en forme de tronc de cône fermée, dans une raclette annulaire entourant le mandrin et de là, pour former une autre couche de renforcement axiale, on noie dans la couche de résine synthétique,
- sur la couche axiale de renforcement, on coule une résine synthétique liquide pour en former une couche de résine synthétique,
- à partir d'un autre porte-bobine, en forme de couronne, tournant dans le sens de rotation opposé à celui du précédent porte-bobine autour du mandrin, et qui comporte au moins une bobine avec un certain nombre de fibres sous la forme de cordons de fibres, on dévide le cordon de fibres à partir de la bobine ou des bobines pour enrouler sur la couche tangentielle de renforcement axiale, et avec l'angle le plus petit possible et ainsi, pour former une couche tangentielle de renforcement, on noie dans la couche de résine synthétique, tout en comprimant en direction du mandrin les fibres de la couche de renforcement axiale qui se trouvent en dessous,
- le cas échéant, on forme sur cette couche tangentielle de renforcement, chaque fois une autre couche de renforcement axiale et on forme une autre couche tangentielle de renforcement, en inversant le sens de rotation du porte-bobine utilisé par rapport au sens de rotation du porte-bobine précédent,
- après la dernière couche tangentielle de renforcement à l'aide d'une raclette annulaire, on racle un éventuel excédent de résine ,
- sur la couche de renforcement extérieure, on coule une résine synthétique liquide et, avec une raclette annulaire, on forme une peau extérieure d'épaisseur régulière pour le tube de matière synthétique,
- sur l'enveloppe extérieure, à l'aide d'un dispositif de guidage et de mise en forme, on applique en continu une feuille séparatrice en forme de ruban, dans la direction longitudinale du mandrin, et on lui donne la forme d'un tuyau séparateur entourant la peau extérieure,
- on fait passer le tube de matière plastique ainsi formé à travers un dispositif de durcissement dans lequel, par action de la chaleur et/ou par action de la lumière, on induit le durcissement des couches de résine synthétique et on termine au moins en partie,
- à l'intérieur du dispositif de durcissement, on enlève le tube de matière synthétique du mandrin qui se termine à cet endroit,
- après le dispositif de durcissement, on ouvre sur une certaine longueur le tube de matière synthétique terminé à l'aide d'un dispositif séparateur pour avoir des segments de longueur séparés.

2. Procédé selon la revendication 1, caractérisé par l'étape de procédé suivante :
- la nappe non tissée pour la couche de soutien est dévidée soit sous la forme d'une bande à partir d'une bobine ou, de préférence, sous la forme de deux ou plusieurs bandes en provenance d'un nombre correspondant de bobines que l'on monte sur un support de bobine en forme de couronne entourant la broche, qui sont enroulées sans jeu et sans chevauchement sur la peau intérieure, et que l'on intègre dans la seconde couche de résine synthétique formée ainsi dans la peau intérieure.

3. Procédé selon la revendication 1, caractérisé par l'étape de procédé suivante :
- on dévide la nappe non tissée pour la couche de soutien sous la forme d'un ruban dont la largeur est au moins approximativement égale à la périphérie de la couche de protection, à partir d'une bobine prévue au-dessus du mandrin, et on rapproche à l'aide d'un dispositif de guidage et de mise en forme, de tout côté, contre le mandrin pour y intégrer la seconde couche de résine synthétique.

4. Procédé selon la revendication 1, caractérisé par l'étape de procédé suivante :
- la nappe non tissée pour la couche de soutien se présente sous la forme de deux bandes dont la largeur totale est au moins approximativement égale à la périphérie de la couche protectrice, et on dévide chaque fois d'une bobine, ces deux bobines étant placées diamétralement de part et d'autre du mandrin, et on conduit de tout côté autour du mandrin à l'aide d'un dispositif de guidage et de mise en forme, et on intègre ainsi dans la couche de résine synthétique.

5. Procédé selon la revendication 1 en liaison avec l'une des revendications 2 à 4, caractérisé par les étapes de procédé suivantes :
- la résine synthétique coulée sur la peau intérieure pour la couche de soutien est coulée avec un excédent qui dépasse la quantité minimale pour la couche protectrice, et qui est suffisante pour que la couche de résine synthétique soit au moins suffisante pour la première couche de renforcement axiale, et de préférence également pour la première couche de renforcement tangentielle,
- la nappe non tissée pour la couche de renforcement est noyée dans une couche de résine synthétique pour que la quantité excédentaire de résine synthétique absorbée par le volume de réception de la nappe non tissée, s'échappe à travers le non-tissé,
- les cordons de fibres qui conduisent sur le mandrin par la première couronne de guidage pour la couche de renforcement axiale, sont noyés par la raclette annulaire correspondante de la couche de résine synthétique servant à former la couche axiale de renforcement, dans la couche de résine synthétique formée par la quantité en excédent,
- dans le cas où la quantité en excédent suffit également pour la seconde couche de renforcement, on enroule tangentiellement les cordons de fibres dévidés du premier support de bobine pour la couche tangentielle de renforcement, sur la couche axiale de renforcement en enroulant de manière tangentielle et on intègre dans la quantité excédentaire.

6. Procédé de production en continu de tuyaux en matière plastique, renforcés par des fibres avec un tube intérieur en matière plastique, selon les étapes de procédé suivantes :
- on conduit le tube intérieur de matière synthétique à l'aide d'un dispositif d'alimentation, dans la direction horizontale, concentriquement vers les postes de travail suivants et on continue le déplacement, en permanence dans le dispositif de traction du tube,
- sur le tube intérieur en matière plastique, on coule une résine collante, liquide, formant une couche d'accrochage et une couche tampon, et à l'aide d'une raclette de forme annulaire (raclette annulaire), on met en forme d'une couche annulaire, d'épaisseur régulière, de résine collante,
- dans cette couche de résine collante, on noie une nappe en forme de ruban (nappe de fibres non tissées en désordre) pour former la couche d'accrochage et la couche tampon, sans laisser d'intervalle,
- sur la couche de fixation formant tampon, on coule une résine synthétique liquide dans laquelle se forme une couche de résine synthétique,
- à partir d'une grille à étagères, on dévide un nombre relativement important de fibres sous la forme de plusieurs cordons de fibres, on les conduit avec une distance radiale, autour du mandrin, à l'aide d'un dispositif de guidage et de là, on les conduit sous la forme d'une enveloppe de fibres en tronc de cône, fermée, vers une raclette annulaire entourant le mandrin, et de là on intègre dans la couche de résine synthétique pour former une couche axiale de renforcement,
- sur la couche axiale de renforcement, on coule une résine synthétique liquide pour former une couche de résine synthétique,
- à partir d'un porte-bobine en couronne tournant selon un certain sens de rotation autour du mandrin, et qui comporte au moins une bobine avec un certain nombre de fibres sous la forme d'un cordon de fibres, on dévide le cordon de fibres de la bobine ou des bobines, pour l'enrouler sur la première couche de renforcement, tangentiellement et suivant le plus petit angle de pas possible, et pour former une couche tangentielle de renforcement, on intègre dans la couche de résine synthétique, en comprimant en même temps, vers le mandrin, les fibres de la couche axiale de renforcement se trouvant en dessous,
- sur la couche tangentielle de renforcement, on coule une résine synthétique liquide pour former une couche de résine synthétique,
- à partir d'une grille à étagères, on dévide un nombre relativement important de fibres sous la forme de plusieurs cordons de fibres, on les conduit sur un dispositif de guidage passant à une distance radiale autour du mandrin, et partant de là, on les conduit sous la forme d'une enveloppe de fibres en tronc de cône fermée, vers une raclette annulaire entourant le mandrin, et de celle-ci, pour former une autre couche axiale de renforcement, on intègre dans la couche de résine synthétique,
- sur la couche axiale de renforcement, on coule une résine synthétique liquide pour former une couche de résine synthétique,
- à partir d'un autre porte-bobine en forme de couronne, tournant autour du mandrin suivant un sens de rotation opposé à celui du porte-bobine précédent, et qui comporte au moins une bobine avec un certain nombre de fibres sous la forme d'un cordon de fibres, on dévide le cordon de fibres à partir de la bobine ou des bobines, pour l'enrouler sur la couche axiale de renforcement, tangentiellement, avec le plus petit angle de pas possible, et pour former une autre couche tangentielle de renforcement, on intègre dans la couche de résine synthétique, et en même on comprime vers le mandrin les fibres de la couche axiale de renforcement qui se trouve en dessous,
- le cas échéant, on forme sur cette couche tangentielle de renforcement, une autre couche axiale de renforcement respective et une autre couche tangentielle de renforcement, le sens de rotation du porte-bobine utilisé alors étant chaque fois l'inverse de celui du porte-bobine précédent,
- après la dernière couche tangentielle de renforcement, à l'aide d'une raclette annulaire, on racle l'excédent de résine,
- sur la couche extérieure de renforcement, on coule une résine synthétique liquide et, à l'aide d'une raclette annulaire, on la met en forme de pellicule extérieure d'épaisseur régulière pour le tube de matière synthétique,
- à l'aide d'un dispositif de guidage et de formage, on applique sur la peau extérieure une feuille séparatrice en forme de ruban, par application continue dans la direction longitudinale du mandrin, et on la met sous la forme d'un tuyau séparateur entourant la peau extérieure,
- le tube de matière synthétique ainsi formé est conduit à travers un dispositif de durcissement dans lequel, par action de la chaleur et/ou par action de la lumière, on induit le durcissement des couches de résine synthétique et on termine au moins partiellement,
- à l'intérieur du dispositif de durcissement, on enlève le tube de matière synthétique du mandrin qui s'y termine,
- après le dispositif de durcissement, on subdivise le tube terminé en matière synthétique avec un dispositif de coupe, en segments de longueur déterminée.

7. Procédé de production en continu de tuyaux en matière synthétique, renforcés par des fibres avec un tube intérieur en matière synthétique et qui est muni d'une couche de fixation, formée par une bande de tissu ou de nappe, et que l'on a intégré par traitement thermique de la face extérieure du tube intérieur de matière synthétique dans ce tube, procédé comprenant les étapes suivantes :
- on fournit le tube intérieur de matière synthétique à l'aide d'un dispositif d'alimentation, suivant un alignement horizontal, concentriquement au poste de travail suivant, et on continue toujours le mouvement dans la direction de traction,
- on coule une résine synthétique liquide sur la couche d'accrochage, pour former une couche de résine synthétique,
- à partir d'une grille à étagères, on dévide un nombre relativement important de fibres sous la forme de plusieurs cordons de fibres, on les conduit à un dispositif de guidage prévu à une certaine distance radiale autour du mandrin, et partant de là on conduit, sous la forme d'une enveloppe de fibres en tronc de cône fermée, dans une raclette annulaire entourant le mandrin, et à partir de celle-ci, pour former une couche axiale de renforcement, on intègre dans la couche de résine synthétique,
- on coule une résine synthétique liquide sur la couche axiale de renforcement pour en former une couche de résine synthétique,
- à partir d'un porte-bobine en forme de couronne qui tourne suivant un sens de rotation déterminé autour du mandrin, porte-bobine qui comporte au moins une bobine avec un certain nombre de fibres sous la forme d'un cordon de fibres, on dévide le cordon de fibres de la bobine ou des bobines, on l'enroule sur la première couche de renforcement, tangentiellement et avec l'angle de pas le plus petit possible et, pour former une couche tangentielle de renforcement, on intègre dans la couche de résine synthétique, en comprimant en même temps en direction du mandrin, les fibres de la couche axiale de renforcement se trouvant en dessous,
- on coule une résine synthétique liquide sur la couche tangentielle de renforcement pour en former une couche de résine synthétique,
- à partir d'une grille à étagères, on dévide un nombre relativement important de fibres sous la forme de plusieurs cordons de fibres, on les conduit à un dispositif de guidage prévu à une certaine distance radiale autour du mandrin et de là on conduit à une raclette annulaire entourant le mandrin, sous la forme d'une enveloppe de fibres en tronc de cône fermée, et de là, pour former une autre couche axiale de renforcement, on intègre dans la couche de résine synthétique,
- on coule une résine synthétique liquide sur la couche axiale de renforcement pour en former une couche de résine synthétique,
- à partir d'un autre porte-bobine, en forme de couronne, tournant autour du mandrin dans la direction de rotation opposée à celle du porte-bobine précédent, et qui comporte au moins une bobine avec un certain nombre de fibres sous la forme d'un cordon de fibres, on dévide le cordon de fibres à partir de la bobine ou des bobines en enroulant sur la couche axiale de renforcement, tangentiellement avec l'angle de pas le plus petit possible et, pour former une autre couche tangentielle de renforcement, on intègre dans la couche de résine synthétique, et en même temps on comprime en direction du mandrin, les fibres de la couche axiale de renforcement qui se trouvent en dessous,
- le cas échéant, on forme sur cette couche tangentielle de renforcement une autre couche axiale de renforcement et une autre couche tangentielle de renforcement, en inversant le sens de rotation du porte-bobine utilisé, par rapport au sens de rotation du porte-bobine précédent,
- après la dernière couche tangentielle de renforcement, à l'aide d'une raclette annulaire, on racle l'éventuel excédent de la résine,
- sur la couche extérieure de renforcement, on coule une résine synthétique liquide et on forme une peau extérieure épaisse régulière pour le tube de matière synthétique, à l'aide de la raclette annulaire,
- sur la peau extérieure, à l'aide d'un dispositif de guidage et de formage, on applique en continu une feuille séparatrice en forme de ruban, dans la direction longitudinale du mandrin, et on forme ainsi un tuyau séparateur entourant la peau extérieure,
- on fait passer le tuyau de matière plastique ainsi constitué à travers un dispositif de durcissement dans lequel, par action de la chaleur et/ou par action de la lumière, on induit le durcissement de la couche de résine synthétique et on termine au moins partiellement,
- à l'intérieur du dispositif de durcissement, on enlève le tube de matière synthétique du mandrin qui s'y termine,
- après le dispositif de durcissement, on coupe le tuyau terminé en matière synthétique avec un dispositif de coupe, en segments séparés ayant une certaine longueur.

8. Procédé selon l'une des revendications 1 à 7, caractérisé par les étapes de procédé suivantes :
- pour une couche axiale de renforcement qui n'est pas directement précédée par une couche de soutien, on coule la résine synthétique avec un excédent dépassant la quantité minimale nécessaire à la couche axiale de renforcement, quantité qui est suffisante pour former également la couche de résine synthétique pour la couche tangentielle de renforcement qui suit directement,
- les cordons de fibres fournis par la seconde couronne de guidage sur le mandrin, pour la couche axiale de renforcement, sont intégrés par la raclette annulaire concernée dans la couche de résine synthétique précédemment formée, pour que la quantité excédentaire qui dépasse la capacité de réception des cordons de fibres de la couche axiale de renforcement, arrive à l'extérieur,
- les cordons de fibres dévidés du second support de bobine pour constituer la couche tangentielle de renforcement, sont enroulés tangentiellement sur la couche axiale de renforcement et sont alors intégrés dans la quantité excédentaire.

9. Installation pour la mise en oeuvre du procédé selon la revendication 1, caractérisée en ce que :
- il est prévu une grille à étagères (12) comportant un certain nombre de bobines (13) avec des cordons de fibres (14) en fibres de verre, en fibres de carbone ou en fibres textiles,
- sur la grille à étagères (12), il y a des dispositifs de guidage (13) pour dévider les cordons de fibres (14) des bobines (13), et pour guider les cordons de fibres (14),
- il est prévu un châssis de base (16) pour recevoir en commun plusieurs postes et dispositifs de travail,
- dans la zone initiale du châssis de base (16), il y a un dispositif de fixation (21) pour un mandrin (22) à l'aide duquel le mandrin (22) est relié solidairement au bâti (16) dans sa zone d'extrémité,
- le mandrin (22) est un corps creux cylindrique allongé,
- il est prévu un dispositif de dévidage (23) pour une feuille séparatrice (25) en forme de bande, enroulée sur des bobines,
- il est prévu un dispositif de guidage (26) pour la feuille séparatrice (25), dispositif à l'aide duquel la feuille séparatrice (25) dévidée du dispositif de dévidage (23) est conduite dans la direction axiale sur le mandrin (22),
- dans la zone initiale du mandrin (22), on a un dispositif de formage (27) à l'aide duquel la feuille séparatrice (25) conduite vers le dispositif de guidage (26) est mise en forme autour du mandrin (22) pour former un tuyau séparateur,
- un dispositif de liaison (28) à l'aide duquel on relie de manière imperméable à la résine synthétique, les bords de la feuille séparatrice (25) qu'on met ainsi en forme de tuyaux séparateurs,
- un dispositif d'alimentation (33) en résine synthétique à l'aide duquel la résine synthétique contenue dans un réservoir d'alimentation (34) peut être coulée dans la zone du dos du mandrin (22) sur le tuyau séparateur,
- une raclette de forme annulaire (41) (raclette annulaire) qui entoure extérieurement le mandrin (22) et présente une certaine largeur libre,
- au-dessous de la raclette annulaire (41), on a une goulotte de réception (44) pour recueillir la résine synthétique raclée,
- en liaison avec la raclette annulaire (41), on a un dispositif de réchauffement (43) qui entoure extérieurement le mandrin (22) et à l'aide duquel la couche de résine synthétique existant sur le tuyau séparateur peut être gélifiée pour former une peau intérieure du tube de matière synthétique,
- un dispositif d'alimentation (55) de résine synthétique à l'aide duquel la résine synthétique d'un réservoir d'alimentation peut être coulée dans la zone du dos du mandrin (22) sur la peau intérieure,
- un dispositif de dévidage (48) pour une nappe (51) en forme de nappe de fibres aléatoires, enroulée sur des bobines (49),
- un dispositif de guidage et de mise en forme (52) à l'aide duquel la nappe (51) est conduite du dispositif de dévidage (48) vers le mandrin (22), et d'où part un tuyau (53) ouvert dans la direction longitudinale, qui entoure extérieurement le mandrin,
- une raclette annulaire (61) à l'aide de laquelle on forme la résine synthétique coulée pour arriver à une couche de résine synthétique d'épaisseur régulière et à l'aide de laquelle on intègre le tuyau formé en même temps par la nappe (51), pour former une couche protectrice dans la couche de résine synthétique,
- un dispositif d'alimentation (55) fournissant une résine synthétique et à l'aide de laquelle on peut couler la résine synthétique contenue dans un réservoir d'alimentation, dans la zone arrière du mandrin (22),
- un dispositif de guidage et de formage (56) qui entoure extérieurement le mandrin et à l'aide duquel les fibres provenant d'un certain nombre de cordons de fibres (14) venant d'une grille à étagères (12), est conduit sous la forme d'une enveloppe de fibres (59) en tronc de cône fermée, jusqu'au mandrin (22),
- une raclette annulaire (61) à l'aide de laquelle on peut former la résine synthétique coulée pour arriver à une couche de résine synthétique d'épaisseur régulière, et à l'aide de laquelle l'enveloppe de fibres (59) est en même temps intégrée dans la couche de résine synthétique pour former une couche axiale de renforcement,
- un dispositif d'alimentation (55) en résine synthétique à l'aide duquel la résine synthétique contenue dans un réservoir d'alimentation, peut être coulée dans la zone du dos du mandrin (22),
- un porte-bobine (63) en forme de couronne, qui entoure le mandrin (22) de manière centrée et est monté en rotation sur une partie de bâti (64),
- le porte-bobine (63) comporte en rotation au moins une bobine (68) chargée d'un cordon de fibres (69),
- le porte-bobine (63) est couplé à un moyen d'entraînement (65 ; 66 ; 67) à vitesse de rotation réglable,
- le porte-bobine (63) comporte des dispositifs de guidage (71) à l'aide desquels le cordon de fibres (69) peut être conduit d'une bobine existante (68) vers la broche (22) et qui, lorsque le porte-bobine (63) tourne, est intégré dans la couche de résine synthétique pour former une couche tangentielle de renforcement,
- un dispositif d'alimentation (76) en résine synthétique à l'aide duquel on peut couler de la résine synthétique contenue dans un réservoir d'alimentation, sur la zone de dos du mandrin (22),
- un dispositif de guidage et de formage (77) qui entoure extérieurement le mandrin et à l'aide duquel les fibres d'un certain nombre de cordons de fibres (14) venant d'une grille à étagères (12), sont conduits vers le mandrin (22) sous la forme d'une enveloppe de fibres (79) en tronc de cône fermée,
- une raclette annulaire (78) à l'aide de laquelle la résine synthétique coulée est mise en forme d'une couche de résine synthétique d'épaisseur régulière et à l'aide de laquelle l'enveloppe de fibres (79) est intégrée dans la couche de résine synthétique pour former une autre couche axiale de renforcement,
- un dispositif d'alimentation (76) en résine synthétique à l'aide duquel on peut couler la résine synthétique contenue dans un réservoir d'alimentation, dans la zone arrière du mandrin (22),
- un porte-bobine (81) en forme de couronne qui entoure de manière centrale le mandrin (22) et est monté en rotation sur un bâti formant palier,
- le porte-bobine (81) comporte au moins une bobine (82) montée en rotation avec un cordon de fibres (83),
- le porte-bobine (81) est couplé à un moyen d'entraînement à vitesse de rotation réglable dont le sens de rotation est opposé à celui du porte-bobine précédent,
- le porte-bobine (81) comporte des dispositifs de guidage à l'aide desquels le cordon de fibres est conduit de chaque bobine (82) existante, vers le mandrin (22) et qui, pendant la rotation du porte-bobine (81) pour former une autre couche tangentielle de renforcement, s'intègre dans la couche de résine synthétique,
- le cas échéant, on a d'autres moyens à savoir :
-- un dispositif d'alimentation (84) en résine synthétique liquide,
-- un dispositif de guidage et de formage (85) pour conduire et transférer les fibres sous la forme d'une enveloppe de fibres en tronc de cône (86) vers le mandrin (22),
-- une raclette annulaire (87) pour former la couche de résine synthétique et pour intégrer l'enveloppe de fibres (86) dans la couche de résine synthétique, afin de former une autre couche axiale de renforcement,
-- un dispositif d'alimentation (84) en résine synthétique liquide,
-- un porte-bobine (88) pour former une autre couche tangentielle de renforcement, le sens de rotation de ce porte-bobine (88) étant opposé au sens de rotation du porte-bobine précédent (63),
- en liaison avec le dernier porte-bobine (88), pour former une couche tangentielle de renforcement, il est prévu une raclette annulaire (92) à l'aide de laquelle on peut racler un éventuel excédent de résine synthétique,
- un dispositif d'alimentation (94) de résine synthétique à l'aide duquel une résine synthétique contenue dans un réservoir d'alimentation peut être coulée dans la zone arrière du mandrin (22) pour former une peau extérieure du tuyau de matière synthétique,
- une raclette annulaire (95) à l'aide de laquelle on peut former la résine synthétique coulée, pour former une peau extérieure du tube en matière synthétique et arriver à une couche de résine synthétique d'épaisseur régulière,
- un dispositif de dévidage (96) pour une feuille séparatrice (98) en forme de ruban, enroulée sur des bobines,
- un dispositif de guidage et de formage (99) à l'aide duquel la feuille séparatrice (98) peut être conduite du dispositif de dévidage (96) vers le mandrin (22) et de là permet de former un tuyau ouvert dans la direction longitudinale, entouré extérieurement par la peau extérieure, les bords de la feuille séparatrice (88) au niveau de la face inférieure du mandrin (22) venant s'abouter sur champ,
- en liaison avec le dispositif de guidage et de formage (99) du tuyau séparateur, il est prévu un dispositif de durcissement (103) qui entoure extérieurement le tuyau en matière synthétique, le dispositif de durcissement (103) comporte des sources de chaleur et/ou des sources de rayonnement (104) prévues autour du tuyau en matière synthétique (110), le dispositif de durcissement (103) comporte, pour le tube en matière synthétique (100), un tube de guidage (109) dont l'ouverture libre correspond au moins sensiblement à la somme du diamètre de consigne du tube en matière plastique (100) et du double de l'épaisseur de la paroi du tuyau séparateur, et dont la paroi est, au moins par segment et/ou par surface, transparente au rayonnement ou la chaleur émise par les sources de chaleur et/ou les sources de rayonnement, en s'étendant dans la direction de traction, au-delà du dispositif de durcissement (103), son extension longitudinale étant mesurée, pour entourer le tube en matière synthétique (100), au moins jusqu'à l'endroit de sa trajectoire à partir duquel la peau extérieure du tuyau en matière synthétique (100) présente une tenue suffisante pour soutenir le tuyau en matière plastique (100) sur les galets de support (111),
- le mandrin (22) se termine au moins approximativement à l'extrémité arrière du dispositif de durcissement (103),
- le dispositif de durcissement (103) est suivi par un chemin de durcissement (112) qui comporte des dispositifs d'isolation thermique entourant extérieurement le tube en matière synthétique (100),
- en liaison avec le chemin de durcissement (102), on a un dispositif de traction (118) à l'aide duquel le tuyau en matière synthétique (100) peut être déplacé dans la direction de traction par une liaison par frottement,
- entre l'extrémité arrière du tube de guidage (109) du dispositif de durcissement (103) et le dispositif de traction (118), on a des galets de support (111) qui se règlent en hauteur sur le côté inférieur du tube en matière synthétique (100) et qui portent le tube en matière synthétique (100) jusqu'au dispositif de traction (118),
- en liaison avec le dispositif de traction (118) on a un dispositif séparateur (125) qui est mobile à l'aide d'un guide (127) dans la direction de déplacement du tuyau en matière plastique (100), et à l'aide duquel le tuyau en matière plastique (100) peut être subdivisé en différents segments de longueurs (126) ayant une longueur déterminée,
- le dispositif séparateur (125) ou dispositif de coupe comporte un dispositif de serrage (128) à l'aide duquel le dispositif est serré sur le tube en matière plastique (100) au moins pendant une opération de séparation,
- le dispositif séparateur (125) comporte un dispositif de rappel à l'aide duquel le dispositif séparateur est remis dans sa position de repos après une opération de coupe.

10. Installation selon la revendication 19, caractérisée par les caractéristiques suivantes :
- le dispositif de liaison (28) de la feuille séparatrice (25) comporte un dispositif de dévidage (29) pour un ruban adhésif (31),
- dans la zone périphérique des bords de la feuille séparatrice (25), on a monté élastiquement un galet applicateur (32) à l'aide duquel le ruban adhésif (31) provenant du dispositif de dévidage (29) peut se presser contre les bords de la feuille séparatrice (25).

11. Installation selon la revendication 10, caractérisée par la caractéristique suivante :
- le dispositif de liaison est un dispositif de soudage aux ultrasons à l'aide duquel les bords qui se chevauchent de la feuille séparatrice (25) sont reliés directement les uns aux autres.

12. Installation selon l'une ou plusieurs des revendications 9 à 11, caractérisée par les caractéristiques suivantes :
- la raclette annulaire (41) pour la couche de résine synthétique, servant à former la peau intérieure, est montée sur un dispositif de guidage (42) à l'aide duquel la raclette annulaire (41) reste bloquée dans la direction longitudinale du mandrin (22) et est guidée de manière mobile dans le plan perpendiculaire à l'axe longitudinal du mandrin (22),
- le dispositif de guidage (42) comporte au moins un galet de guidage, mais de préférence deux galets de guidage (156) qui s'appuient, par l'intermédiaire du tuyau séparateur, sur le mandrin (22), et dont les plans de déplacement passent au moins approximativement par l'axe longitudinal du mandrin (22), ces plans formant entre eux un angle compris entre 60 et 120°, de préférence un angle d'environ 90°,
- les galets de guidage (156) sont prévus dans un segment de longueur du mandrin (22) qui est situé dans la direction de traction du tuyau en matière plastique (100) en avant de l'embouchure (39) du dispositif d'alimentation (33) en résine synthétique pour la peau intérieure.

13. Installation pour la mise en oeuvre du procédé selon la revendication 6, caractérisée en ce que :
- une grille à étagères (12) comportant un certain nombre de bobines (12) avec des cordons de fibres (14) en fibres de verre, en fibres de carbone, ou en fibres textiles,
- la grille à étagères (12) comporte des dispositifs de guidage (15) pour dévider des cordons de fibres (14) à partir de bobines, et transférer ces cordons de fibres (14),
- un châssis de base (16) pour la réception commune de plusieurs postes de travail et dispositifs,
- dans la zone initiale du châssis de base (16), il a un dispositif d'alimentation (141) pour un tuyau intérieur en matière synthétique (140), à l'aide duquel le tuyau intérieur en matière synthétique (140) peut être conduit dans l'alignement de l'ouverture de passage du poste de travail suivant,
- un dispositif d'alimentation (142) pour une résine collante à l'aide de laquelle on peut couler, à partir d'un réservoir d'alimentation, une résine collante dans la zone arrière du tuyau intérieur de matière plastique,
- une raclette de forme annulaire (143) (raclette annulaire) qui entoure extérieurement le tube intérieur en matière plastique (140) et à l'aide de laquelle la résine de collage coulée peut être mise en forme d'une couche de résine collante, d'épaisseur régulière, annulaire,
- en dessous de la raclette annulaire (143), il y a une goulotte pour recueillir la résine collante raclée,
- un dispositif de dévidage (144) pour une nappe de fibres (146) enroulée sur des bobines (154), cette nappe se présentant sous la forme d'une nappe de fibres en désordre,
- un dispositif de guidage et de formage (147) à l'aide duquel la nappe (146) est conduite du dispositif de dévidage (144) vers le tube intérieur en matière plastique (140), et par ailleurs un tuyau ouvert dans la direction longitudinale, qui est entouré extérieurement par le tuyau en matière synthétique (140),
- une raclette annulaire (148) à l'aide de laquelle le tube formé par la nappe de fibres (146) peut être intégré dans la couche de résine collant pour former une couche de fixation et d'amortissement, et qui racle en même temps la quantité excédentaire de résine collante,
- un dispositif d'alimentation (55) pour une résine synthétique à l'aide de laquelle on peut couler, sur la zone arrière du tuyau intérieur en matière synthétique (140), la résine synthétique d'un réservoir d'alimentation,
- un dispositif de guidage et de formage (56) qui entoure extérieurement le tube intérieur en matière synthétique (140) et qui conduit à l'intérieur du tube intérieur en matière plastique (140) les fibres d'un certain nombre de cordons de fibres (14) provenant d'une grille à étagères (12) et se présentant sous la forme d'une enveloppe de fibres (59) en tronc de cône fermée,
- une raclette annulaire (61) à l'aide de laquelle la résine synthétique coulée est mise en forme de couche de résine synthétique d'épaisseur régulière, et à l'aide de laquelle l'enveloppe de fibres (59) est en même temps intégrée dans la couche de résine synthétique pour former une couche axiale de renforcement,
- un dispositif d'alimentation (55) pour la résine synthétique, à l'aide duquel la résine synthétique contenue dans un réservoir d'alimentation peut se couler sur la zone arrière du tube intérieur en matière plastique (140),
- un porte-bobine (63) en forme de couronne qui entoure au milieu le tube intérieur en matière synthétique (140) et qui est monté en rotation sur un bâti de palier (64),
- le porte-bobine (63) comporte au moins une bobine (68) montée en rotation et portant un cordon de fibres (69),
- le porte-bobine (63) est couplé à un moyen d'entraînement (65, 66 ; 67) à vitesse de rotation réglable,
- le porte-bobine (63) comporte des dispositifs de guidage (71) à l'aide desquels le cordon de fibres (69) peut être conduit de chaque bobine existante (68) vers le tube intérieur en matière synthétique (140) et qui, lors de la rotation du porte-bobine (63), est intégré dans la couche de résine synthétique pour former une couche tangentielle de renforcement,
- un dispositif d'alimentation (76) en résine synthétique à duquel la résine synthétique d'un réservoir d'alimentation peut se couler dans la zone arrière du tube intérieur en matière synthétique (140),
- un dispositif de guidage et de formage (77) qui entoure extérieurement le tube intérieur en matière synthétique (140) et à l'aide duquel les fibres d'un certain nombre de cordons de fibres (14) provenant d'une grille à étagères (12), sont conduites sous la forme d'une enveloppe de fibres (79) en tronc de cône fermée vers le tube intérieur en matière synthétique (140),
- une raclette annulaire (78) à l'aide de laquelle la résine en matière synthétique coulée est mise en forme de couche d'épaisseur régulière de résine synthétique, et qui intègre en même temps l'enveloppe de fibres (79) dans la couche de résine synthétique pour former une autre couche de renforcement axiale,
- un dispositif d'alimentation (76) pour résine synthétique à l'aide duquel la résine synthétique d'un réservoir d'alimentation peut se couler dans la zone arrière du tube intérieur en matière synthétique (140),
- un porte-bobine (81) en forme de couronne qui entoure au milieu le tube intérieur en matière synthétique (140) et qui est monté en rotation dans un bâti de palier,
- le porte-bobine (81) est muni à rotation d'au moins une bobine (82) portant un cordon de fibres (83),
- le porte-bobine (81) est couplé à un entraînement à vitesse de rotation réglable dont le sens de rotation est l'inverse de celui du porte-bobine précédent,
- le porte-bobine (81) comporte des dispositifs de guidage à l'aide desquels le cordon de fibres (82) est conduit de chaque bobine existante (82) vers le tube intérieur de matière synthétique (140), et qui est intégré dans la couche de résine synthétique pendant la rotation du porte-bobine (81) pour former une autre couche tangentielle de renforcement,
- le cas échéant, il y a également les moyens suivants :
-- un dispositif d'alimentation (84) pour la résine synthétique liquide,
-- un dispositif de guidage et de mise en forme (85) pour recevoir des cordons de fibres (14) et les transférer, sous la forme d'une enveloppe de fibres en tronc de cône (86), vers le tube intérieur en matière synthétique (140),
-- une raclette annulaire (87) pour former la couche de résine synthétique, pour intégrer la matière de fibres (86) dans la couche de résine synthétique, et pour former une autre couche axiale de renforcement,
-- un dispositif d'alimentation (84) en résine synthétique liquide et,
-- un porte-bobine (88) pour former une autre couche tangentielle de renforcement, le sens de rotation de ce porte-bobine (88) étant opposé au sens de rotation du porte-bobine précédent (63),
- en liaison avec le dernier porte-bobine (88), pour former une couche tangentielle de renforcement, il y a une raclette annulaire (92) pour racler l'éventuel excédent de résine synthétique,
- un dispositif d'alimentation (94) pour résine synthétique, à l'aide duquel la résine synthétique contenue dans un réservoir d'alimentation peut être coulée sur la zone arrière du tube intérieur en matière synthétique (140) pour former la peau extérieure du tube en matière synthétique,
- une raclette annulaire (95) à l'aide de laquelle la résine synthétique coulée est mise en forme d'une couche de résine synthétique d'épaisseur régulière pour former une peau extérieure du tube en matière synthétique,
- un dispositif de dévidage (96) pour une feuille séparatrice (98) en forme de bande, enroulée sur les bobines,
- un dispositif de guidage et de mise en forme (99) à l'aide duquel la feuille séparatrice (98) peut être fournie du dispositif de dévidage (96) au tube intérieur en matière synthétique (140) et former un tuyau ouvert dans la direction longitudinale, qui entoure extérieurement la peau extérieure, les bords de la feuille séparatrice (88) butant de champ au niveau de la face inférieure du tube intérieur en matière synthétique (140),
- en liaison avec le dispositif de guidage et de formage (99) pour le tuyau séparateur, il est prévu un dispositif de durcissement (103) qui entoure extérieurement le tube en matière synthétique,
- le dispositif de durcissement (103) comporte des sources de chaleur et/ou des sources de rayonnement (104) autour du tube en matière synthétique (100),
- le dispositif de durcissement (103) comporte, pour le tube en matière synthétique (100), un tube de guidage (109) dont la largeur libre est au moins approximativement égale à la somme du diamètre de consigne du tube en matière synthétique (100) et du double de l'épaisseur de paroi du tuyau séparateur dont la paroi est, au moins par segment et/ou par zone de surface, transparente à la chaleur ou au rayonnement émis par les sources de chaleur et/ou les sources de rayonnement, et qui s'étend dans la direction de traction au-delà du dispositif de durcissement (103), son extension longitudinale étant dimensionnée pour entourer le tuyau en matière synthétique (100) jusqu'au moins à l'endroit de sa trajectoire à partir duquel la peau extérieure du tuyau en matière synthétique (100) présente une tenue de forme suffisante pour soutenir le tuyau en matière synthétique (100) sur les galets de support (111),
- le tuyau intérieur en matière synthétique (140) se termine au moins au voisinage de l'extrémité arrière du dispositif de durcissement (103),
- le dispositif de durcissement (103) est suivi par un chemin de durcissement (112) comportant des dispositifs d'isolation thermique (113) entourant extérieurement le tuyau en matière synthétique (100),
- en liaison avec les chemins de durcissement (112), il est prévu un dispositif de traction (118) à l'aide duquel le tuyau en matière synthétique (100) est entraîné dans le sens de la traction par une liaison par frottement,
- entre l'extrémité arrière du tuyau de guidage (109) du dispositif de durcissement (103) et le dispositif de traction (118), on a des galets de support (111) réglables en hauteur suivant la face inférieure du tuyau en matière synthétique (100) et qui portent le tuyau en matière synthétique (100) jusqu'au dispositif de traction (118),
- en liaison avec le dispositif de traction (118), il y a un dispositif de coupe (125) qui est mobile à l'aide d'un moyen de guidage (127) dans la direction de déplacement du tuyau en matière synthétique (100), et qui permet de diviser le tuyau en matière synthétique (100) en différents segments de longueur (126) ayant chacun une certaine longueur,
- le dispositif de coupe (125) comporte un dispositif de serrage (128) à l'aide duquel il peut se serrer sur le tuyau en matière synthétique (100) pendant une opération de coupe,
- le dispositif de coupe (125) comporte un dispositif de rappel à l'aide duquel ce dispositif de coupe peut être remis dans sa position de sortie à la fin d'une opération de coupe.

14. Installation selon l'une des revendications 9 à 13, caractérisée en ce qu'au moins pour une partie des dispositifs d'alimentation en résine synthétique liquide, de préférence pour tous les dispositifs d'alimentation (33 ; 55 ; 76 ; 84 ; 94), la goulotte de réception (44) placée en dessous de la raclette annulaire (41) correspondante, est reliée par une conduite de retour (36) au réservoir d'alimentation (34) du dispositif d'alimentation (33).

15. Installation selon l'une ou plusieurs des revendications 9 à 14, caractérisée par les caractéristiques suivantes :
- le dispositif de dévidage (48) de la nappe (51) pour former une couche de soutien est équipé de deux porte-bobines ayant chacun une bobine (49) avec une nappe en forme de ruban (51) dont la largeur est au moins approximativement égale à la demi-périphérie extérieure de la peau intérieure,
- les deux bobines (49) ou au moins un dispositif de guidage pour la nappe dévidée des bobines sont prévus de part et d'autre du mandrin (22) à une hauteur telle que le milieu des bandes de nappe (51) se trouve au moins approximativement dans le même plan horizontal que l'axe longitudinal du mandrin (22).

16. Installation selon la revendication 15, caractérisée par la caractéristique suivante :
- le dispositif de guidage et de formage (52) de la nappe (51) comporte des deux côtés du mandrin (22) chaque fois une pale de guidage (161) dont la surface intérieure (162) tournée vers le mandrin (22) est courbée de façon concave au moins dans sa zone d'extrémité, surface à l'aide de laquelle le ruban en nappe est au moins déformable approximativement suivant la surface enveloppe d'un cylindre à section en demi-cercle.

17. Installation selon la revendication 16, caractérisée par la caractéristique suivante :
- l'embouchure (62') du dispositif d'alimentation (55) de résine synthétique pour la couche de soutien, est prévue au niveau des pales de guidage (161) du dispositif de guidage et de formage (52) pour la nappe (51), dans la direction longitudinale du mandrin (22), à un endroit où les bords qui se rapprochent des deux bandes de nappe de fibres (51) ont encore entre elles une distance suffisamment grande.

18. Installation selon l'une ou plusieurs des revendications 9 à 17, caractérisée par les caractéristiques suivantes :
- le dispositif de guidage et de formage (56) des cordons de fibres (14) et les fibres d'une couche axiale de renforcement comportent une couronne de guidage (164) et de préférence un anneau de guidage (165) qui entoure extérieurement le mandrin (22),
- la couronne de guidage (164) comporte un nombre d'orifices de passage (166) correspondant au nombre des cordons de fibres (14) à conduire, qui sont répartis le long d'une seule couronne circulaire ou le long de plusieurs couronnes circulaires disposées les unes par rapport aux autres, et à travers lesquels passe chaque fois un cordon de fibres (14),
- la couronne de guidage (165) comporte une surface intérieure (166) annulaire fermée dont la largeur libre est inférieure au plus petit anneau de cercle du modèle de montage des orifices de passage (166) dans la couronne de guidage (164), et qui n'est que légèrement supérieure au diamètre extérieur de la structure stratifiée qui le traverse pour le tuyau en matière synthétique (100).

19. Installation selon la revendication 18, caractérisée par la caractéristique suivante :
- l'embouchure du dispositif d'alimentation (55 ; 62) fournissant la résine synthétique pour la couche axiale de renforcement, est prévue dans le segment longitudinal, directement en amont de la couronne de guidage (164) ou de préférence dans un segment de longueur compris entre la couronne de guidage (164) et l'anneau de guidage (165), la conduite d'alimentation (62) passant de préférence à l'intérieur de la surface enveloppe la plus à l'intérieur du tronc de cône, sous tendue par les cordons de fibres (114) allant de la couronne de guidage (164) vers l'anneau de guidage (165).

20. Installation selon l'une ou plusieurs des revendications 9 à 19, caractérisée par les caractéristiques suivantes :
- le dispositif d'alimentation (55) en résine synthétique pour la couche de soutien est dimensionné pour un débit quantitatif de résine synthétique qui est supérieur au seul débit quantitatif nécessaire à former la couche de soutien, et qui suffit au moins pour la couche axiale de renforcement suivante, de préférence également pour la première couche tangentielle de renforcement,
- de façon correspondante, on a un dispositif d'alimentation indépendant en résine synthétique pour la couche axiale de renforcement suivante et, le cas échéant également, un dispositif d'alimentation indépendant pour la résine synthétique de la couche tangentielle de renforcement suivante.

21. Installation selon l'une ou plusieurs des revendications 9 à 20, caractérisée par les caractéristiques suivantes :
- le dispositif d'alimentation (76) en résine synthétique destiné à la couche axiale de renforcement qui n'est précédée par aucune couche de soutien et de préférence également le dispositif d'alimentation pour chaque autre couche axiale de renforcement, sont dimensionnés pour un débit volumique de résine synthétique qui est supérieur au seul débit quantitatif nécessaire pour la couche axiale de renforcement et qui suffit au moins encore pour la couche tangentielle de renforcement suivante,
- de façon correspondante, on a un dispositif d'alimentation indépendant pour la résine synthétique servant à la couche tangentielle de renforcement.

22. Installation selon l'une ou plusieurs des revendications 9 à 21, caractérisée par les caractéristiques suivantes :
- le porte-bobine (63) est muni de plusieurs bobines (68) réparties régulièrement,
- de préférence, pour chaque bobine (68), on a un dispositif de freinage dont la force de freinage se règle automatiquement à l'aide d'un dispositif de détection détectant le diamètre extérieur de la bobine (62).

23. Installation selon l'une ou plusieurs des revendications 9 à 22, caractérisée par la caractéristique suivante :
- chaque porte-bobine (63) est couplé par une transmission respective (65) réglable en continu à un arbre d'entraînement (66) commun (figure 4) monté sur le châssis de base (16) et qui s'étend d'un moteur d'entraînement (67) vers tous les dispositifs entraînés (63, 81 ; 88).

24. Installation selon l'une des revendications 9 à 23, caractérisée par les caractéristiques suivantes :
- pour chaque cordon de fibres (14) et pour une couche de renforcement axiale, on a un dispositif à tension réglable à l'aide duquel on règle sur une valeur fixe, la tension dans le cordon de fibres,
- de manière préférentielle, les dispositifs tendeurs sont prévus au voisinage de la couronne de guidage (164) du dispositif de guidage et de formage (56).

25. Installation selon l'une ou plusieurs des revendications 9 à 24, caractérisée par la caractéristique suivante :
- le tube de guidage (109) du dispositif de durcissement (103) comporte sur sa face inférieure une fente longitudinale étroite.

26. Installation selon l'une ou plusieurs des revendications 9 à 25, caractérisée par la caractéristique suivante :
- le tube de guidage (109) du dispositif de durcissement (103) est en forme de tube de verre transparent à la lumière infrarouge.

27. Installation selon ou plusieurs des revendications 9 à 26, caractérisée par les caractéristiques suivantes :
- le tube de guidage (109) du dispositif de durcissement (103) est un tube métallique de préférence en acier faiblement corrosif et résistant à l'usure,
- le tube de guidage (109) comporte un nombre relativement important d'orifices de passage prévus dans la direction longitudinale et décalés respectivement dans la direction périphérique du tube de guidage (109).

28. Installation selon l'une ou plusieurs des revendications 9 à 27, caractérisée par les caractéristiques suivantes :
- le dispositif d'isolation thermique du chemin de durcissement (112) est formé par un certain nombre de capots (113) qui ont au moins approximativement la forme d'un cylindre creux et dont la paroi périphérique est isolante thermiquement,
- les capots (113) sont guidés de manière coulissante à l'aide d'un guide longitudinal (115) le long du tube en matière synthétique (100),
- le guidage longitudinal (115) est plus long d'au moins la longueur d'un seul capot (113) par rapport à la somme des longueurs de tous les capots (113).

29. Installation selon l'une ou plusieurs des revendications 9 à 28, caractérisée par les caractéristiques suivantes :
- le dispositif de traction (118) est formé par deux ou plusieurs convoyeurs à chaînes (119) qui sont prévus de préférence diamétralement par paire par rapport au tuyau en matière synthétique (100),
- les convoyeurs à chaînes (119) comportent des chaînes à galets (121) guidées, au moins pour le brin de retour par des rails de guidage (122),
- les chemins à galets (121) sont équipés de pattes à cornière auxquelles sont fixés des blocs d'entraînement (123) réalisés en élastomère.

30. Installation selon l'une ou plusieurs des revendications 9 à 29, caractérisée par les caractéristiques suivantes :
- le dispositif de serrage (128) porte deux paires de mâchoires de serrage (129) dont l'une des paires est en amont de l'outil de coupe (132) et l'autre paire en aval de l'outil de coupe du dispositif de coupe (125),
- les mâchoires de serrage (129) sont actionnées de préférence par un vérin pneumatique (131).

31. Installation selon l'une ou plusieurs des revendications 9 à 30, caractérisée par la caractéristique suivante :
- le dispositif de rappel du dispositif de coupe (125) comporte un vérin pneumatique.

32. Installation selon l'une ou plusieurs des revendications 9 à 31, caractérisée par les caractéristiques suivantes :
- le mandrin (22) comporte plusieurs segments longitudinaux cylindriques dont le diamètre extérieur diminue par échelons à partir du dispositif de fixation (21),
- chaque zone transitoire entre un échelon de diamètre et l'échelon suivant, se situe dans la direction de déplacement du tuyau en matière synthétique (100), directement à côté du point d'enroulement du cordon de fibres (69 ; 83 ; 91) réalisant une couche tangentielle de renforcement,
- un autre point de transition se situe dans la zone du dispositif de durcissement (103).

33. Installation selon la revendication 32, caractérisée par les caractéristiques suivantes :
- le mandrin (22) est composé de plusieurs morceaux séparés indépendants qui sont reliés de préférence de manière amovible par une liaison vissée,
- les points de liaison des différentes pièces sont de préférence au passage d'un étage de diamètre vers le suivant.

34. Installation selon la revendication 32 ou 33, caractérisée par les caractéristiques suivantes :
- la zone initiale du mandrin (22) comporte un branchement pour du gaz comprimé, notamment de l'air comprimé, à l'aide duquel du gaz soumis à une certaine pression peut être fourni au volume intérieur du mandrin (22),
- le mandrin comporte en plusieurs endroits de sa longueur, des orifices traversants radiaux qui s'étendent du volume intérieur du mandrin jusque sur sa face extérieure,
- les orifices traversants sont situés de préférence sur au moins une partie des points de transition ou au voisinage des points de transition,
- de préférence, les orifices traversants sont formés par des cavités radiales dans la surface frontale des différentes pièces du mandrin (22),
- sur les points de raccordement et au moins dans la zone venant après le dernier orifice traversant, on a chaque fois une cloison étanche qui ferme le volume intérieur du mandrin (22) vers l'extérieur.

35. Installation selon la revendication 34, caractérisée par les caractéristiques suivantes :
- le volume intérieur du segment de longueur du mandrin (22) situé dans la zone du dispositif de durcissement (103) est coupé par rapport au segment longitudinal précédent par une cloison étanche,
- ce segment de longueur comporte une fermeture pour une conduite de gaz sous pression prévue à l'intérieur du mandrin et dont la surpression est supérieure à la surpression des segments de longueur précédents du mandrin.

36. Installation selon l'une ou plusieurs des revendications 9 à 35, caractérisée par les caractéristiques suivantes :
- les bords des parois latérales (173) du dispositif de guidage et de formage (99) partent d'un épaulement d'entrée (174) situé au-dessus du tuyau en matière synthétique (100) pour la feuille séparatrice (98), dans la direction longitudinale du tuyau en matière synthétique (100), en entourant celui-ci en permanence et en se rapprochant dans le plan méridien vertical jusqu'à ne laisser qu'un très faible intervalle résiduel (175),
- les surfaces latérales (176 ; 177) des bords (172) des parois latérales (173) s'écartent suivant un certain angle, au moins au niveau de l'intervalle résiduel (175), de l'arête intérieure (178) vers l'arête extérieure (179),
- au voisinage du dispositif de guidage et de formage (99), il y a une raclette annulaire (101) qui n'est pas complètement fermée mais comporte une fente résiduelle (182) dans le plan méridien vertical,
- les surfaces latérales de l'intervalle résiduel (182) de la raclette annulaire (101) vont de l'arête intérieure (178) vers l'arête extérieure (179) en s'écartant suivant un certain angle.

37. Installation selon la revendication 36, caractérisée par les caractéristiques suivantes :
- dans la direction de déplacement du tuyau en matière synthétique (100), derrière la raclette annulaire (101), on a une raclette (185) dont l'arête de raclage (186) correspond au tuyau en matière plastique (100),
- la goulotte de réception (102) en dessous de la raclette annulaire (101) s'étend d'une part jusqu'au niveau de la raclette (185) et d'autre part jusqu'au niveau du dispositif de guidage et de formage (99).
